# EUROPEAN PATENT SPECIFICATION

(11) **EP 4 334 373 B1**
(45) Date of publication and mention of the grant of the patent: **01.07.2026**
(21) Application number: 22719956.9
(22) Date of filing: 02.05.2022
(51) Int. Cl.: C08G 63/66, C08G 63/685, C08G 65/333, C09D 133/06

(54) **TRIAZINE BASED ULTRAVOLET ABSORPTION POLYMER**
TRIAZINBASIERTES UV-ABSORPTIONSPOLYMER
POLYMÈRE D'ABSORPTION D'ULTRAVIOLETS À BASE DE TRIAZINE

(30) Priority: 03.05.2021 EP 21171903
(43) Date of publication of application: 13.03.2024
(73) Proprietor: BASF SE, 67056 Ludwigshafen am Rhein (DE)
(72) Inventor: WINKLER, Barbara, 4133 Schweizerhalle (Muttenz) (CH); KASTLER, Andre C, 4057 Basel (CH); BOPP, Stephanie, 4133 Schweizerhalle (Muttenz) (CH)
(74) Representative: BASF IP Association
(86) International application number: PCT/EP2022/061652
(87) International publication number: WO 2022/233760

(56) References cited:
- EP-B1- 0 441 746
- WO-A1-2018/199927
- DE-T2- 602004 010 802
- US-A1- 2008 032 078

## Description

### Field of the invention

The presently claimed invention relates to a novel, highly efficient triazine based UV absorbing polymer, its use in coating compositions and coatings comprising the UV absorbing polymer thereof.

### Background of the invention

Triazine-based UV absorbers are an important class of organic compounds which have a wide variety of applications. One of the most important areas of application is the protection and stabilization of organic materials such as plastics, polymers, coating materials, and photographic recording materials against damages by light, heat, oxygen, or environmental forces. Other areas of application include cosmetics, fibres, dyes, etc.

Triazine-based UV absorbers typically include at least one 2-oxyaryl substituent on the 1,3,5-triazine ring. Triazine-based UV absorber compounds having aromatic substituents at the 2-, 4-, and 6-positions of the 1,3,5-triazine ring and having at least one of the aromatic rings substituted at the ortho position with a hydroxyl group or blocked hydroxyl group are generally the preferred compounds.

One of the most important applications of these UV absorbers is in the field of coating materials. The challenge in this field is that the coating is meant to last for a long period of time; therefore, the UV absorber should not migrate over a long period deteriorating the quality of the coating.

Nowadays, the multicoat paint systems used in the automotive OEM finishing sector consist in general of an electrophoretically applied primer, which protects against corrosion and stone chipping, and a subsequent surfacer coat, which also protects against stone chipping and smoothens the surface. The surfacer coat is usually applied to the already baked primer and is cured. An alternative possibility is to cure primer and surfacer coat jointly. Subsequently, to the cured surfacer coat, a single-coat finish or a decorative two- coat finish composed of a color and/or effect basecoat is applied in one or more spray passes as a function of the respective shade, and a protective clearcoat, which is applied wet-on-wet to the basecoat. Subsequently, the single-coat finish or the basecoat(s) and the clearcoat is or are jointly cured.

Increasingly, however, the automakers are concerned to reduce the coat thicknesses of the paint system and the number of operations and wherever appropriate, the number of coats, without any attendant deterioration in the performance profile of the multicoat paint systems, particularly any deterioration in UV stability.

WO 2018/199927 A1 discloses a coating composition which includes a coating resin, a low molecular weight triazine ultraviolet light absorber of formula (I), and a hindered light amine stabilizer.

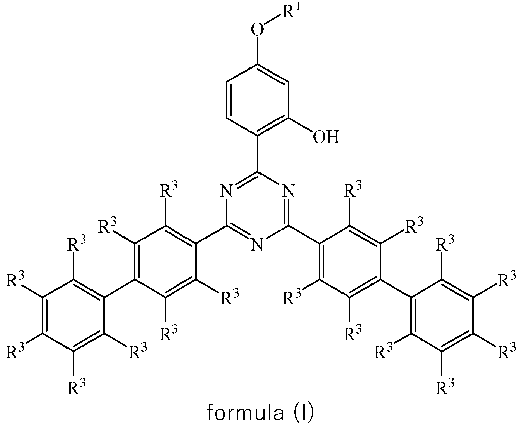

The preferred R¹ is an alkyl chain which comprises at least one functional group which can covalently bind to the other components in the coating composition. The preferred functional group is a hydroxy group.

It has been found that a high molecular weight UV absorber having a greater number of hydroxy groups can eliminate the migration of the UV absorber compound for a long period of time and also, can evenly disperse the UV absorber in the coating composition.

Therefore, the main object of the presently claimed invention is to provide a UV absorber polymer for a coating solution for automotive having improved secondary film properties such as the gloss and/or the color.

### Summary of the invention

Surprisingly, it was found that the UV absorbing polymer provides good/improved protection to the therewith stabilized coating (solutions) against UV induced degradation and additionally provides improved gloss and/or color to the coating.

Accordingly, in first aspect of the presently claimed invention is directed to an ultraviolet radiation absorbing polymer (E) or a salt thereof obtained by:
i.reacting at least one compound of formula (A) 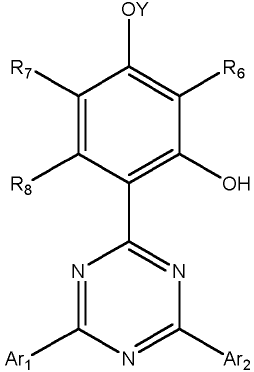
   wherein Ar₁ and Ar₂ are independently of each other a moiety of the formula (B), 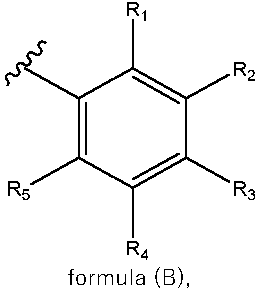
   wherein R₁, R₂, R₃, R₄ and R₅ are independently of each other selected from the group consisting of hydrogen, halogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl, substituted or unsubstituted C₁-C₂₄ heteroaryl, substituted or unsubstituted C₇-C₂₄ arylalkyl, C(=O)-R, substituted or unsubstituted, linear or branched C₁-C₂₄ heteroalkyl, substituted or unsubstituted, linear or branched C₂-C₂₄ heteroalkenyl, substituted or unsubstituted C₅-C₂₄ heterocycloalkyl, substituted or unsubstituted C₅-C₂₄ heterocycloalkenyl, OR, NRR' and C(=O)-NRR';
      or
   R₁ and R₂ together with the carbon atoms to which they are bonded or
   R₂ and R₃ together with the carbon atoms to which they are bonded or
   R₃ and R₄ together with the carbon atoms to which they are bonded or
   R₄ and R₅ together with the carbon atoms to which they are bonded form an unsaturated or aromatic 5- to 20-membered carbocyclic ring that optionally contains **1, 2** or 3 heteroatom(s) selected from O, N or S as ring member(s);
   R₆, R₇ and R₈ are independently of each other selected from the group consisting of hydrogen, halogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, C(=O)-R, substituted or unsubstituted, linear or branched C₁-C₂₄ heteroalkyl, substituted or unsubstituted, linear or branched C₂-C₂₄ heteroalkenyl, substituted or unsubstituted C₅-C₂₄ hetrocycloalkyl, substituted or unsubstituted C₅-C₂₄ heterocycloalkenyl and OR,
      or
   R₇ and R₈ together with the carbon atoms to which they are bonded form an unsaturated or aromatic 5- to 20-membered carbocyclic ring that optionally contains 1, 2 or 3 heteroatom(s) selected from O, N or S as ring member(s);
   R and R' are independently of each other selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl and substituted or unsubstituted C₇-C₂₄ arylalkyl;
   Y is a formula -CR₁₁R₁₂R₁₃; with a proviso wherein at least one of the R₁₁, R₁₂ and R₁₃ contains at least one functional group selected from the group consisting of -C(=O)OR", -C(=O)Cl, -C(=O)NH₂ and - C(=O)NHR";
   wherein R₁₁ and R₁₂ are independently of each other selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl, substituted or unsubstituted C₇-C₂₄ arylalkyl, C₁-C₂₄ alkyloxy, substituted or unsubstituted, linear or branched C₂-C₂₄ alkenyloxy, substituted or unsubstituted C₅-C₂₄ cycloalkyloxy, substituted or unsubstituted C₅-C₂₄ cycloalkenyloxy, substituted or unsubstituted C₆-C₂₄ aryloxy and substituted or unsubstituted C₇-C₂₄ arylalkyloxy;
   R₁₃ is selected from the group consisting of substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl, substituted or unsubstituted C₇-C₂₄ arylalkyl, C₁-C₂₄ alkyloxy, substituted or unsubstituted, linear or branched C₂-C₂₄ alkenyloxy, substituted or unsubstituted C₅-C₂₄ cycloalkyloxy, substituted or unsubstituted C₅-C₂₄ cycloalkenyloxy, substituted or unsubstituted C₆-C₂₄ aryloxy and substituted or unsubstituted C₇-C₂₄ arylalkyloxy;
   wherein R" is selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl and substituted or unsubstituted C₇-C₂₄ arylalkyl; and
ii.at least one compound of formula (C), 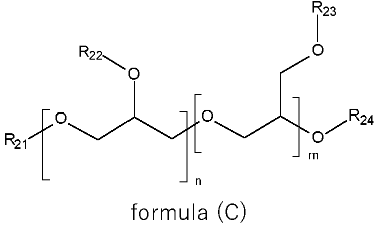
   wherein m and n are independently from each other an integer from 0 to 20;
   wherein m + n ≥ 2;
   wherein R₂₁, R₂₂, R₂₃ and R₂₄ are independently of each other selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl, substituted or unsubstituted C₇-C₂₄ arylalkyl, -[(C=O)-(CH₂)ₜ-NH]ⱼ-R₂₅, -[(C=O)-(CH₂)ₜ-O]ⱼ-R₂₅ and -(C=O)R₂₆;
   wherein R₂₅ is selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl and substituted or unsubstituted C₇-C₂₄ arylalkyl; "t" is an integer in the range of 4 to 11 and "j" is an integer in the range of 1 to 100;
   R₂₆ is selected from the group consisting of substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl and substituted or unsubstituted C₇-C₂₄ arylalkyl;
   with the proviso that at least one of R₂₁, R₂₂, R₂₃, or R₂₄ is hydrogen,
   or in case that none of R₂₁, R₂₂, R₂₃and R₂₄ is hydrogen at least one of R₂₁, R₂₂, R₂₃ or R₂₄ is selected from the group consisting of substituted, linear or branched C₁-C₂₄ alkyl wherein at least one substituent is -OH or -NH₂, substituted C₂-C₂₄ alkenyl wherein at least one substituent is -OH or -
   NH₂, substituted C₅-C₂₄ cycloalkyl wherein at least one substituent is -OH or -NH₂, substituted C₅-C₂₄ cycloalkenyl wherein at least one substituent is -OH or -NH₂, substituted C₆-C₂₄ aryl wherein at least one substituent is -OH or -NH₂, and substituted C₇-C₂₄ arylalkyl while at least one substituent is -OH or -NH₂, -[(C=O)-(CH₂)ₜ-NH]ⱼ-R₂₇, -[(C=O)-(CH₂)ₜ-O]ⱼ-R₂₇, or -(C=O)R₂₈,
   wherein R₂₇ is selected from the group consisting of hydrogen, substituted linear or branched C₁-C₂₄ alkyl, substituted linear or branched C₂-C₂₄ alkenyl, substituted C₅-C₂₄ cycloalkyl, substituted C₅-C₂₄ cycloalkenyl, substituted C₆-C₂₄ aryl, substituted C₇-C₂₄ arylalkyl while at least one substituent in these moieties is -OH or -NH₂, "t" is an integer in the range of 4 to 11 and "j" is an integer in the range of 1 to 100;
   R₂₈ is selected from the group consisting of substituted linear or branched C₁-C₂₄ alkyl, substituted linear or branched C₂-C₂₄ alkenyl, substituted C₅-C₂₄ cycloalkyl, substituted C₅-C₂₄ cycloalkenyl, substituted C₆-C₂₄ aryl substituted C₇-C₂₄ arylalkyl while at least one substituent in these moieties is - OH or -NH₂; and/or
   iii) at least one modified compound of formula (C) obtained by reacting at least one compound of formula (C) with at least one alkyl polyester,
      wherein the ultraviolet radiation absorbing polymer (E) having hydroxy number in the range of ≥ 10 to ≤ 1000 mg KOH/g.

The second aspect of the presently claimed invention is directed to a method for preparing an ultraviolet radiation absorbing polymer (E) according to any one of the preceding aspects, wherein the process comprises the steps of:
i)mixing at least one compound of formula (A) and at least one compound of formula (C) to obtain a mixture;
ii) heating the mixture obtained in step i. to a desired temperature to obtain the ultraviolet radiation absorbing polymer (E); and
iii)isolating the ultraviolet radiation absorbing polymer (E) obtained in step ii).

The third aspect of the presently claimed invention is directed to the use of the ultraviolet radiation absorbing polymer (E) according to the first aspect of the presently claimed invention in a coating composition.

The fourth aspect of the presently claimed invention is directed to a coating composition comprising at least one ultraviolet radiation absorbing polymer (E) or the salt thereof according to the first aspect of the presently claimed invention.

The fifth aspect of the presently claimed invention is directed to a coating composition comprising:
a. at least one coating resin; and
b. at least one ultraviolet radiation absorbing polymer (E) or the salt thereof according to the first aspect of the presently claimed invention.

The sixth aspect of the presently claimed invention is directed to a method of stabilizing a coating composition on a substrate toward ultraviolet radiation, wherein the method comprises applying the coating composition comprising at least one ultraviolet radiation absorbing polymer (E) or the salt thereof according to the first aspect of the presently claimed invention to a substrate.

### Detailed Description

Before the present compositions and formulations of the presently claimed invention are described, it is to be understood that this invention is not limited to particular compositions and formulations described, since such compositions and formulation may, of course, vary. It is also to be understood that the terminology used herein is not intended to be limiting, since the scope of the presently claimed invention will be limited only by the appended claims.

If hereinafter a group is defined to comprise at least a certain number of embodiments, this is meant to also encompass a group which preferably consists of these embodiments only. Furthermore, the terms 'first', 'second', 'third' or 'a', 'b', 'c', etc. and the like in the description and in the claims, are used for distinguishing between similar elements and not necessarily for describing a sequential or chronological order. It is to be understood that the terms so used are interchangeable under appropriate circumstances and that the embodiments of the presently claimed invention described herein are capable of operation in other sequences than described or illustrated herein. In case the terms 'first', 'second', 'third' or '(A)', '(B)' and '(C)' or '(a)', '(b)', '(c)', '(d)', 'i', 'ii' etc. relate to steps of a method or use or assay there is no time or time interval coherence between the steps, that is, the steps may be carried out simultaneously or there may be time intervals of seconds, minutes, hours, days, weeks, months or even years between such steps, unless otherwise indicated in the application as set forth herein above or below.

Furthermore, the ranges defined throughout the specification include the end values as well i.e. a range of 1 to 10 implies that both 1 and 10 are included in the range. For the avoidance of doubt, applicant shall be entitled to any equivalents according to applicable law.

In the following passages, different aspects of the presently claimed invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to 'one embodiment' or 'an embodiment' means that a particular feature, structure or characteristic described in connection with the embodiment is included in at least one embodiment of the presently claimed invention. Thus, appearances of the phrases 'in one embodiment' or 'in an embodiment' in various places throughout this specification are not necessarily all referring to the same embodiment, but may.

Furthermore, the particular features, structures or characteristics may be combined in any suitable manner, as would be apparent to a person skilled in the art from this disclosure, in one or more embodiments. Furthermore, while some embodiments described herein include some, but not other features included in other embodiments, combinations of features of different embodiments are meant to be within the scope of the presently claimed invention, and form different embodiments, as would be understood by those in the art. For example, in the appended claims, any of the claimed embodiments can be used in any combination.

In a first embodiment, the presently claimed invention is directed to an ultraviolet radiation absorbing polymer (E) or a salt thereof obtained by:
i.reacting at least one compound of formula (A) 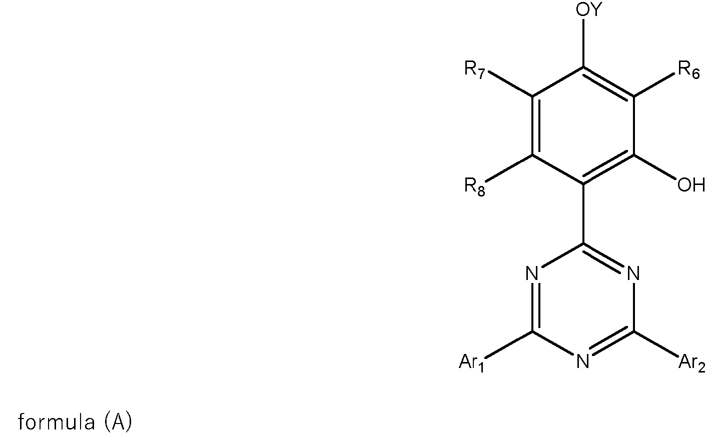
   wherein Ar₁ and Ar₂ are independently of each other a moiety of the formula (B), 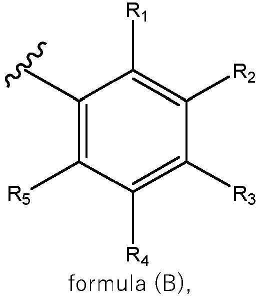
   wherein R₁, R₂, R₃, R₄ and R₅ are independently of each other selected from the group consisting of hydrogen, halogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl, substituted or unsubstituted C₁-C₂₄ heteroaryl, substituted or unsubstituted C₇-C₂₄ arylalkyl, C(=O)-R, substituted or unsubstituted, linear or branched C₁-C₂₄ heteroalkyl, substituted or unsubstituted, linear or branched C₂-C₂₄ heteroalkenyl, substituted or unsubstituted C₅-C₂₄ heterocycloalkyl, substituted or unsubstituted C₅-C₂₄ heterocycloalkenyl, OR, NRR' and C(=O)-NRR';
      or
   R₁ and R₂ together with the carbon atoms to which they are bonded or
   R₂ and R₃ together with the carbon atoms to which they are bonded or
   R₃ and R₄ together with the carbon atoms to which they are bonded or
   R₄ and R₅ together with the carbon atoms to which they are bonded form an unsaturated or aromatic 5- to 20-membered carbocyclic ring that optionally contains 1, 2 or 3 heteroatom(s) selected from O, N or S as ring member(s);
   R₆, R₇ and R₈ are independently of each other selected from the group consisting of hydrogen, halogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, C(=O)-R, substituted or unsubstituted, linear or branched C₁-C₂₄ heteroalkyl, substituted or unsubstituted, linear or branched C₂-C₂₄ heteroalkenyl, substituted or unsubstituted C₅-C₂₄ hetrocycloalkyl, substituted or unsubstituted C₅-C₂₄ heterocycloalkenyl and OR,
      or
   R₇ and R₈ together with the carbon atoms to which they are bonded form an unsaturated or aromatic 5- to 20-membered carbocyclic ring that optionally contains **1, 2** or 3 heteroatom(s) selected from O, N or S as ring member(s);
   R and R' are independently of each other selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl and substituted or unsubstituted C₇-C₂₄ arylalkyl; Y is a formula -CR₁₁R₁₂R₁₃; with a proviso wherein at least one of the R₁₁, R₁₂ and R₁₃ contains at least one functional group selected from the group consisting of -C(=O)OR", -C(=O)Cl, -C(=O)NH₂ and - C(=O)NHR";
   wherein R₁₁ and R₁₂ are independently of each other selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl, substituted or unsubstituted C₇-C₂₄ arylalkyl, C₁-C₂₄ alkyloxy, substituted or unsubstituted, linear or branched C₂-C₂₄ alkenyloxy, substituted or unsubstituted C₅-C₂₄ cycloalkyloxy, substituted or unsubstituted C₅-C₂₄ cycloalkenyloxy, substituted or unsubstituted C₆-C₂₄ aryloxy and substituted or unsubstituted C₇-C₂₄ arylalkyloxy;
   R₁₃ is selected from the group consisting of substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl, substituted or unsubstituted C₇-C₂₄ arylalkyl, C₁-C₂₄ alkyloxy, substituted or unsubstituted, linear or branched C₂-C₂₄ alkenyloxy, substituted or unsubstituted C₅-C₂₄ cycloalkyloxy, substituted or unsubstituted C₅-C₂₄ cycloalkenyloxy, substituted or unsubstituted C₆-C₂₄ aryloxy and substituted or unsubstituted C₇-C₂₄ arylalkyloxy;
   wherein R" is selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl and substituted or unsubstituted C₇-C₂₄ arylalkyl; and
ii.at least one compound of formula (C), 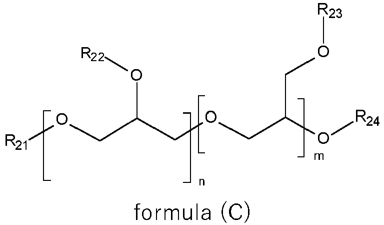
   wherein m and n are independently from each other an integer from 0 to 20;
   wherein m + n ≥ 2;
   wherein R₂₁, R₂₂, R₂₃ and R₂₄ are independently of each other selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl, substituted or unsubstituted C₇-C₂₄ arylalkyl, -[(C=O)-(CH₂)ₜ-NH]ⱼ-R₂₅, -[(C=O)-(CH₂)ₜ-O]ⱼ-R₂₅ and -(C=O)R₂₆;
   wherein R₂₅ is selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl and substituted or unsubstituted C₇-C₂₄ arylalkyl; "t" is an integer in the range of 4 to 11 and "j" is an integer in the range of 1 to 100;
   R₂₆ is selected from the group consisting of substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl and substituted or unsubstituted C₇-C₂₄ arylalkyl; with the proviso that at least one of R₂₁, R₂₂, R₂₃ or R₂₄ is hydrogen,
   or in case that none of R₂₁, R₂₂, R₂₃ and R₂₄ is hydrogen at least one of R₂₁, R₂₂, R₂₃ or R₂₄ is selected from the group consisting of substituted, linear or branched C₁-C₂₄ alkyl wherein at least one substituent is -OH or -NH₂, substituted C₂-C₂₄ alkenyl wherein at least one substituent is -OH or -NH₂, substituted C₅-C₂₄ cycloalkyl wherein at least one substituent is -OH or -NH₂, substituted C₅-C₂₄ cycloalkenyl wherein at least one substituent is -OH or -NH₂, substituted C₆-C₂₄ aryl wherein at least one substituent is -OH or -NH₂, and substituted C₇-C₂₄ arylalkyl wherein at least one substituent is - OH or -NH₂, , -[(C=O)-(CH₂)ₜ-NH]ⱼ-R₂₇, -O[(C=O)-(CH₂)ₜ-O]ⱼ-R₂₇, or -(C=O)R₂₈, wherein R₂₇ is selected from the group consisting of hydrogen, substituted linear or branched C₁-C₂₄ alkyl, substituted linear or branched C₂-C₂₄ alkenyl, substituted C₅-C₂₄ cycloalkyl, substituted C₅-C₂₄ cycloalkenyl, substituted C₆-C₂₄ aryl substituted C₇-C₂₄ arylalkyl while at least one substituent in these moieties is -OH or -NH₂, "t" is an integer in the range of 4 to 11 and "j" is an integer in the range of 2 to 100;
   R₂₈ is selected from the group consisting of substituted linear or branched C₁-C₂₄ alkyl, substituted linear or branched C₂-C₂₄ alkenyl, substituted C₅-C₂₄ cycloalkyl, substituted C₅-C₂₄ cycloalkenyl, substituted C₆-C₂₄ aryl substituted C₇-C₂₄ arylalkyl while at least one substituent in these moieties is -OH or -NH₂; and/or
iii) at least one modified compound of formula (C) obtained by reacting at least one compound of formula (C) with at least one alkyl polyester,
wherein the ultraviolet radiation absorbing polymer (E) having hydroxy number in the range of ≥ 10 to ≤ 1000 mg KOH/g; more preferably an ultraviolet radiation absorbing polymer (E) or a salt thereof obtained by:
   i.reacting at least one compound of formula (A) 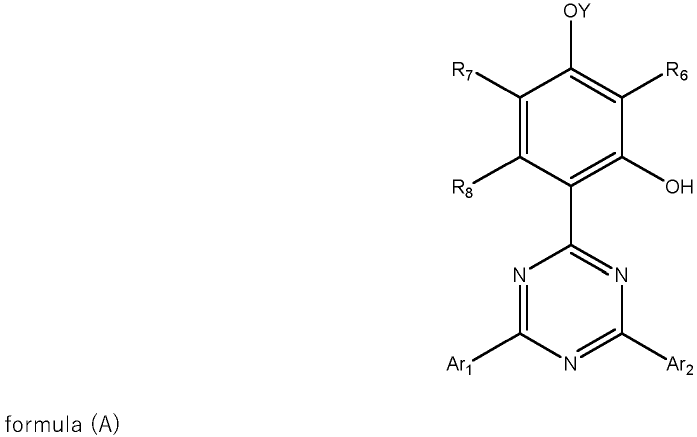
      wherein Ar₁ and Ar₂ are independently of each other a moiety of the formula (B), 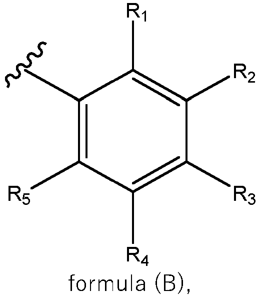
      wherein R₁, R₂, R₃, R₄ and R₅ are independently of each other selected from the group consisting of hydrogen, halogen, substituted or unsubstituted, linear or branched C₁-C₂₄ alkyl, substituted or unsubstituted, linear or branched C₂-C₂₄ alkenyl, substituted or unsubstituted C₆-C₂₄ aryl, substituted or unsubstituted C₁-C₂₄ heteroaryl, substituted or unsubstituted C₇-C₂₄ arylalkyl, C(=O)-R, OR, NRR' and C(=O)-NRR';
         or
      R₁ and R₂ together with the carbon atoms to which they are bonded or
      R₂ and R₃ together with the carbon atoms to which they are bonded or
      R₃ and R₄ together with the carbon atoms to which they are bonded or
      R₄ and R₅ together with the carbon atoms to which they are bonded form an unsaturated or aromatic 5- to 20-membered carbocyclic ring that optionally contains 1, 2 or 3 heteroatom(s) selected from O, N or S as ring member(s);
      R₆, R₇ and R₈ are independently of each other selected from the group consisting of hydrogen, halogen, substituted or unsubstituted, linear or branched C₁-C₂₄ alkyl, C(=O)-R and OR,
         or
      R₇ and R₈ together with the carbon atoms to which they are bonded form an unsaturated or aromatic 5- to 20-membered carbocyclic ring that optionally contains 1, 2 or 3 heteroatom(s) selected from O, N or S as ring member(s);
      R and R' are independently of each other selected from the group consisting of hydrogen, substituted or unsubstituted, linear or branched C₁-C₂₄ alkyl, substituted or unsubstituted C₆-C₂₄ aryl and substituted or unsubstituted C₇-C₂₄ arylalkyl;
      Y is a formula -CR₁₁R₁₂R₁₃; with a proviso wherein at least one of the R₁₁, R₁₂ and R₁₃ contains at least one functional group selected from the group consisting of -C(=O)OR", -C(=O)Cl, -C(=O)NH₂ and - C(=O)NHR";
      wherein R₁₁ and R₁₂ are independently of each other selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl, substituted or unsubstituted C₇-C₂₄ arylalkyl, C₁-C₂₄ alkyloxy, substituted or unsubstituted, linear or branched C₂-C₂₄ alkenyloxy, substituted or unsubstituted C₅-C₂₄ cycloalkyloxy, substituted or unsubstituted C₅-C₂₄ cycloalkenyloxy, substituted or unsubstituted C₆-C₂₄ aryloxy and substituted or unsubstituted C₇-C₂₄ arylalkyloxy;
      R₁₃ is selected from the group consisting of substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl, substituted or unsubstituted C₇-C₂₄ arylalkyl, C₁-C₂₄ alkyloxy, substituted or unsubstituted, linear or branched C₂-C₂₄ alkenyloxy, substituted or unsubstituted C₅-C₂₄ cycloalkyloxy, substituted or unsubstituted C₅-C₂₄ cycloalkenyloxy, substituted or unsubstituted C₆-C₂₄ aryloxy and substituted or unsubstituted C₇-C₂₄ arylalkyloxy;
      wherein R" is selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl and substituted or unsubstituted C₇-C₂₄ arylalkyl; and
   ii.at least one compound of formula (C), 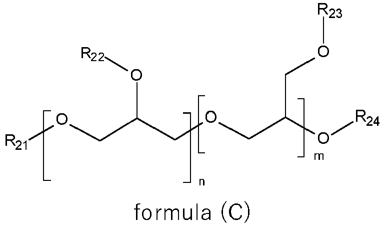
      wherein m and n are independently from each other an integer from 0 to 20;
      wherein m + n ≥ 2;
      wherein R₂₁, R₂₂, R₂₃ and R₂₄ are independently of each other selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl, substituted or unsubstituted C₇-C₂₄ arylalkyl, -[(C=O)-(CH₂)ₜ-NH]ⱼ-R₂₅, -[(C=O)-(CH₂)ₜ-O]ⱼ-R₂₅ and -(C=O)R₂₆;
      wherein R₂₅ is selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl and substituted or unsubstituted C₇-C₂₄ arylalkyl; "t" is an integer in the range of 4 to 11 and "j" is an integer in the range of 1 to 100;
      R₂₆ is selected from the group consisting of substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl and substituted or unsubstituted C₇-C₂₄ arylalkyl;
      with the proviso that at least one of R₂₁, R₂₂, R₂₃ or R₂₄ is hydrogen,
      or in case that none of R₂₁, R₂₂, R₂₃ and R₂₄ is hydrogen at least one of R₂₁, R₂₂, R₂₃ or R₂₄ is selected from the group consisting of substituted, linear or branched C₁-C₂₄ alkyl wherein at least one substituent is -OH or -NH₂, substituted C₂-C₂₄ alkenyl wherein at least one substituent is -OH or -NH₂, substituted C₅-C₂₄ cycloalkyl wherein at least one substituent is -OH or -NH₂, substituted C₅-C₂₄ cycloalkenyl wherein at least one substituent is -OH or -NH₂, substituted C₆-C₂₄ aryl wherein at least one substituent is -OH or -NH₂, and substituted C₇-C₂₄ arylalkyl wherein at least one substituent is - OH or -NH₂, --[(C=O)-(CH₂)ₜ-NH]ⱼ-R₂₇, -[(C=O)-(CH₂)ₜ-O]ⱼ-R₂₇ or -(C=O)R₂₈, wherein R₂₇ is selected from the group consisting of hydrogen, substituted linear or branched C₁-C₂₄ alkyl, substituted linear or branched C₂-C₂₄ alkenyl, substituted C₅-C₂₄ cycloalkyl, substituted C₅-C₂₄ cycloalkenyl, substituted C₆-C₂₄ aryl substituted C₇-C₂₄ arylalkyl while at least one substituent in these moieties is -OH or -NH₂, "t" is an integer in the range of 4 to 11 and "j" is an integer in the range of 2 to 100;
      R₂₈ is selected from the group consisting of substituted linear or branched C₁-C₂₄ alkyl, substituted linear or branched C₂-C₂₄ alkenyl, substituted C₅-C₂₄ cycloalkyl, substituted C₅-C₂₄ cycloalkenyl, substituted C₆-C₂₄ aryl substituted C₇-C₂₄ arylalkyl while at least one substituent in these moieties is - OH or -NH₂; and/or
   iii) at least one modified compound of formula (C) obtained by reacting at least one compound of formula (C) with at least one alkyl polyester,
   wherein the ultraviolet radiation absorbing polymer (E) having hydroxy number in the range of ≥ 10 to ≤ 1000 mg KOH/g;
   even more preferably an ultraviolet radiation absorbing polymer (E) or a salt thereof obtained by:
      i.reacting at least one compound of formula (A) 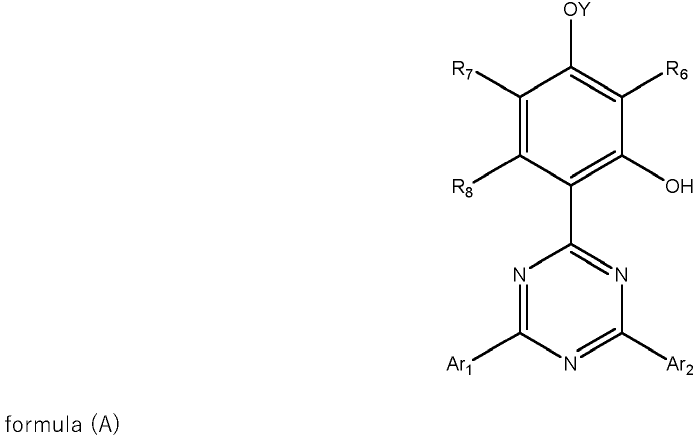
         wherein Ar₁ and Ar₂ are independently of each other a moiety of the formula (B), 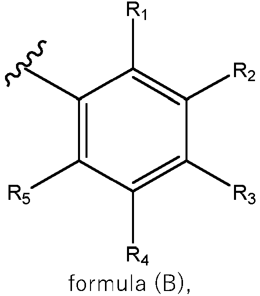
         wherein R₁, R₂, R₃, R₄ and R₅ are independently of each other selected from the group consisting of hydrogen, halogen, substituted or unsubstituted, linear or branched C₁-C₂₄ alkyl, substituted or unsubstituted C₆-C₂₄ aryl and OR;
         R₆, R₇ and R₈ are independently of each other selected from the group consisting of hydrogen, halogen, substituted or unsubstituted, linear or branched C₁-C₂₄ alkyl and OR,
         R is selected from the group consisting of hydrogen, substituted or unsubstituted, linear or branched C₁-C₂₄ alkyl;
         Y is a formula -CR₁₁R₁₂R₁₃; with a proviso wherein at least one of the R₁₁, R₁₂ and R₁₃ contains at least one functional group selected from the group consisting of -C(=O)OR" and -C(=O)Cl ;
         wherein R₁₁ and R₁₂ are independently of each other selected from the group consisting of hydrogen, substituted or unsubstituted, linear or branched C₁-C₂₄ alkyl;
         R₁₃ is selected from the group consisting of substituted or unsubstituted, linear or branched C₁-C₂₄ alkyl;
         wherein R" is selected from the group consisting of hydrogen, substituted or unsubstituted, linear or branched C₁-C₂₄ alkyl; and
      ii.at least one compound of formula (C), 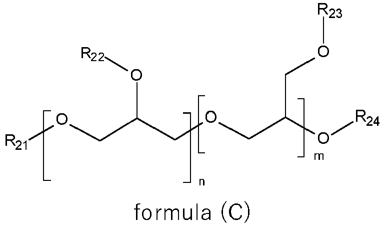
         wherein m and n are independently from each other an integer from 0 to 20;
         wherein m + n ≥ 2;
         wherein R₂₁, R₂₂, R₂₃ and R₂₄ are independently of each other selected from the group consisting of hydrogen, substituted or unsubstituted, linear or branched C₁-C₂₄ alkyl, -[(C=O)-(CH₂)ₜ-NH]ⱼ-R₂₅, - [(C=O)-(CH₂)ₜ-O]ⱼ-R₂₅ and -(C=O)R₂₆;
         wherein R₂₅ is selected from the group consisting of hydrogen, substituted or unsubstituted, linear or branched C₁-C₂₄ alkyl, substituted or unsubstituted, linear or branched C₂-C₂₄ alkenyl; "t" is an integer in the range of 5 to 7 and "j" is an integer in the range of 1 to 50;
         R₂₆ is selected from the group consisting of substituted or unsubstituted, linear or branched C₁-C₂₄ alkyl, substituted or unsubstituted, linear or branched C₂-C₂₄ alkenyl
         with the proviso that at least one of R₂₁, R₂₂, R₂₃ or R₂₄ is hydrogen,
         or in case that none of R₂₁, R₂₂, R₂₃ and R₂₄ is hydrogen then at least one of R₂₁, R₂₂, R₂₃ or R₂₄ is selected from the group consisting of substituted, linear or branched C₁-C₂₄ alkyl wherein at least one substituent is -OH or -NH₂, substituted C₂-C₂₄ alkenyl wherein at least one substituent is -OH or -NH₂, --[(C=O)-(CH₂)ₜ-NH]ⱼ-R₂₇, -[(C=O)-(CH₂)ₜ-O]ⱼ-R₂₇ or -(C=O)R₂₈, wherein R₂₇ is selected from the group consisting of hydrogen, substituted linear or branched C₁-C₂₄ alkyl, substituted linear or branched C₂-C₂₄ alkenyl while at least one substituent in these moieties is -OH or -NH₂, "t" is an integer in the range of 5 to 7 and "j" is an integer in the range of 1 to 50;
         R₂₈ is selected from the group consisting of substituted linear or branched C₁-C₂₄ alkyl, substituted linear or branched C₂-C₂₄ alkenyl, while at least one substituent in these moieties is -OH or -NH₂; and/or
      iii) at least one modified compound of formula (C) obtained by reacting at least one compound of formula (C) with at least one alkyl polyester, wherein the ultraviolet radiation absorbing polymer (E) having hydroxy number in the range of ≥ 10 to ≤ 1000 mg KOH/g; most preferably an ultraviolet radiation absorbing polymer (E) or a salt thereof obtained by:
         i.reacting at least one compound of formula (A) 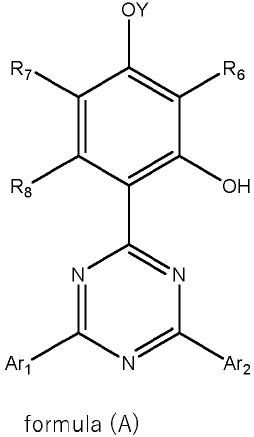
            wherein Ar₁ and Ar₂ are independently of each other a moiety of the formula (B), 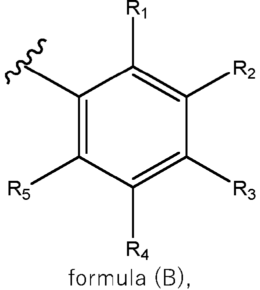
            wherein R₁, R₂, R₃, R₄ and R₅ are independently of each other selected from the group consisting of hydrogen, halogen, substituted or unsubstituted, linear or branched C₁-C₂₄ alkyl, substituted or unsubstituted C₆-C₂₄ aryl and OR;
            R₆, R₇ and R₈ are independently of each other selected from the group consisting of hydrogen, halogen, substituted or unsubstituted, linear or branched C₁-C₂₄ alkyl and OR,
            R is selected from the group consisting of hydrogen, substituted or unsubstituted, linear or branched C₁-C₂₄ alkyl;
            Y is a formula -CR₁₁R₁₂R₁₃; with a proviso wherein at least one of the R₁₁, R₁₂ and R₁₃ contains at least one functional group selected from the group consisting of -C(=O)OR" and -C(=O)Cl ;
            wherein R₁₁ and R₁₂ are independently of each other selected from the group consisting of hydrogen, substituted or unsubstituted, linear or branched C₁-C₂₄ alkyl;
            R₁₃ is selected from the group consisting of substituted or unsubstituted, linear or branched C₁-C₂₄ alkyl;
            wherein R" is selected from the group consisting of hydrogen, substituted or unsubstituted, linear or branched C₁-C₂₄ alkyl; and
         ii.at least one compound of formula (C), 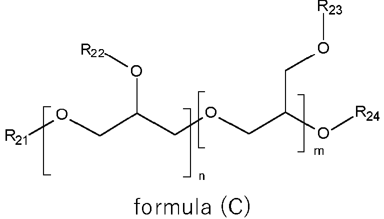
            wherein m and n are independently from each other an integer from 0 to 20;
            wherein m + n ≥ 2;
            wherein R₂₁, R₂₂, R₂₃ and R₂₄ are independently of each other selected from the group consisting of hydrogen, substituted or unsubstituted, linear or branched C₁-C₂₄ alkyl, -[(C=O)-(CH₂)ₜ-NH]ⱼ-R₂₅, - [(C=O)-(CH₂)ₜ-O]ⱼ-R₂₅ and -(C=O)R₂₆;
            wherein R₂₅ is selected from the group consisting of hydrogen, substituted or unsubstituted, linear or branched C₁-C₂₄ alkyl, substituted or unsubstituted, linear or branched C₂-C₂₄ alkenyl; "t" is an integer in the range of 5 to 7 and "j" is an integer in the range of 1 to 20;
            R₂₆ is selected from the group consisting of substituted or unsubstituted, linear or branched C₁-C₂₄ alkyl, substituted or unsubstituted, linear or branched C₂-C₂₄ alkenyl;
            with the proviso that at least one of R₂₁, R₂₂, R₂₃ or R₂₄ is hydrogen,
            or in case that none of R₂₁, R₂₂, R₂₃ and R₂₄ is hydrogen then at least one of R₂₁, R₂₂, R₂₃ or R₂₄ is selected from the group consisting of substituted, linear or branched C₁-C₂₄ alkyl wherein at least one substituent is -OH, substituted C₂-C₂₄ alkenyl wherein at least one substituent is -OH, -[(C=O)-(CH₂)ₜ-NH]ⱼ-R₂₇, -[(C=O)-(CH₂)ₜ-O]ⱼ-R₂₇ or -(C=O)R₂₈, wherein R₂₇ is selected from the group consisting of hydrogen, substituted linear or branched C₁-C₂₄ alkyl, substituted linear or branched C₂-C₂₄ alkenyl while at least one substituent in th ese moieties is -OH or -NH₂, "t" is an integer in the range of 4 to 11 and "j" is an integer in the range of 1 to 20;
            R₂₈ is selected from the group consisting of substituted linear or branched C₁-C₂₄ alkyl, substituted linear or branched C₂-C₂₄ alkenyl, substituted C₅-C₂₄ cycloalkyl while at least one substituent in these moieties is -OH or -NH₂; and/or
         iii) at least one modified compound of formula (C) obtained by reacting at least one compound of formula (C) with at least one alkyl polyester,
            wherein the ultraviolet radiation absorbing polymer (E) having hydroxy number in the range of ≥ 10 to ≤ 600 mg KOH/g;
            and in particular preferably an ultraviolet radiation absorbing polymer (E) or a salt thereof obtained by:
               i.reacting at least one compound of formula (A) 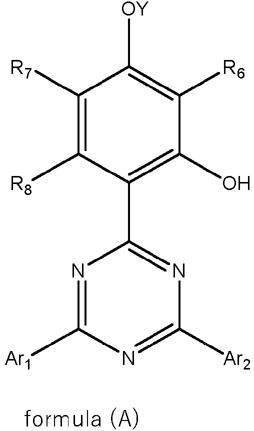
                  wherein Ar₁ and Ar₂ are independently of each other a moiety of the formula (B), 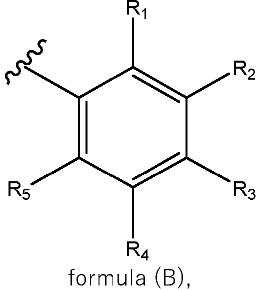
                  wherein R₁, R₂, R₃, R₄ and R₅ are independently of each other selected from the group consisting of hydrogen, and substituted or unsubstituted, linear or branched C₁-C₂₄ alkyl, substituted or unsubstituted C₆-C₂₄ aryl;
                  R₆, R₇ and R₈ are independently of each other selected from the group consisting of hydrogen, and substituted or unsubstituted, linear or branched C₁-C₂₄ alkyl,
                  Y is a formula -CR₁₁R₁₂R₁₃; with a proviso wherein at least one of the R₁₁, R₁₂ and R₁₃ contains at least one functional group selected from the group consisting of -C(=O)OR" and -C(=O)Cl ;
                  wherein R₁₁ and R₁₂ are independently of each other selected from the group consisting of hydrogen, substituted or unsubstituted, linear or branched C₁-C₂₄ alkyl;
                  R₁₃ is selected from the group consisting of substituted or unsubstituted, linear or branched C₁-C₂₄ alkyl;
                  wherein R" is selected from the group consisting of substituted or unsubstituted, linear or branched C₁-C₂₄ alkyl; and
               ii.at least one compound of formula (C), 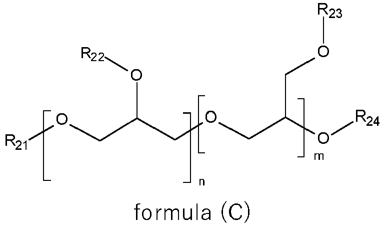
                  wherein m and n are independently from each other an integer from 0 to 20;
                  wherein m + n ≥ 2;
                  wherein R₂₁, R₂₂, R₂₃ and R₂₄ are independently of each other selected from the group consisting of hydrogen, -[(C=O)-(CH₂)ₜ-NH]ⱼ-R₂₅, -[(C=O)-(CH₂)ₜ-O]ⱼ-R₂₅ and -(C=O)R₂₆;
                  wherein R₂₅ is selected from the group consisting of hydrogen, substituted or unsubstituted, linear or branched C₁-C₂₄ alkyl, and substituted or unsubstituted, linear or branched C₂-C₂₄ alkenyl; "t" is an integer in the range of 5 to 6 and "j" is an integer in the range of 1 to 10;
                  R₂₆ is selected from the group consisting of substituted or unsubstituted, linear or branched C₁-C₂₄ alkyl, and substituted or unsubstituted, linear or branched C₂-C₂₄ alkenyl,
                  with the proviso that at least one of R₂₁, R₂₂, R₂₃ or R₂₄ is hydrogen,
                  or in case that none of R₂₁, R₂₂, R₂₃ and R₂₄ is hydrogen then at least one of R₂₁, R₂₂, R₂₃ or R₂₄ is selected from the group consisting of substituted, linear or branched C₁-C₂₄ alkyl wherein at least one substituent is -OH, substituted C₂-C₂₄ alkenyl wherein at least one substituent is -OH, -[(C=O)-(CH₂)ₜ-NH]ⱼ-R₂₇, -[(C=O)-(CH₂)ₜ-O]ⱼ-R₂₇ or -(C=O)R₂₈, wherein R₂₇ is selected from the group consisting of hydrogen, substituted linear or branched C₁-C₂₄ alkyl, substituted linear or branched C₂-C₂₄ alkenyl while at least one substituent in these moieties is -OH, "t" is an integer in the range of 5 to 6 and "j" is an integer in the range of 1 to 10,
                  R₂₈ is selected from the group consisting of substituted linear or branched C₁-C₂₄ alkyl, substituted linear or branched C₂-C₂₄ alkenyl while at least one substituent in these moieties is -OH or -NH₂; and/ or
               iii) at least one modified compound of formula (C) obtained by reacting at least one compound of formula (C) with at least one alkyl diester,
                  wherein the ultraviolet radiation absorbing polymer (E) having hydroxy number in the range of ≥ 50 to ≤ 400 mg KOH/g.

In a preferred embodiment, the ultraviolet radiation absorbing polymer (E) having hydroxy number in the range of ≥ 10 to ≤ 1000 mg KOH/g; preferably the ultraviolet radiation absorbing polymer (E) having hydroxy number in the range of ≥ 10 to ≤ 800 mg KOH/g; more preferably the ultraviolet radiation absorbing polymer (E) having hydroxy number in the range of ≥ 10 to ≤ 600 mg KOH/g; even more preferably the ultraviolet radiation absorbing polymer (E) having hydroxy number in the range of ≥ 10 to ≤ 400 mg KOH/g, most preferably the ultraviolet radiation absorbing polymer (E) having hydroxy number in the range of ≥ 10 to ≤ 300 mg KOH/g; and in particular the ultraviolet radiation absorbing polymer (E) having hydroxy number in the range of ≥ 40 to ≤ 350 mg KOH/g.

Within the context of the presently claimed invention, the term "alkyl" , as used herein, refers to an acyclic saturated aliphatic group, including linear or branched alkyl saturated hydrocarbon radicals, denoted by a general formula CₙH₂ₙ₊₁ and wherein n is the number of carbon atoms such as 1, 2, 3, 4, etc.

In a preferred embodiment, the unsubstituted linear C₁-C₂₄ alkyl is preferably selected from the group consisting of methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, henicosyl, docosyl, tricosyl and tetracosyl; more preferably selected from the group consisting of hexyl, heptyl, octyl, nonyl, decyl, undecyl, dodecyl, tridecyl, tetradecyl, pentadecyl, hexadecyl, heptadecyl, octadecyl, nonadecyl, eicosyl, henicosyl, docosyl, tricosyl and tetracosyl; even more preferably selected from the group consisting of methyl, ethyl, propyl, butyl, pentyl, hexyl, heptyl, octyl, nonyl, decyl, undecyl, dodecyl, tridecyl, tetradecyl and pentadecyl; most preferably selected from the group consisting of methyl, ethyl, propyl, butyl, pentyl, hexyl, heptyl, octyl, nonyl, decyl, undecyl and dodecyl; and in particular selected from the group consisting of methyl, ethyl, propyl, butyl, pentyl, hexyl, heptyl, octyl, nonyl and decyl.

In a preferred embodiment, the unsubstituted branched C₁-C₂₄ alkyl is preferably selected from the group consisting of isopropyl, iso-butyl, neo-pentyl, 2-ethyl-hexyl, 2-propyl-heptyl, 2-butyl-octyl, 2-pentyl-nonyl, 2-hexyl-decyl, iso-hexyl, iso-heptyl, iso-octyl, iso-nonyl, iso-decyl, iso-dodecyl, iso-tetradecyl, iso-hexadecyl, iso-octadecyl and iso-eicosyl, more preferably selected from the group consisting of 2-ethyl-hexyl, 2-propyl-heptyl, 2-butyl-octyl, 2-pentyl-nonyl, 2-hexyl-decyl, iso-hexyl, iso-heptyl, iso-octyl, iso-nonyl, iso-decyl, iso-dodecyl, iso-tetradecyl, iso-hexadecyl, iso-octadecyl, iso-eicosyl, 2-methyltricosyl, 2-ethyldocosyl, 3-ethylhenicosyl, 3-ethylicosyl, 4-propylhenicosyl, propylnonadecyl, 6-butyldodecyl and 5-ethylundecyl.

In a preferred embodiment, the substituted, linear or branched C₁-C₂₄ alkyl refers to a branched or linear saturated hydrocarbon group having C₁-C₂₄ carbon atoms substituted with functional groups selected from the group consisting of hydroxy, alkoxy, C(=O)-R, CN and SR, wherein R is selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl and substituted or unsubstituted C₇-C₂₄ arylalkyl.

In a preferred embodiment, the substituted, linear or branched C₁-C₂₄ alkyl refers to a branched or linear saturated hydrocarbon group having C₁-C₂₄ carbon atoms substituted with functional groups selected from the group consisting of hydroxy, alkoxy, C(=O)-R, CN and SR, preferably selected from the group consisting of 1-hydroxy methyl, 1-methoxy methyl, 1-hydroxy ethyl, 1-hydroxy propyl, 1-hydroxy butyl, 1-hydroxy pentyl, 1-hydroxy hexyl, 1-hydroxy heptyl, 1-hydroxy octyl, 1-hydroxy nonyl, decyl, 1-hydroxy undecyl, 1-hydroxy dodecyl, 1-hydroxy tridecyl, 1-hydroxy tetradecyl, 1-hydroxy pentadecyl, 1-hydroxy hexadecyl, 1-hydroxy heptadecyl, 1-hydroxy octadecyl, 1-hydroxy nonadecyl, 1-hydroxy eicosyl, 1-hydroxy henicosyl, 1-hydroxy docosyl, 1-hydroxy tricosyl, 1-hydroxy tetracosyl, 1-methoxy methyl, 1-methoxy ethyl, 1-methoxy propyl, 1-methoxy butyl, 1-methoxy pentyl, 1-methoxy hexyl, 1-methoxy heptyl, 1-methoxy octyl, 1-methoxy nonyl, decyl, 1-methoxy undecyl, 1-methoxy dodecyl, 1-methoxy tridecyl, 1-methoxy tetradecyl, 1-methoxy pentadecyl, 1-methoxy hexadecyl, 1-methoxy heptadecyl, 1-methoxy octadecyl, 1-methoxy nonadecyl, 1-methoxy eicosyl, 1-methoxy henicosyl, 1-methoxy docosyl, 1-methoxy tricosyl, 1-methoxy tetracosyl, 2-methoxy propyl, 2-methoxy butyl, 2-methoxy pentyl, 2-methoxy hexyl, 2-methoxy heptyl, 2-methoxy octyl, 2-methoxy nonyl, decyl, 2-methoxy undecyl, 2-methoxy dodecyl, 2-methoxy tridecyl, 2-methoxy tetradecyl, 2-methoxy pentadecyl, 2-methoxy hexadecyl, 2-methoxy heptadecyl, 2-methoxy octadecyl, 2-methoxy nonadecyl, 2-methoxy eicosyl, 2-methoxy henicosyl, 2-methoxy docosyl, 2-methoxy tricosyl, 2-methoxy tetracosyl, 1-acetoxy methyl, 1-acetoxy ethyl, 1-acetoxy propyl, 1-acetoxy butyl, 1-acetoxy pentyl, 1-acetoxy hexyl, 1-acetoxy heptyl, 1-acetoxy octyl, 1-acetoxy nonyl, decyl, 1-acetoxy undecyl, 1-acetoxy dodecyl, 1-acetoxy tridecyl, 1-acetoxy tetradecyl, 1-acetoxy pentadecyl, 1-acetoxy hexadecyl, 1-acetoxy heptadecyl, 1-acetoxy octadecyl, 1-acetoxy nonadecyl, 1-acetoxy eicosyl, 1-acetoxy henicosyl, 1-acetoxy docosyl, 1-acetoxy tricosyl, 1-acetoxy tetracosyl, 1-cyano methyl, 1-cyano ethyl, 1-cyano propyl, 1-cyano butyl, 1-cyano pentyl, 1-cyano hexyl, 1-cyano heptyl, 1-cyano octyl, 1-cyano nonyl, decyl, 1-cyano undecyl, 1-cyano dodecyl, 1-cyano tridecyl, 1-cyano tetradecyl, 1-cyano pentadecyl, 1-cyano hexadecyl, 1-cyano heptadecyl, 1-cyano octadecyl, 1-cyano nonadecyl, 1-cyano eicosyl, 1-cyano henicosyl, 1-cyano docosyl, 1-cyano tricosyl, 1-cyano tetracosyl, 2-cyano propyl, 2-cyano butyl, 2-cyano pentyl, 2-cyano hexyl, 2-cyano heptyl, 2-cyano octyl, 2-cyano nonyl, decyl, 2-cyano undecyl, 2-cyano dodecyl, 2-cyano tridecyl, 2-cyano tetradecyl, 2-cyano pentadecyl, 2-cyano hexadecyl, 2-cyano heptadecyl, 2-cyano octadecyl, 2-cyano nonadecyl, 2-cyano eicosyl, 2-cyano henicosyl, 2-cyano docosyl, 2-cyano tricosyl, 2-cyano tetracosyl, 1-thioyl methyl, 1-thioyl ethyl, 1-thioyl propyl, 1-thioyl butyl, 1-thioyl pentyl, 1-thioyl hexyl, 1-thioyl heptyl, 1-thioyl octyl, 1-thioyl nonyl, decyl, 1-thioyl undecyl, 1-thioyl dodecyl, 1-thioyl tridecyl, 1-thioyl tetradecyl, 1-thioyl pentadecyl, 1-thioyl hexadecyl, 1-thioyl heptadecyl, 1-thioyl octadecyl, 1-thioyl nonadecyl, 1-thioyl eicosyl, 1-thioyl henicosyl, 1-thioyl docosyl, 1-thioyl tricosyl and 1-thioyl tetracosyl.

In a preferred embodiment, the term alkenyl denotes unsubstituted, linear C₂-C₂₄ alkenyl which is preferably selected from the group consisting of 1-propenyl, 1-butenyl, 1-pentenyl, 1-hexenyl,2-hexenyl, 1-heptenyl, 2-heptenyl, 1-octenyl, 2-octenyl, 1-nonenyl, 2-nonenyl, 1-decenyl, 2-decenyl, 1-undecenyl, 2-undecenyl, 1-dodecenyl, 2-dodecenyl, 1-tridecenyl, 2-tridecenyl, 1-tetradecenyl, 2-tetradecenyl, 1-pentadecenyl, 2-pentadecenyl, 1-hexadecenyl, 2-hexadecenyl, 1-heptadecenyl, 2-heptadecenyl, 1-octadecenyl, 2-octadecenyl, 1-nonadecenyl, 2-nonadecenyl, 1-eicosenyl and 2-eicosenyl, more preferably selected from 1-hexenyl,2-hexenyl, 1-heptenyl, 2-heptenyl, 1-octenyl, 2-octenyl, 1-nonenyl, 2-nonenyl, 1-decenyl, 2-decenyl, 1-undecenyl, 2-undecenyl, 1-dodecenyl, 2-dodecenyl, 1-tridecenyl, 2-tridecenyl, 1-tetradecenyl, 2-tetradecenyl, 1-pentadecenyl, 2-pentadecenyl, 1-hexadecenyl, 2-hexadecenyl, 1-heptadecenyl, 2-heptadecenyl, 1-octadecenyl, 2-octadecenyl, 1-nonadecenyl, 2-nonadecenyl, 1-eicosenyl and 2-eicosenyl, 20-henicosenyl, 2-docosenyl, 6-tricosenyl and 2-tetracosenyl.

In a preferred embodiment, the unsubstituted branched C₂-C₂₄ alkenyl is selected from the group consisting of isopropenyl, iso-butenyl, neo-pentenyl, 2-ethyl-hexenyl, 2-propyl-heptenyl, 2-butyl-octenyl, 2-pentyl-nonenyl, 2-hexyl-decenyl, iso-hexenyl, iso-heptenyl, iso-octenyl, iso-nonenyl, iso-decenyl, iso-dodecenyl, iso-tetradecenyl, iso-hexadecenyl, iso-octadecenyl, iso-eicosenyl, 2-methyl tricosenyl, 2-ethyl docosenyl, 3-ethylhenicosenyl, 3-ethyl icosenyl, 4-propylhenicosenyl, 4-propylnonadecenyl, 6-butyldodecenyl, 5-ethylundedcenyl, 1,4-hexadienyl, 1,3-hexadienyl, 2,5-hexadienyl, 3,5-hexadienyl, 2,4-hexadienyl, 1,3,5-hexatrienyl, 1,3,6-heptatrienyl, 1,4,7-octatrienyl or 2-methyl-1,3,5hexatrienyl, 1,3,5,7-octatetraenyl, 1,3,5,8-nonatetraenyl, 1,4,7,10-undecatetraenyl, 2-ethyl-1,3,6,8-nonatetraenyl, 2-ethenyl-1,3,5,8-nonatetraenyl, 1,3,5,7,9-decapentaenyl, 1,4,6,8,10-undecapentaenyl and 1,4,6,9,11 -dodecapentaenyl.

In a preferred embodiment, the substituted, linear or branched C₂-C₂₄ alkenyl refers to a branched or a linear unsaturated hydrocarbon group having C₂-C₂₄ carbon atoms substituted with functional groups selected from, hydroxy, alkoxy, C(=O)-R, CN and SR; wherein R is hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl, substituted or unsubstituted C₇-C₂₄ arylalkyl.

In a preferred embodiment the substituted, linear or branched C₂-C₂₄ alkenyl refers to a branched or an linear unsaturated hydrocarbon group having C₂-C₂₄ carbon atoms substituted with functional groups selected from hydroxy, alkoxy, C(=O)-R, CN and SR; preferably selected from the group consisting of 2-hydroxy propenyl, 3-hydroxy butenyl, 3-hydroxy pentenyl, 5-hydroxy hexenyl, 7-hydroxy heptenyl, 3-hydroxy octenyl, 5-hydroxy nonenyl, decyl, 11-hydroxy undecenyl, 9-hydroxy dodecenyl, 6-hydroxy tridecenyl, 4-hydroxy tetradecenyl, 6-hydroxy pentadecenyl, 3-hydroxy hexadecenyl, 2-hydroxy heptadecenyl, 7-hydroxy octadecenyl, 6-hydroxy nonadecenyl, 4-hydroxy eicosenyl, 2-hydroxy henicosenyl, 3-hydroxy docosenyl, 2-hydroxy tricosenyl, 23-hydroxy tetracosenyl, 1-methoxy ethenyl, 2-methoxy propenyl, 4-methoxy butenyl, 3-methoxy pentenyl, 5-methoxy hexenyl, 2-methoxy heptenyl, 5-methoxy octenyl, 3-methoxy nonenyl, 6-methoxy undecenyl, 1-methoxy dodec-2-enyl, 1-methoxy tridec-5-enyl, 3-methoxy tetradic-5-enyl, 3-methoxy pentade-12-encyl, 10-methoxy hexadec-15-enyl, 12-methoxy heptadic-16-enyl,1-methoxy octadec-3-enyl, 1-methoxy nonadec-2-enyl, 1-methoxy eicos-20-enyl, 1-methoxy henicos-2-enyl, 1-methoxy docos-4-enyl, 1-methoxy tricos-22-enyl, 1-methoxy tetracos-23-enyl, 2-methoxy prop-1-enyl, 2-methoxy but-1-enyl, 2-methoxy pent-4-enyl, 2-methoxy hex-2-enyl, 2-methoxy hept-3-enyl, 2-methoxy oct-7-enyl, 2-methoxy non-5-enyl, 2-methoxy undec-10-enyl, 2-methoxy dodec-4-enyl, 2-methoxy tridec-12-enyl, 2-methoxy tetradic-10-enyl, 2-methoxy pentadec-14-enyl, 2-methoxy hexadec-1-enyl, 2-methoxy heptadic-1-enyl, 2-methoxy octadic-12-enyl, 2-methoxy nonadec-10-enyl, 2-methoxy eicos-18-enyl, 2-methoxy henicos-2-enyl, 2-methoxy docos-3-enyl, 20-methoxy tricos-2-enyl, 21-methoxy tetracos-4-enyl, 1-acetoxy ethenyl, 1-acetoxy prop-1-enyl, 1-acetoxy but-2-enyl, 1-acetoxy pent-4-enyl, 1-acetoxy hex-2-enyl, 1-acetoxy hept-1-enyl, 1-acetoxy oct-7-enyl, 1-acetoxy non-2-enyl, 5-acetoxy dec-3-enyl, 1-acetoxy undec-10-enyl, 1-acetoxy dodec-2-enyl, 1-acetoxy tridec-12-enyl, 10-acetoxy tetradec-2-enyl, 15-acetoxy pentadec-2-enyl, 10-acetoxy hexadec-2-enyl, 11-acetoxy heptadec-1-enyl, 13-acetoxy octadec-2-enyl, 1-acetoxy nonadec-14-enyl, 20-acetoxy eicos-19-enyl, 1-acetoxy henicos-2-enyl, 1-acetoxy docos-10-enyl, 1-acetoxy tricos-22-enyl, 1-acetoxy tetracos-23-enyl, 1-cyano eth-1-enyl, 1-cyano prop-2-enyl, 1-cyano but-2-enyl, 1-cyano pent-3-enyl, 1-cyano hex-5-enyl, 1-cyano hept-6-enyl, 1-cyano oct-2-enyl, 1-cyano non-3-enyl, 11-cyano undec-2-enyl, 10-cyano dodec-2-enyl, 10-cyano tridec-12-enyl, 1-cyano tetradec-3-enyl, 1-cyano pentadec-14-enyl, 1-cyano hexadec-15-enyl, 1-cyano heptadec-2-enyl, 1-cyano octadec-3-enyl, 1-cyano nonadec-18-enyl, 1-cyano eicos-10-enyl, 1-cyano henicos-20-enyl, 15-cyano docos-3-enyl, 1-cyano tricos-20-enyl, 1-cyano tetracos-2-enyl, 2-cyano prop-2-enyl, 2-cyano but-1-enyl, 2-cyano pent-1-enyl, 2-cyano hex-3-enyl, 2-cyano hept-6-enyl, 2-cyano oct-1-enyl, 2-cyano non-8-enyl, 2-cyano undec-10-enyl, 2-cyano dodec-1-enyl, 2-cyano tridec-12-enyl, 2-cyano tetradec-10-enyl, 2-cyano pentadec-3-enyl, 2-cyano hexadec-2-enyl, 2-cyano heptadec-1-enyl, 2-cyano octadec-12-enyl, 2-cyano nonadec-15-enyl, 2-cyano eicos-1-enyl, 2-cyano henicos-5-enyl, 2-cyano docos-20-enyl, 2-cyano tricos-22-enyl, 2-cyano tetracos-20-enyl, 1-thionyl eth-1-enyl, 1-thionyl prop-2-enyl, 1-thionyl but-2-enyl, 1-thionyl pent-4-enyl, 1-thionyl hex-2-enyl, 1-thionyl hept-5-enyl, 1-thionyl oct-3-enyl, 1-thionyl non-5-enyl, 1-thionyl undec-10-enyl, 1-thionyl dodec-11-enyl, 1-thionyl tridec-2-enyl, 1-thionyl tetradec-4-enyl, 1-thionyl pentadec-5-enyl, 1-thionyl hexadec-3-enyl, 1-thionyl heptadec-2-enyl, 1-thionyl octadec-3-enyl, 1-thionyl nonadec-15-enyl, 1-thionyl eicos-18-enyl, 1-thionyl henicos-20-enyl, 1-thionyl docos-21-enyl, 1-thionyl tricos-20-enyl and 1-thionyl tetracos-22-enyl.

In a preferred embodiment, the substituted or unsubstituted C₅-C₂₄ cycloalkyl refers to a monocyclic and bicyclic 5- to 24-membered saturated cycloaliphatic radical. Representative examples of unsubstituted or branched C₅-C₂₄ monocyclic and bicyclic cycloalkyl include, but are not limited to, cyclopentyl, cyclohexyl, cycloheptyl, cyclooctyl, bicyclo[2.2.1]heptyl, and bicyclo[3.1.1]heptyl.

In another preferred embodiment, the C₅-C₂₄ monocyclic and bicyclic cycloalkyl can be further branched with one or more equal or different alkyl groups such as methyl, ethyl, n-propyl, iso-propyl, n-butyl, iso-butyl, n-pentyl, iso-pentyl, neo-pentyl etc. The representative examples of branched C₃-C₁₀ monocyclic and bicyclic cycloalkyl include, but are not limited to, methyl cyclohexyl and dimethyl cyclohexyl.

In a preferred embodiment, the unsubstituted or substituted C₅-C₂₄ cycloalkenyl refers to a monocyclic and bicyclic 5- to 24-membered unsaturated cycloaliphatic radical which comprises one or more double bonds. Representative examples of C₅-C₂₄ cycloalkenyl include, but are not limited to, cyclopentenyl, cyclohexenyl, cycloheptenyl, cyclooctenyl, cyclononenyl or cyclodecenyl. These radicals can be branched with one or more equal or different alkyl radical, preferably with methyl, ethyl, n-propyl or iso-propyl. The representative examples of branched C₅-C₂₄ monocyclic and bicyclic cycloalkenyl include, but are not limited to, methyl cyclohexenyl and dimethyl cyclohexenyl.

In a preferred embodiment, the substituted or unsubstituted C₆-C₂₄ aryl may have more than one aromatic ring. The representative examples for substituted and unsubstituted C₆-C₂₄ aryl include phenyl, naphthyl, anthracenyl, tetraphenyl, phenalenyl and phenanthrenyl.

In a preferred embodiment, the arylalkyl refers to an aryl ring attached to an alkyl chain. The representative examples for the arylalkyl include, but are not limited to, 1-phenylmethyl, 1-phenylethyl, 1-phenylpropyl, 1-phenylbutyl, 1-methyl-1-phenyl-propyl, 3-phenylpropyl, 4-phenylbutyl, 3-phenylbutyl and 2-methyl-3-phenyl-propyl.

In a preferred embodiment, the substituted C₆-C₂₄ aryl refers to an aromatic ring having substitution at different positions. The C₆-C₂₄ aryl may have more than one aromatic ring. The representative examples for substituted and unsubstituted C₆-C₂₄ aryl include tolyl, xylyl, 2-hydroxyphenyl, 2,3-dihydroxyphenyl, 2-methoxy phenyl, 2-hydroxy-4-methoxyphenyl, 2,4-dimethoxyphenyl, 2-chlorophenyl, 2-chloro-4-hydroxyphenyl, 2-chloro-4-methoxy phenyl, 3-chloro-4-methoxyphenyl, 2-methyl-4-methoxy-6-chlorophenyl and 2-acetyl-4-hydroxyphenyl.

In a preferred embodiment, C₁-C₁₄ heteroalkyl refers to acyclic saturated hydrocarbon residues having at least one heteroatom selected from 'O' or 'S', which may be acyclic saturated hydrocarbon chains. More preferably, 'O' is the most preferred heteroatom in "heteroalkylene". Representative examples of the alkylene groups include, but are not limited to, (-CH₂-O-CH₂-)₁₋₅₀₀CH₃, (-CH₂-O-CH(CH₃)-)_{1- 500}CH₃, -CH₂-O-CH(CH₃)₂, -CH₂-O-CH(CH₂CH₃)₂, -CH₂-O-CH(n-C₃H₇)₂, -CH₂-O-CH(n-C₄H₉)₂, -CH₂-O-CH(n-C₅H₁₁)₂, -CH₂-O-CH(n-C₆H₁₃)₂, -CH₂-O-CH(n-C₇H₁₅)₂, -CH₂-O-CH(n-C₈H₁₇)₂, -CHO-(CH₃)-CHO-(CH₃)₂, -CH₂-O-C(CH₃)₂-CH₃, -CH₂-[O-C(CH₃)₂]₂-CH₃, -(CH₂)₃-O-CH₃, -(CH₂)₄-O-CH₃, -(CH₂)₅-O-CH₃, - (CH₂)₆-O-CH₃, -(CH₂)₈-OCH₃₋, -(CH₂)₁₀-O-CH₃, -(CH₂)₇-O-CH₃, -(CH₂)₉-O-CH₃, -(CH₂)₁₁-O-CH₃, - (CH₂)₁₂-O-CH₃, -(CH₂)₁₃-O-CH₃.

In a preferred embodiment, C₂-C₂₄ heteroalkenyl refers to an alkenyl as described above radical in which one or more carbon atoms are each replaced by a heteroatom independently selected from the group consisting of oxygen, sulfur and nitrogen (NH) were replaced. Heteroalkenyl residues can preferably have 1, 2 or 3 heteroatom (s) independently selected from the group consisting of oxygen, sulfur and nitrogen (NH) as chain link (s) have. Heteroalkenyl residues can preferably be 2- to 24-membered, most preferably 2- to 12-membered and in particular 2- to 6-membered.

In another preferred embodiment, the heteroalkenyl residues are, for example, -CH ₂ -O-CH = CH _{2,} - CH = CH- 0-CH = CH-CH _{3,} -CH ₂ -CH ₂ -O-CH = CH _{2,} -CH ₂ - S-CH = CH _{2,} -CH = CH-S-CH = CH-CH _{3,} - CH ₂ -CH ₂ -S-CH = CH _{2,} -CH ₂ -NH-CH = CH _{2,} -CH = CH = CH-CH ₃ and -CH ₂ -CH ₂ -NH-CH - NH-CH = CH₂, -CH ₂ -O- CH = CH- (CH₂) -OH, -CH ₂ -S-CH = CH- (CH ₂) -NH ₂ and -CH ₂ -NH-CH = CH-CN.

In a preferred embodiment, C₅-C₂₄ heterocycloalkyl refers to a cyclic saturated hydrocarbon residue with preferably 5, 6, 7, 8, 9, 10, 11, 12, 13, 14, 15, 16, 17, 18, 19, 20, 21, 22, 23or 24 C atoms, particularly preferably with 5, 6, 7, 8 or 9 C atoms, very particularly preferably with 5 or 6 C atoms, in which one or more C-atoms have been replaced each independently selected from the group consisting of oxygen, sulfur and nitrogen (NH), respectively by a hetero atom. heterocycloalkyl residues can preferably have 1, 2 or 3 heteroatom (s) independently selected from the group consisting of oxygen, sulfur and nitrogen (NH) as ring member (s). A heterocycloalkyl group can be unsubstituted or monosubstituted or polysubstituted by identical or different substituents. heterocycloalkyl- residues may preferably be 5- to 9-membered and particularly preferably 5- to 7-membered.

In another preferred embodiment, 5- to 9-membered heterocycloalkyl residues which can be unsubstituted or mono- or polysubstituted are, for example, imidazolidinyl, tetrahydrofuranyl, tetrahydrothiophenyl, pyrrolidinyl, piperidinyl, morpholinyl, piperazinyl, thiomorpholinyl, tetrahydropyranyl, azepanyl, azocanyl, diazepanyl, dithiolanyl, (1, 3) dioxolan-2-yl, isoxazolidinyl, isothioazolidinyl, pyrazolidinyl, oxazolidinyl, (1, 2,4) -oxadiazolidinyl, (1, 2,4) -thiadiazolidinyl, (1, 2,4) - triazolidin-3-yl, (1, 3,4) -thiadiazolidin-2-yl, (1, 3,4) -triazolidin-1-yl, (1, 3,4) - triazoldidin-2-yl, tetrahydropyridazinyl, tetrahydropyrimidinyl, tetrahydropyrazinyl, (1, 3,5) -tetrahydrotriazinyl, (1, 2,4) - tetrahydrotriazin-1-yl, (1, 3) -dithian-2-yl, and (1, 3) - called thiazolidinyl. As suitable 5- to 7-membered heterocycloalkyl radicals include, for example, imidazolidinyl, tetrahydrofuranyl, tetrahydrothiophenyl, pyrrolidinyl, piperidinyl, morpholinyl, piperazinyl, thiomorpholinyl, tetrahydropyranyl, oxetanyl, azepanyl, diazepanyl and (1, 3) mentioned dioxolan-2-yl.

In a preferred embodiment, C₅-C₂₄ heterocycloalkenyl refers to a cyclic unsaturated hydrocarbon residue preferably 5, 6, 7, 8, 9, 10, 11, 12, 13, 14, 15, 16, 17, 18, 19, 20, 21, 22, 23or 24 C atoms, particularly preferably with 5, 6, 7, 8 or 9 C atoms, very particularly preferably with 5 or 6 C atoms with at least one double bond, preferably one double bond, and having been in the replaced one or more C atoms in each case by a heteroatom mutually independently selected from the group consisting of oxygen, sulfur and nitrogen (NH) . heterocycloalkenyl residues can preferably have 1, 2 or 3 heteroatom (s) independently selected from the group consisting of oxygen, sulfur and nitrogen (NH) as ring member (s) have. A heterocycloalkenyl residue can be unsubstituted or monosubstituted or polysubstituted by identical be or different substituents. heterocycloalkenyl residues may preferably be 5- to 9-membered, particularly preferably 5- to 7-membered.

In another preferred embodiment, the heterocycloalkenyl residues or as suitable 5- to 7-membered heterocycloalkenyl residues which can be unsubstituted or monosubstituted or polysubstituted, are for example (2,3) -dihydrofuranyl, (2,5) -dihydrofuranyl, (2, 3) - dihydrothienyl, (2,5) -dihydrothienyl, (2,3) -dihydropyrrolyl, (2,5) -dihydropyrrolyl, (2,3) - dihydroisoxazolyl, (4,5) -dihydroisoxazolyl, (2.5) - dihydroisothiazolyl, (2,3) - dihydropyrazolyl, (4,5) -dihydropyrazolyl, (2,5) -dihydropyrazolyl, (2,3) - dihydrooxazolyl, (4,5) -dihydrooxazolyl, (2,5) -dihydrooxazolyl , (2,3) -dihydrothiazolyl, (4,5) - dihydrothiazolyl, (2,5) -dihydrothiazolyl, (2,3) -dihydroimidazolyl, (4,5) - dihydroimidazolyl, (2,5) - dihydroimidazolyl, ( 3,4,5,6) -tetrahydropyridine-2-yl, (1, 2,5,6) - tetrahydropyridin-1-yl, (1, 2 -yl) - dihydropyridin-1, (1, 4) -dihydropyridin -1-yl, dihydropyranyl and (1, 2,3,4) called -tetrahydropyridine-1-yl.

In a preferred embodiment, C₁-C₂₄ heteroaryl refers to a monocyclic or polycyclic, preferably a mono-, bi- or tricyclic, aromatic hydrocarbon residue with preferably 5, 6, 7, 8, 9, 10, 11, 12, 13, 14, 15, 16, 17, 18, 19, 20, 21, 22, 23or 24 C atoms, particularly preferably with 5, 6, 7, 8, 9, 10, 11, 12, 13 or 14 C-atoms, very particularly preferably with 5 or 6 C atoms, in which one or more C-atoms independently selected from each other by a heteroatom selected from the group have been replaced consisting of oxygen, sulfur and nitrogen (NH). Heteroaryl radicals can preferably have 1, 2, 3, 4 or 5, particularly preferably 1, 2 or 3, heteroatom (s) independently selected from the group consisting of oxygen, sulfur and nitrogen (NH) as ring member (s) have. A heteroaryl radical may be unsubstituted or monosubstituted or polysubstituted by identical or different substituents.

In another preferred embodiment, the C₁-C₂₄ heteroaryl includes, but not limited to, indolizinyl, benzimidazolyl, tetrazolyl, triazinyl, isoxazolyl, phthalazinyl, carbazolyl, carbolinyl, diaza-naphthyl, thienyl, furyl, pyrrolyl, pyrazolyl, pyrazinyl, pyranyl, triazolyl, pyridinyl, imidazolyl, indolyl, isoindolyl, benzo [b] furanyl, benzo [b] thiophenyl, benzo [d] thiazolyl, Benzodiazolyl, benzotriazolyl, benzoxazolyl, benzisoxazolyl, thiazolyl, thiadiazolyl, oxazolyl, oxadiazolyl, isoxazolyl, pyridazinyl, pyrimidinyl, indazolyl, quinoxalinyl, quinazolinyl, quinolinyl, naphthridinyl and isoquinolinyl.

In another preferred embodiment, the heteroaryl radicals in the sense of the present invention fused with a mono- or bicyclic ring system. Examples of aryl residues which are fused with a mono- or bicyclic ring system include (2,3) -Dihydrobenzo [b] thiophenyl, (2,3) -dihydro-1H-indenyl, indolinyl, (2,3 ) - Dihydrobenzofuranyl, (2,3) -Dihydrobenzo [d] oxazolyl, benzo [d] [1, 3] dioxolyl, benzo [d] [1, 3] oxathiolyl, isoindolinyl, (1, 3) - Diyhydroisobenzofuranyl, (1 , 3) -Dihydrobenzo [c] thiophenyl, (1, 2,3,4) - tetrahydronaphthyl, (1, 2,3,4) -tetrahydroquinolinyl, chromanyl, thiochromanyl, (1, 2,3,4) - Tetrahydroisochinolinyl, (1, 2,3,4) -Tetrahydrochinoxalinyl, (3,4) -dihydro-2H-benzo [b] [1, 4] oxazinyl, (3,4) -dihydro-2H-benzo [b] [1, 4] thiazinyl, (2,3) - dihydrobenzo [b] [1, 4] dioxinyl, (2,3) -Dihydrobenzo [b] [1, 4] oxathiinyl, (6,7,8,9) - tetrahydro- 5H-benzo [7] annulenyl, (2,3,4,5) -tetrahydro-1H-benzo [b] azepinyl and (2,3,4,5) -tetrahydro-1H-benzo [c] azepinyl.

The representative example for -C(=O)-R include C(=O)-CH₃, C(=O)-C₂H₅, C(=O)-C₃H₇, C(=O)-C₄H₉, C(=O)-C₄H₇, C(=O)-C₆H₁₁, C(=O)-C₆H₉, C(=O)-C₉H₁₉, C(=O)-C₁₀H₁₉, C(=O)-C₁₀H₂₁, C(=O)-C₁₅H₃₁, C(=O)-C₁₃H₂₇, C(=O)-C₁₄H₂₉, C(=O)-C₁₅H₃₁ and C(=O)-C₂₀H₄₁.

The representative examples for OR include OCH₃, OC₂H₅, OC₃H₇, OC₄H₉, OC₄H₇, OC₅H₁₁, OC₆H₁₁, OC₆H₉, OC₇H₁₅, OC₈H₁₇, OC₉H₁₉, OC₁₀H₁₉, OC₁₀H₂₁, OC₁₅H₃₁, OC₁₃H₂₇, OC₁₄H₂₉, OC₁₅H₃₁ and OC₂₀H₄₁.

In a preferred embodiment, the R₁, R₂, R₃, R₄ and R₅ are independently NRR', wherein R and R' are independently selected from the group consisting of methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl eicosyl, henicosyl, docosyl, tricosyl, tetracosyl, isopropyl, iso-butyl, neo-pentyl, 2-ethyl-hexyl, 2-propyl-heptyl, 2-butyl-octyl, 2-pentyl-nonyl, 2-hexyl-decyl, iso-hexyl, iso-heptyl, iso-octyl, iso-nonyl, iso-decyl, iso-dodecyl, iso-tetradecyl, iso-hexadecyl, iso-octadecyl and iso-eicosyl.

In a preferred embodiment, the R₁, R₂, R₃, R₄ and R₅ are independently C(=O)-NRR', wherein R and R' are independently selected from the group consisting of methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl eicosyl, henicosyl, docosyl, tricosyl, tetracosyl, isopropyl, iso-butyl, neo-pentyl, 2-ethyl-hexyl, 2-propyl-heptyl, 2-butyl-octyl, 2-pentyl-nonyl, 2-hexyl-decyl, iso-hexyl, iso-heptyl, iso-octyl, iso-nonyl, iso-decyl, iso-dodecyl, iso-tetradecyl, iso-hexadecyl, iso-octadecyl and iso-eicosyl.

In a preferred embodiment, R₆, R₇ and R₈ are independently of each other selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₆-C₂₄ aryl, substituted or unsubstituted C₇-C₂₄ arylalkyl, substituted or unsubstituted C₅-C₂₄ cycloalkyl, substituted or unsubstituted C₅-C₂₄ cycloalkenyl, and C(=O)-R; more preferably, R₆, R₇ and R₈ are independently of each other selected from the group consisting of hydrogen, substituted or unsubstituted, linear or branched C₁-C₂₄ alkyl, substituted or unsubstituted C₆-C₂₄ aryl, substituted or unsubstituted C₇-C₂₄ arylalkyl, and C(=O)-R. Most preferably, R₆, R₇ and R₈ are independently of each other selected from the group consisting of hydrogen, substituted or unsubstituted, linear or branched C₁-C₂₄ alkyl, substituted or unsubstituted C₆-C₂₄ aryl and substituted or unsubstituted C₇-C₂₄ arylalkyl; and in particular R₆, R₇ and R₈ are independently of each other selected from the group consisting of hydrogen and substituted or unsubstituted, linear or branched C₁-C₂₄ alkyl.

In another preferred embodiment, the compound of formula (A) is selected from the group consisting of

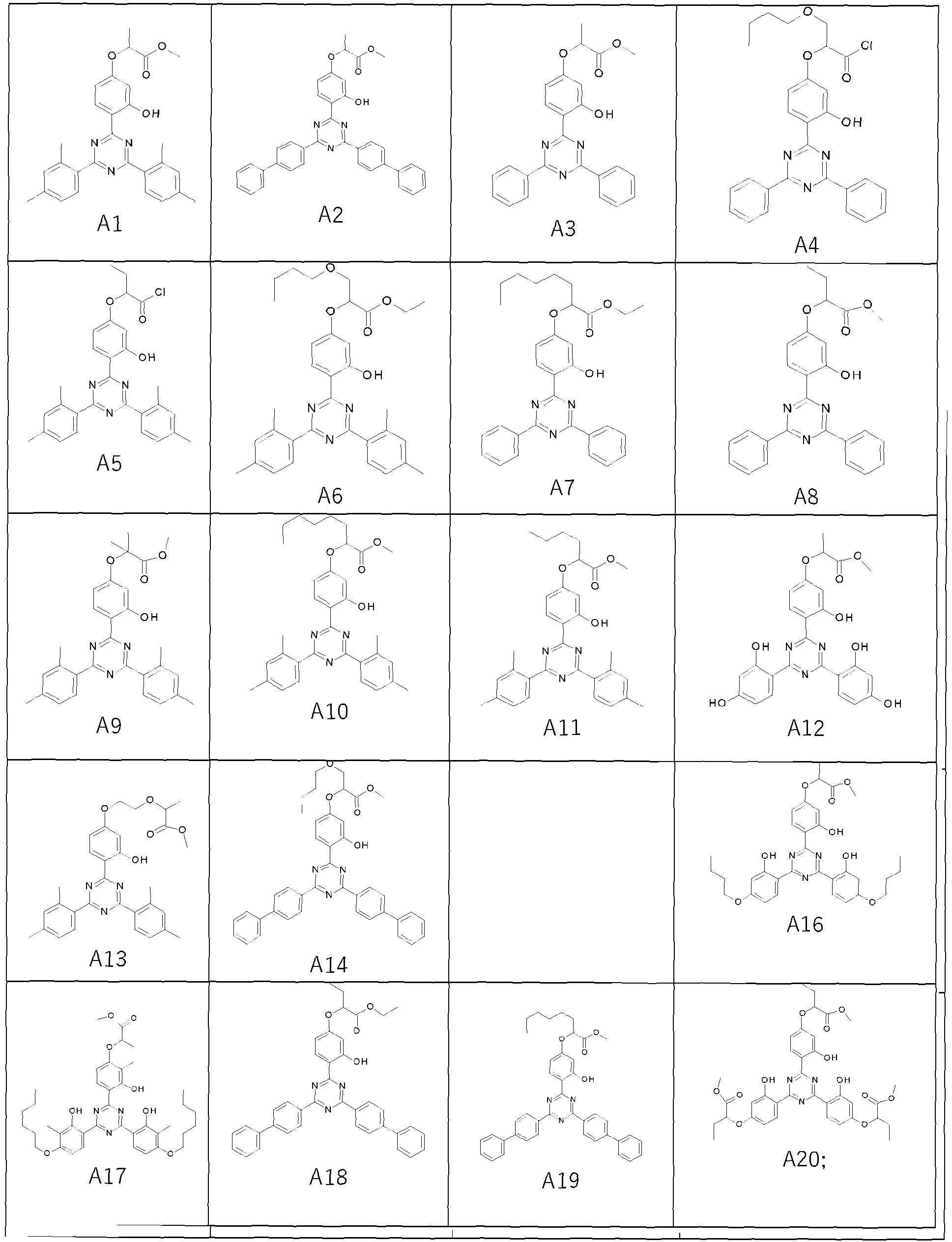

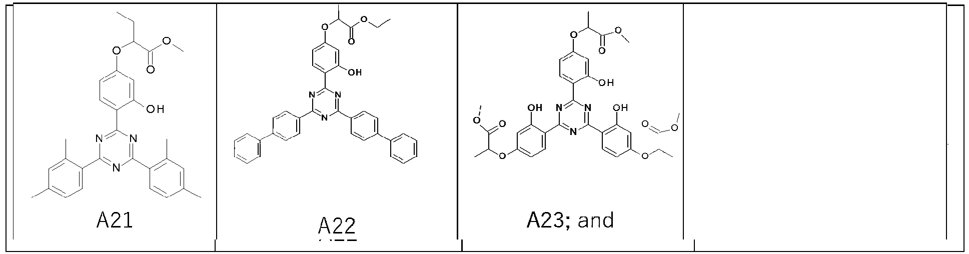

In another preferred embodiment, the compound of formula (C) is selected from the group consisting of polyglycerol-3, polyglycerol-4, polyglycerol-6, polyglycerol-10, polyglyceryl-10 stearate, polyglyceryl-10 oleate, polyglyceryl-10 laurate, polyglyceryl-10 dioleate, polyglyceryl-10 distearate, polyglyceryl-10 diisostearate, polyglyceryl-10 dipalmitate, polyglyceryl-2 caprate, polyglyceryl-2 caprylate, polyglyceryl-2 laurate, polyglyceryl-2 myristate, polyglyceryl-2 isopalmitate, polyglyceryl-2 palmitate, polyglyceryl-2 isostearate, polyglyceryl-2 stearate, polyglyceryl-2 oleate, polyglyceryl-2 isopalmitate/sebacate, polyglyceryl-3 caprate, polyglyceryl-3 laurate, polyglyceryl-3 myristate, polyglyceryl-3 palmitate, polyglyceryl-3 isostearate, polyglyceryl-3 oleate, polyglyceryl-3 stearate, polyglyceryl-3 ricinoleate, polyglyceryl-3 behenate, palm oil polyglyceryl-3 esters, polyglyceryl-3 beeswax, polyglyceryl-3 soyate/shea butterate, sunflower seed oil polyglyceryl-3 esters, polyglyceryl-3 diisostearate, polyglyceryl-3 triisostearate, polyglyceryl-4 caprate, polyglyceryl-4 laurate, polyglyceryl-4 myristate, polyglyceryl-4 palmitate, polyglyceryl-4 isostearate, polyglyceryl-4 oleate, polyglyceryl-4 stearate, polyglyceryl-4 ricinoleate, polyglyceryl-4 behenate, palm oil polyglyceryl-4 esters, polyglyceryl-4 beeswax, polyglyceryl-4 soyate/shea butterate, sunflower seed oil polyglyceryl-4 esters, polyglyceryl-4 dilaurate, polyglyceryl-4 distearate, polyglyceryl-4 tristearate, polyglyceryl-6 caprate, polyglyceryl-6 laurate, polyglyceryl-6 myristate, polyglyceryl-6 palmitate, polyglyceryl-6 isostearate, polyglyceryl-6 oleate, polyglyceryl-6 stearate, polyglyceryl-6 ricinoleate, polyglyceryl-6 behenate, palm oil polyglyceryl-6 esters, polyglyceryl-6 beeswax, polyglyceryl-6 soyate/shea butterate, sunflower seed oil polyglyceryl-6 esters, polyglyceryl-6 dilaurate, polyglyceryl-6 distearate, polyglyceryl-6 tristearate, polyglyceryl-6 dioleate, polyglyceryl-6 tetraoleate, polyglyceryl-6 triisostearate, polyglyceryl-6 pentastearate, polyglyceryl-6 trioleate, polyglyceryl-6 dicaprylate, polyglyceryl-6 dicaprate, polyglyceryl-6 tricaprylate, polyglyceryl-10 caprate, polyglyceryl-10 laurate, polyglyceryl-10 myristate, polyglyceryl-10 palmitate, polyglyceryl-10 isostearate, polyglyceryl-10 oleate, polyglyceryl-10 stearate, polyglyceryl-10 ricinoleate, polyglyceryl-10 behenate, palm oil polyglyceryl-10 esters, polyglyceryl-10 beeswax, polyglyceryl-10 soyate/shea butterate, sunflower seed oil polyglyceryl-10 esters, polyglyceryl-10 dilaurate, polyglyceryl-10 distearate, polyglyceryl-10 tristearate, polyglyceryl-10 dioleate, polyglyceryl-10 tetraoleate, polyglyceryl-10 triisostearate, polyglyceryl-10 pentastearate, polyglyceryl-10 trioleate, polyglyceryl-10 dicaprylate, polyglyceryl-10 dicaprate, polyglyceryl-10 tricaprylate, polyglyceryl-10 trilaurate, polyglyceryl-10 tetralaurate, polyglyceryl-10 pentahydroxystearate, polyglyceryl-20 hexacaprylate, polyglyceryl-20 heptacaprylate, polyglyceryl-20 octaisononanoate, polyglyceryl-20 docosabehenate/isostearate, polyglyceryl-20 docosabehenate/laurate, polyglyceryl-20 docosabehenate/oleate and polyglyceryl-20 heptadecabehenate/laurate.

In another preferred embodiment, the at least one modified compound of formula (C) is obtained by reacting at least one compound of formula (C) with at least one alkyl polyester. In another embodiment, prior to obtaining modified compound of formula (C), the compound of formula (C) has at least two hydroxy functional groups. Thus, at least one hydroxy group is available for reaction with alkyl polyester and at least one hydroxy group is available for reacting with compound of formula (A).

in another preferred embodiment, the alkyl polyester is a reaction product of at least one alkyl alcohol selected from the group consisting of methanol, ethanol, propanol, butanol, and pentanol with at least one polycarboxylic acid selected from the group consisting of ethanedioic acid, propanedioic acid, butanedioic acid, pentanedioic acid, hexanedioic acid, heptanedioic acid, octanedioic acid, nonanedioic acid, decanedioic acid, undecanedioic acid, dodecanedioic acid, tridecanedioic acid, hexadecanedioic acid, heneicosadioic acid, docosanedioic acid, triacontanedioic acid, maleic acid, fumaric acid, glutaconic acid, traumatic acid, muconic acid, glutinic acid, citraconic acid, mesaconic acid, mesaconic acid, itaconic acid, 2-hydroxypropanedioic acid, oxopropanedioic acid, hydroxybutanedioic acid, 2,3-dihydroxybutanedioic acid, oxobutanedioic acid, dioxobutanedioic acid, 2-hydroxypentanedioic acid, 2,3,4-trihydroxypentanedioic acid, 3-oxopentanedioic acid, 2-oxopentanedioic acid, 2-aminopentanedioic acid, (2r,6s)-2,6-diaminoheptanedioic acid, saccaric acid, citric acid, isocitric acid, aconitic acid, propane-1,2,3-tricarboxylic acid, and agaric acid, more preferably the alkyl polyester is a reaction product of at least one alkyl alcohol selected from the group consisting of methanol, ethanol, and propanol with at least one polycarboxylic acid selected from the group consisting of pentanedioic acid, hexanedioic acid, heptanedioic acid, octanedioic acid, nonanedioic acid, decanedioic acid, undecanedioic acid, dodecanedioic acid, tridecanedioic acid, hexadecanedioic acid, heneicosadioic acid, docosanedioic acid, triacontanedioic acid, 2,3,4-trihydroxypentanedioic acid, propane-1,2,3-tricarboxylic acid, and agaric acid, most preferably the alkyl diester is a reaction product of at least one alkyl alcohol selected from the group consisting of methanol, and ethanol with at least one polycarboxylic acid selected from the group consisting of octanedioic acid, nonanedioic acid, decanedioic aci, undecanedioic acid, dodecanedioic acid, and agaric acid and in particular the alkyl diester is a reaction product of at least one alkyl alcohol selected from the group consisting of methanol, and ethanol with at least one polycarboxylic acid selected from the group consisting of octanedioic acid, decanedioic aci, undecanedioic acid, and dodecanedioic acid.

In another preferred embodiment, the mol ratio of the compound of formula (C) to the alkyl polyester is in the range of ≥ 1.0:10 to ≤ 10:1.0; more preferably the mol ratio of the compound of formula (C) to the alkyl polyester is in the range of ≥ 1.0:5.0 to ≤ 5:1.0; most preferably the mol ratio of the compound of formula (C) to the alkyl polyester is in the range of ≥ 1.0:3.0 to ≤ 3:1.0; and in particular preferably the mol ratio of the compound of formula (C) to the alkyl polyester is in the range of ≥ 1.0:2.0 to ≤ 2.0:1.0.

In another preferred embodiment, it is to be understood that the compound of formula (C) or modified compound of formula (C) has at least one, preferably multiple hydroxy groups available for reacting with compound of formula (A) to obtain UV absorbing polymer (E).

In another preferred embodiment, the compound of formula (C) or modified compound of formula (C) has hydroxy number in the range of ≥ 10 to ≤ 1000 mg KOH/g, more preferably the compound of formula (C) or modified compound of formula (C) has hydroxy number in the range of ≥ 50 to ≤ 1000 mg KOH/g, even more the compound of formula (C) or modified compound of formula (C) has hydroxy number in the range of ≥ 100 to ≤ 900 mg KOH/g, most preferably the compound of formula (C) or modified compound of formula (C) has hydroxy number in the range of ≥ 200 to ≤ 800 mg KOH/g, and in particular the compound of formula (C) or modified compound of formula (C) has hydroxy number in the range of ≥ 250 to ≤ 750 mg KOH/g.

In another preferred embodiment, the modified compound of formula (C) is obtained by reacting sebacic acid dialkyl ester with at least one compound of formula (C) selected from the group consisting of polyglycerol-3, polyglycerol-4, polyglycerol-6, polyglycerol-10, polyglyceryl-10 stearate, polyglyceryl-10 oleate, polyglyceryl-10 laurate, polyglyceryl-10 dioleate, polyglyceryl-10 distearate, polyglyceryl-10 diisostearate, polyglyceryl-10 dipalmitate, polyglyceryl-2 caprate, polyglyceryl-2 caprylate, polyglyceryl-2 laurate, polyglyceryl-2 myristate, polyglyceryl-2 isopalmitate, polyglyceryl-2 palmitate, polyglyceryl-2 isostearate, polyglyceryl-2 stearate, polyglyceryl-2 oleate, polyglyceryl-2 isopalmitate/sebacate, polyglyceryl-3 caprate, polyglyceryl-3 laurate, polyglyceryl-3 myristate, polyglyceryl-3 palmitate, polyglyceryl-3 isostearate, polyglyceryl-3 oleate, polyglyceryl-3 stearate, polyglyceryl-3 ricinoleate, polyglyceryl-3 behenate, palm oil polyglyceryl-3 esters, polyglyceryl-3 beeswax, polyglyceryl-3 soyate/shea butterate, sunflower seed oil polyglyceryl-3 esters, polyglyceryl-3 diisostearate, polyglyceryl-3 triisostearate, polyglyceryl-4 caprate, polyglyceryl-4 laurate, polyglyceryl-4 myristate, polyglyceryl-4 palmitate, polyglyceryl-4 isostearate, polyglyceryl-4 oleate, polyglyceryl-4 stearate, polyglyceryl-4 ricinoleate, polyglyceryl-4 behenate, palm oil polyglyceryl-4 esters, polyglyceryl-4 beeswax, polyglyceryl-4 soyate/shea butterate, sunflower seed oil polyglyceryl-4 esters, polyglyceryl-4 dilaurate, polyglyceryl-4 distearate, polyglyceryl-4 tristearate, polyglyceryl-6 caprate, polyglyceryl-6 laurate, polyglyceryl-6 myristate, polyglyceryl-6 palmitate, polyglyceryl-6 isostearate, polyglyceryl-6 oleate, polyglyceryl-6 stearate, polyglyceryl-6 ricinoleate, polyglyceryl-6 behenate, palm oil polyglyceryl-6 esters, polyglyceryl-6 beeswax, polyglyceryl-6 soyate/shea butterate, sunflower seed oil polyglyceryl-6 esters, polyglyceryl-6 dilaurate, polyglyceryl-6 distearate, polyglyceryl-6 tristearate, polyglyceryl-6 dioleate, polyglyceryl-6 tetraoleate, polyglyceryl-6 triisostearate, polyglyceryl-6 pentastearate, polyglyceryl-6 trioleate, polyglyceryl-6 dicaprylate, polyglyceryl-6 dicaprate, polyglyceryl-6 tricaprylate, polyglyceryl-10 caprate, polyglyceryl-10 laurate, polyglyceryl-10 myristate, polyglyceryl-10 palmitate, polyglyceryl-10 isostearate, polyglyceryl-10 oleate, polyglyceryl-10 stearate, polyglyceryl-10 ricinoleate, polyglyceryl-10 behenate, palm oil polyglyceryl-10 esters, polyglyceryl-10 beeswax, polyglyceryl-10 soyate/shea butterate, sunflower seed oil polyglyceryl-10 esters, polyglyceryl-10 dilaurate, polyglyceryl-10 distearate, polyglyceryl-10 tristearate, polyglyceryl-10 dioleate, polyglyceryl-10 tetraoleate, polyglyceryl-10 triisostearate, polyglyceryl-10 pentastearate, polyglyceryl-10 trioleate, polyglyceryl-10 dicaprylate, polyglyceryl-10 dicaprate, polyglyceryl-10 tricaprylate, polyglyceryl-10 trilaurate, polyglyceryl-10 tetralaurate, polyglyceryl-10 pentahydroxystearate, polyglyceryl-20 hexacaprylate, polyglyceryl-20 heptacaprylate, polyglyceryl-20 octaisononanoate, polyglyceryl-20 docosabehenate/isostearate, polyglyceryl-20 docosabehenate/laurate, polyglyceryl-20 docosabehenate/oleate and polyglyceryl-20 heptadecabehenate/laurate, more preferably the modified compound of formula (C) is obtained by reacting sebacic acid dimethyl ester or sebacic acid diethyl ester with at least one compound of formula (C) selected from the group consisting of polyglycerol-3, polyglycerol-4, polyglycerol-6, polyglycerol-10, polyglyceryl-10 stearate, polyglyceryl-10 oleate, polyglyceryl-10 laurate, polyglyceryl-10 dioleate, polyglyceryl-10 distearate, polyglyceryl-10 diisostearate, polyglyceryl-10 dipalmitate, polyglyceryl-2 caprate, polyglyceryl-2 caprylate, polyglyceryl-2 laurate, polyglyceryl-2 myristate, polyglyceryl-2 isopalmitate, polyglyceryl-2 palmitate, polyglyceryl-2 isostearate, polyglyceryl-2 stearate, polyglyceryl-2 oleate, polyglyceryl-2 isopalmitate/sebacate, polyglyceryl-3 caprate, polyglyceryl-3 laurate, polyglyceryl-3 myristate, polyglyceryl-3 palmitate, polyglyceryl-3 isostearate, polyglyceryl-3 oleate, polyglyceryl-3 stearate, polyglyceryl-3 ricinoleate, polyglyceryl-3 behenate, palm oil polyglyceryl-3 esters, polyglyceryl-3 beeswax, polyglyceryl-3 soyate/shea butterate, sunflower seed oil polyglyceryl-3 esters, polyglyceryl-3 diisostearate, polyglyceryl-3 triisostearate, polyglyceryl-4 caprate, polyglyceryl-4 laurate, polyglyceryl-4 myristate, polyglyceryl-4 palmitate, polyglyceryl-4 isostearate, polyglyceryl-4 oleate, polyglyceryl-4 stearate, polyglyceryl-4 ricinoleate, polyglyceryl-4 behenate, palm oil polyglyceryl-4 esters, polyglyceryl-4 beeswax, polyglyceryl-4 soyate/shea butterate, sunflower seed oil polyglyceryl-4 esters, polyglyceryl-4 dilaurate, polyglyceryl-4 distearate, polyglyceryl-4 tristearate, polyglyceryl-6 caprate, polyglyceryl-6 laurate, polyglyceryl-6 myristate, polyglyceryl-6 palmitate, polyglyceryl-6 isostearate, polyglyceryl-6 oleate, polyglyceryl-6 stearate, polyglyceryl-6 ricinoleate, polyglyceryl-6 behenate, palm oil polyglyceryl-6 esters, polyglyceryl-6 beeswax, polyglyceryl-6 soyate/shea butterate, sunflower seed oil polyglyceryl-6 esters, polyglyceryl-6 dilaurate, polyglyceryl-6 distearate, polyglyceryl-6 tristearate, polyglyceryl-6 dioleate, polyglyceryl-6 tetraoleate, polyglyceryl-6 triisostearate, polyglyceryl-6 pentastearate, polyglyceryl-6 trioleate, polyglyceryl-6 dicaprylate, polyglyceryl-6 dicaprate, polyglyceryl-6 tricaprylate, polyglyceryl-10 caprate, polyglyceryl-10 laurate, polyglyceryl-10 myristate, polyglyceryl-10 palmitate, polyglyceryl-10 isostearate, polyglyceryl-10 oleate, polyglyceryl-10 stearate, polyglyceryl-10 ricinoleate, polyglyceryl-10 behenate, palm oil polyglyceryl-10 esters, polyglyceryl-10 beeswax, polyglyceryl-10 soyate/shea butterate, sunflower seed oil polyglyceryl-10 esters, polyglyceryl-10 dilaurate, polyglyceryl-10 distearate, polyglyceryl-10 tristearate, polyglyceryl-10 dioleate, polyglyceryl-10 tetraoleate, polyglyceryl-10 triisostearate, polyglyceryl-10 pentastearate, polyglyceryl-10 trioleate, polyglyceryl-10 dicaprylate, polyglyceryl-10 dicaprate, polyglyceryl-10 tricaprylate, polyglyceryl-10 trilaurate, polyglyceryl-10 tetralaurate, polyglyceryl-10 pentahydroxystearate, polyglyceryl-20 hexacaprylate, polyglyceryl-20 heptacaprylate, polyglyceryl-20 octaisononanoate, polyglyceryl-20 docosabehenate/isostearate, polyglyceryl-20 docosabehenate/laurate, polyglyceryl-20 docosabehenate/oleate and polyglyceryl-20 heptadecabehenate/laurate, and most preferably the modified compound of formula (C) is obtained by reacting sebacic acid dimethyl ester with at least one compound of formula (C) selected from the group consisting of polyglycerol-3, polyglycerol-4, polyglycerol-6, polyglycerol-10, polyglyceryl-10 stearate, polyglyceryl-10 oleate, polyglyceryl-10 laurate, polyglyceryl-10 dioleate, polyglyceryl-10 distearate, polyglyceryl-10 diisostearate, polyglyceryl-10 dipalmitate, polyglyceryl-2 caprate, polyglyceryl-2 caprylate, polyglyceryl-2 laurate, polyglyceryl-2 myristate, polyglyceryl-2 isopalmitate, polyglyceryl-2 palmitate, polyglyceryl-2 isostearate, polyglyceryl-2 stearate, polyglyceryl-2 oleate, polyglyceryl-2 isopalmitate/sebacate, polyglyceryl-3 caprate, polyglyceryl-3 laurate, polyglyceryl-3 myristate, polyglyceryl-3 palmitate, polyglyceryl-3 isostearate, polyglyceryl-3 oleate, polyglyceryl-3 stearate, polyglyceryl-3 ricinoleate, polyglyceryl-3 behenate, palm oil polyglyceryl-3 esters, polyglyceryl-3 beeswax, polyglyceryl-3 soyate/shea butterate, sunflower seed oil polyglyceryl-3 esters, polyglyceryl-3 diisostearate, polyglyceryl-3 triisostearate, polyglyceryl-4 caprate, polyglyceryl-4 laurate, polyglyceryl-4 myristate, polyglyceryl-4 palmitate, polyglyceryl-4 isostearate, polyglyceryl-4 oleate, polyglyceryl-4 stearate, polyglyceryl-4 ricinoleate, polyglyceryl-4 behenate, palm oil polyglyceryl-4 esters, polyglyceryl-4 beeswax, polyglyceryl-4 soyate/shea butterate, sunflower seed oil polyglyceryl-4 esters, polyglyceryl-4 dilaurate, polyglyceryl-4 distearate, polyglyceryl-4 tristearate, polyglyceryl-6 caprate, polyglyceryl-6 laurate, polyglyceryl-6 myristate, polyglyceryl-6 palmitate, polyglyceryl-6 isostearate, polyglyceryl-6 oleate, polyglyceryl-6 stearate, polyglyceryl-6 ricinoleate, polyglyceryl-6 behenate, palm oil polyglyceryl-6 esters, polyglyceryl-6 beeswax, polyglyceryl-6 soyate/shea butterate, sunflower seed oil polyglyceryl-6 esters, polyglyceryl-6 dilaurate, polyglyceryl-6 distearate, polyglyceryl-6 tristearate, polyglyceryl-6 dioleate, polyglyceryl-6 tetraoleate, polyglyceryl-6 triisostearate, polyglyceryl-6 pentastearate, polyglyceryl-6 trioleate, polyglyceryl-6 dicaprylate, polyglyceryl-6 dicaprate, polyglyceryl-6 tricaprylate, polyglyceryl-10 caprate, polyglyceryl-10 laurate, polyglyceryl-10 myristate, polyglyceryl-10 palmitate, polyglyceryl-10 isostearate, polyglyceryl-10 oleate, polyglyceryl-10 stearate, polyglyceryl-10 ricinoleate, polyglyceryl-10 behenate, palm oil polyglyceryl-10 esters, polyglyceryl-10 beeswax, polyglyceryl-10 soyate/shea butterate, sunflower seed oil polyglyceryl-10 esters, polyglyceryl-10 dilaurate, polyglyceryl-10 distearate, polyglyceryl-10 tristearate, polyglyceryl-10 dioleate, polyglyceryl-10 tetraoleate, polyglyceryl-10 triisostearate, polyglyceryl-10 pentastearate, polyglyceryl-10 trioleate, polyglyceryl-10 dicaprylate, polyglyceryl-10 dicaprate, polyglyceryl-10 tricaprylate, polyglyceryl-10 trilaurate, polyglyceryl-10 tetralaurate, polyglyceryl-10 pentahydroxystearate, polyglyceryl-20 hexacaprylate, polyglyceryl-20 heptacaprylate, polyglyceryl-20 octaisononanoate, polyglyceryl-20 docosabehenate/isostearate, polyglyceryl-20 docosabehenate/laurate, polyglyceryl-20 docosabehenate/oleate and polyglyceryl-20 heptadecabehenate/laurate.

In another preferred embodiment the compound of formula (C) obtained by reacting polyglycerol with caprolactam and/or caprolactone.

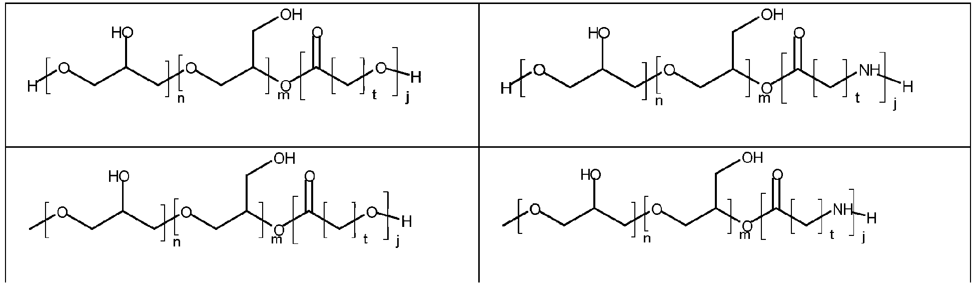

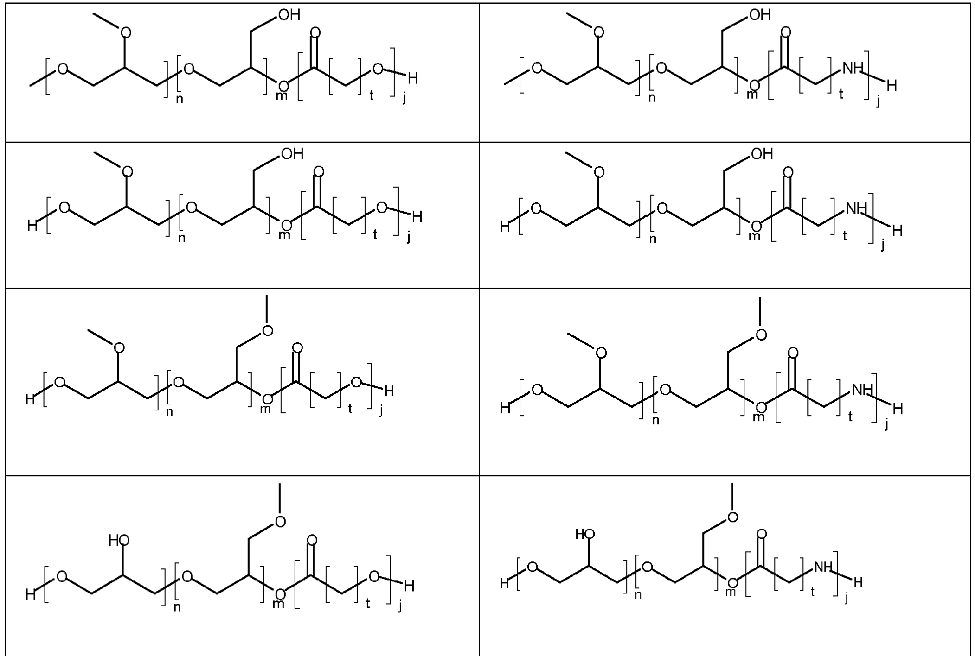

wherein each case "m" and "n" are independently from each other an integer from 1 to 20;
wherein m + n ≥ 2; "t" is an integer in the range of 4 to 11 and "j" is an integer in the range of 1 to 100; more preferably in each case "m" and "n" are independently from each other an integer from 1 to 20; wherein m + n ≥ 2; "t" is an integer in the range of 5 to 8 and "j" is an integer in the range of 1 to 50; even more preferably in each case "m" and "n" are independently from each other an integer from 1 to 10; wherein m + n ≥ 2; "t" is an integer in the range of 5 to 6 and "j" is an integer in the range of 1 to 30; most preferably in each case "m" and "n" are independently from each other an integer from 1 to 10; wherein m + n ≥ 2; "t" is an integer in the range of 5 to 6 and "j" is an integer in the range of 1 to 10; and in particular each case "m" and "n" are independently from each other an integer from 1 to 10; wherein m + n ≥ 2; "t" is an integer in the range of 5 to 6 and "j" is an integer in the range of 1 to 50.

In another preferred embodiment, the mol ratio of the compounds of formula (A) to the compounds of formula (C) (including the modified compounds of formula (C)) is in the range of ≥ 1.0:10 to ≤ 30:1.0; more preferably the mol ratio of the compounds of formula (A) to the compounds of formula (C) (including the modified compounds of formula (C)) is in the range of ≥ 1.0:5.0 to ≤ 20:1.0; most preferably the mol ratio of the compounds of formula (A) to the compounds of formula (C) (including the modified compounds of formula (C)) is in the range of ≥ 1.0:2.0 to ≤ 10:1.0; and in particular preferably the mol ratio of the compounds of formula (A) to the compounds of formula (C) (including the modified compounds of formula (C)) is in the range of ≥ 1.0:1.0 to ≤ 6.0:1.0.

In another preferred embodiment, the ultraviolet radiation absorbing polymer (E) has a weight average molecular weight in the range of ≥ 500 to 25000 g/mol, as determined according to GPC, preferably the ultraviolet radiation absorbing polymer (E) has a weight average molecular weight in the range of ≥ 500 to 20000 g/mol, as determined according to GPC; more preferably the ultraviolet radiation absorbing polymer (E) has a weight average molecular weight in the range of ≥ 1000 to 15000 g/mol, as determined according to GPC; even more preferably the ultraviolet radiation absorbing polymer (E) has a weight average molecular weight in the range of ≥ 1000 to 8000 g/mol, as determined according to GPC, most preferably the ultraviolet radiation absorbing polymer (E) has a weight average molecular weight in the range of ≥ 1200 to 5000 g/mol, as determined according to GPC and in particular preferably the ultraviolet radiation absorbing polymer (E) has a weight average molecular weight in the range of ≥ 1300 to 5000 g/mol, as determined according to GPC.

In another preferred embodiment, the ultraviolet radiation absorbing polymer (E) has a number average molecular weight in the range of ≥ 500 to 10000 g/mol, as determined according to GPC, more preferably the ultraviolet radiation absorbing polymer (E) has a number average molecular weight in the range of ≥ 500 to 5000 g/mol, as determined according to GPC; most preferably the ultraviolet radiation absorbing polymer (E) has a number average molecular weight in the range of ≥ 500 to 3000 g/mol, as determined according to GPC; and in particular preferably the ultraviolet radiation absorbing polymer (E) has a number average molecular number in the range of ≥ 700 to 2600 g/mol, as determined according to GPC.

In another preferred embodiment, the ultraviolet radiation absorbing polymer (E)has UV absorbance in dichloromethane at 20 mg/L at 320 nm ≥ 0.05, more preferably the ultraviolet radiation absorbing polymer (E) has UV absorbance in dichloromethane at 20 mg/L at 320 nm ≥ 0.1, most preferably the ultraviolet radiation absorbing polymer (E)has UV absorbance in dichloromethane at 20 mg/L at 320 nm ≥ 0.2, and in particular preferably the ultraviolet radiation absorbing polymer (E) has UV absorbance in dichloromethane at 20 mg/L at 320 nm ≥ 0.3.

In another preferred embodiment, the presently claimed invention is directed to a method for preparing an ultraviolet radiation absorbing polymer (E) comprising the steps of:
i) mixing at least one compound of formula (A) and at least compound of formula (C) and/or at least one modified compound of formula (C) to obtain a mixture;
ii) heating the mixture obtained in step i. to a desired temperature to obtain ultraviolet radiation absorbing polymer (E); and
ii)isolating the ultraviolet radiation absorbing polymer (E) obtained in step ii).

In another preferred embodiment, the reaction is carried out with the help of a catalyst.

In another preferred embodiment the at least one catalyst is selected from the group consisting of acid and base.

In another preferred embodiment, the acidic catalysts are Lewis acids and Bronsted acids. Examples for Bronsted acid catalysts are hydrochloric, sulfonic and sulfuric acids. Examples for basic catalysts are alkaline metal alkoxides such as sodium methoxide, hydroxides such as NaOH or KOH as well as sodium or potassium carbonates.

In another preferred embodiment, the at least one catalyst is the transition metal compounds. The examples for transition-metal compounds are for example tin-based compounds such as dibutyltin oxide, dibutyltin dilaurate, stannous bis(2-ethylhexanoate), stannous dichloride, monobutyltin tris(2-ethylhexanoate), dibutyltin diacetate. Other examples are titanium-based catalysts like titanium alkoxides such as tetraisopropyl titanate or aluminum-based catalysts like aluminum chloride or aluminum alkoxides such as aluminum isopropoxide. Preferably a tin-based catalyst and more preferred dibutyltin oxide or dibutyltin dilaurate is used.

In a further preferred embodiment, the esterification / transesterification is carried out without an esterification / transesterification catalyst.

In a further preferred embodiment, the esterification / transesterification is carried out under intermittent or constant vacuum of less than 1013 mbar, preferably of less than 250 mbar and even more preferred of less than 100 mbar.

In another preferred embodiment, the step ii) is conducted at a temperature in the range of ≥ 100 to ≤ 300 °C, more preferably at a temperature in the range of ≥ 120 to ≤ 270 °C; even more preferably at a temperature in the range of ≥ 160 to ≤ 250 °C, and most preferably at a temperature in the range of ≥ 180 to ≤ 230 °C.

In another preferred embodiment, the steps i) to ii) are conducted in the presence or in the absence of at least one solvent.

In another preferred embodiment, the at least one solvent is selected from the group consisting of aromatic solvents, aliphatic solvents and ethers.

In another preferred embodiment, the aromatic hydrocarbons are selected from the group consisting of benzene, toluene, xylene, nitrobenzene, dinitrobenzene, chlorobenzene, dichlorobenzene, trichlorobenzene, fluorobenzene, difluoro benzene, trifluoro benzene, bromobenzene, dibromo benzene, tribromo benzene; more preferably the aromatic hydrocarbons are selected from the group consisting of benzene, nitrobenzene, dinitrobenzene, and toluene.

In another preferred embodiment, the aliphatic hydrocarbon solvent is selected from the group consisting of nitroalkanes, cyclohexane, dichloromethane, chloroform, carbon tetrachloride, dibromomethane, dichloroethane, 1,1,2,2-tetrachloroethane, acetone, acetic acid, n-heptane and isomers thereof, n-octane and isomers thereof, n-octane, n-nonane and isomers thereof, n-decane and isomers thereof, n-undecane and isomers thereof, n-dodecane and isomers thereof, n-tridecane and isomers thereof, n-tetradecane and isomers thereof, n-pentadecane and isomers thereof, n-hexadecane and isomers thereof, n-heptadecane and isomers thereof, n-octadecane and isomers thereof, n-nonadecane and isomers thereof, eicosane and isomers thereof, uneicosane and isomers thereof, docosane and isomers thereof, tricosane and isomers thereof, tetracosane and isomers thereof, pentacosane and isomers thereof, hexacosane and isomers thereof, heptacosane and isomers thereof, octacosane and isomers thereof, nonecosane and isomers thereof, triacontane and isomers thereof, paraffin oil, paraffin wax, alkyl substituted cyclohexane and isomers thereof, mineral spirits, mineral seal oil, perchloroethylene, cyclohexanone, D-limonene and naphtha.

In another preferred embodiment, the ether solvents are selected from the group consisting of di tert-butyl ether, dioxane and tetrahydrofuran.

In another preferred embodiment, the use of the UV absording polymer (E) and the salt thereof in a coating composition, more preferably the use of the UV absording polymer (E) and the salt thereof in a coating composition for automotive.

In another embodiment, the presently claimed invention is directed to a coating composition comprising at least one ultraviolet radiation absorbing polymer (E) or its salt thereof, more preferably a coating composition comprising at least one ultraviolet radiation absorbing polymer (E) or its salt thereof for automotive.

In another embodiment, coating composition comprises a coating resin; at least one ultraviolet radiation absorbing polymer (E) or its salt thereof; and a hindered amine light stabilizer (F).

In another preferred embodiment, the ultraviolet radiation absorbing polymer (E) is present from about 0.1 wt.% to about 25 wt.% on a total solid basis, more preferably the ultraviolet radiation absorbing polymer (E) is present from about 0.1 wt.% to about 15 wt.% on a total solid basis, even more preferably the ultraviolet radiation absorbing polymer (E) is present from about 0.25 wt.% to about 10 wt.% on a total solid basis, and most preferably the ultraviolet radiation absorbing polymer (E) is present from about 0.5 wt.% to about 5.0 wt.% on a total solid basis.

In another preferred embodiment, the coating resin is selected from the group consisting of a thermoset acrylic melamine resin, an acrylic urethane resin, an epoxy carboxy resin, a silane modified acrylic melamine, an acrylic resin with carbamate pendant groups crosslinked with melamine, and an acrylic polyol resin crosslinked with melamine containing carbamate groups.

In another preferred embodiment, the suitable coating resins include but are not limited to polyurethane resins, acrylate resins, and polyester resins which are customarily employed in basecoat and/or clear coat materials in the field of the automotive industry. More preferably, the coating resin is a polyurethane resin, in combination where appropriate with one or more polyacrylate resins and/or with one or more polyester resins.

In another preferred embodiment, the polyurethane resins can be prepared by reacting at least one polyol selected from the group consisting of polyester polyols and polyether polyols. The polyol may have a number-average molecular weight of 400 to 5000, and at least one polyisocyanate and also if desired, at least one compound containing at least one isocyanate-reactive functional group and at least one (potentially) anionic group in the molecule, if desired, at least one further compound containing at least one isocyanate-reactive functional group, and if desired, at least one compound with a number-average molecular weight of 60 to 600 daltons, containing hydroxyl and/or amino groups in the molecule, and, in the case of polyurethane resins used for aqueous coating materials, neutralizing the resultant reaction product. Polyurethane resins of this kind are described for example in EP 228 003 B and EP B574 417 B.

In another preferred embodiment, the polyurethane resins of this kind can be obtained, for example, by using as the isocyanate component isocyanates that are commonly used in the field of the paint industry. Some illustrative examples of the isocyanate include, but is not limited to, hexamethylene diisocyanate, octamethylene diisocyanate, decamethylene diisocyanate, dodecamethylene diisocyanate, tetradecamethylene diisocyanate, trimethylhexane diisocyanate, tetramethylhexane diisocyanate, isophorone diisocyanate, 2- isocyanatopropylcyclohexyl isocyanate, dicyclohexylmethane 2,4'-diisocyanate, dicyclohexylmethane 4,4 '-diisocyanate, 1,4- or 1,3-bis(isocyanatomethyl)cyclohexane, 1,4- or 1,3- or 1,2-diisocyanatocyclohexane, 2,4- or 2,6-diisocyanato-I-methylcyclo-hexane, diisocyanates derived from dimer fatty acids, as sold under the trade designation DDI 1410 by Henkel, I,8-diisocyanato-4-isocyanato-methyloctane, I,7-diisocyanato-4- isocyanatomethylheptane or I-isocyanato-2-(3-isocyanatopropyl)cyclohexane, tetramethylxylylene diisocyanates (TMXDI), or mixtures of these polyisocyanates. In some embodiments, the isocyanate is tetramethylxylylene diisocyanates (TMXDI) and/or isophorone diisocyanate. More preferably, the isocyanate is isophorone diisocyanate.

In another preferred embodiment, the suitable coating resins in base coat (pigmented) or clear coat coating materials, together with or instead of the polyurethane resins, also include acrylated polyurethane resins. Acrylated polyurethane resins can be prepared by polymerizing ethylenically unsaturated monomers in the presence of a polyurethane resin. In this context it is possible to use polyurethane resins without double bonds and/or polyurethane resins with double bonds.

In another preferred embodiment, the acrylated polyurethane resin has pendant and/or terminal double bonds. More referably, the acrylated polyurethane resin has pendant and/or terminal ethenylarylene groups.

In another preferred embodiment, the acrylated polyurethane resins with pendant and/or terminal double bonds can be prepared by reacting a polyurethane prepolymer containing at least one free isocyanate group with a compound which contains at least one ethylenically unsaturated double bond and one group that is reactive toward NCO groups, in particular a hydroxyl group or an amino group.

In another preferred embodiment, the acrylated polyurethane resins with pendant and/or terminal double bonds can also be obtained by reacting a polyurethane prepolymer containing at least one group that is reactive toward NCO groups, in particular at least one hydroxyl group or one amino group, with a compound which contains at least one ethylenically unsaturated double bond and one free isocyanate group.

In another preferred embodiment, the coating resin is a graft copolymer which can be prepared by polymerizing olefinically unsaturated monomers in the presence of the acrylated polyurethane resins having pendant and/or terminal double bonds. More preferably, the graft copolymer has a hydrophobic core which includes at least one copolymerized olefinically unsaturated monomer and a hydrophilic shell which includes at least one hydrophilic acrylated polyurethane and most preferably, the graft copolymer contains a hydrophobic core which includes at least one hydrophobic acrylated polyurethane and a hydrophilic shell which includes at least one copolymerized olefinically unsaturated monomer.

In another preferred embodiment, the non-limiting examples of acrylated polyurethane resins and graft copolymers prepared therefrom them are described WO 01/25307 A1 and in EP 787 159 B.

In another preferred embodiment, the polyurethane resin described herein can be used where appropriate in combination with one or more polyacrylate resins and/or with one or more polyester resins. Non-limiting examples of polyester resins include saturated or unsaturated polyester resins

In another preferred embodiment, the amount of coating resin in the coating composition provided herein is generally 10% to 99% by weight based on the solids content of the coating resin, more preferably the amount of coating resin present in the coating composition is 30% to 90% by weight based on the solids content of the coating resin.

In another preferred embodiment, the coating resin contains a cross-linking agent, more preferably the amount of crosslinking agent in the coating resin is 0 to 55% by weight based on the solids content of the coating resin and most preferably the amount of crosslinking agent present in the coating resin is 5% to 40% by weight based on the solids content of the coating resin.

In another preferred embodiment, the crosslinking agents are free isocyanates or blocked isocyanates and/or amino resins. Non-limiting suitable isocyanates include the isocyanates utilized to prepare polyurethane resins as described above and isocyanates that are commonly used in the paints industry. Preferably, the isocyanate is TACT, dimethylpyrazole-blocked trimeric hexamethylene diisocyanate, and/or trimeric hexamethylene diisocyanate.

In another preferred embodiment, the non-limiting examples of blocking agents include all commonly employed blocking agents, such as the corresponding alcohols, amines, ketones, pyrazoles, etc. In another preferred embodiment, the blocking agent has a deblocking temperature less than 130° C.

In another preferred embodiment, the non-limiting examples of amino resins include amino resins that are commonly used in the paints industry, the properties of the pigmented coating materials being controllable via the reactivity of the amino resins, more preferably the amino resin is a butanol-etherified amino resin. In another embodiment, the amino resin is Cymel^{®} 203.

In another preferred embodiment, the hindered amine light stabilizer (F) selected from the group consisting of: 1-cyclohexyloxy-2,2,6,6-tetramethyl-4-octadecylaminopiperidine; bis(2,2,6,6-tetramethylpiperidin-4-yl) sebacate; bis(1-acetoxy-2,2,6,6-tetramethylpiperidin-4-yl) sebacate; bis(1,2,2,6,6-pentamethyl-4-yl) sebacate; bis(1-cyclohexyloxy-2,2,6,6-tetramethylpiperidin-4-yl) sebacate; bis11-octyloxy-2,2,6,6-tetramethylpiperidin-4-yl) sebacate; bis(1-acyl-2,2,6,6-tetramethylpiperidin-4-yl) sebacate; bis(1,2,2,6,6-pentamethyl-4-piperidyl) n-butyl-3,5-di-tert-butyl-4- hydroxybenzylmalonate; 2,4-bis[(1-cyclohexyloxy-2,2,6,6-tetramethylpiperidin-4-yl)butylamino]-6-(2- hydroxyethylamino-s-triazine; bis(1-cyclohexyloxy-2,2,6,6-tetramethylpiperidin-4-yl) adipate; 2,4-bis[(1-cyclohexyloxy-2,2,6,6-piperidin-4-yl)butylamino]-6-chloro-s- triazine; 1-(2-hydroxy-2-methylpropoxy)-4-hydroxy-2,2,6,6-tetramethylpiperidine; I-(2-hydroxy-2-methylpropoxy)-4-oxo-2,2,6,6-tetramethylpiperidine; 1- (2-hydroxy-2-methylpropoxy)-4-octadecanoyloxy-2,2,6,6-tetramethyl- piperidine; bis(1-(2-hydroxy-2-methylpropoxy)-2,2,6,6-tetramethylpiperidin-4-yl)sebacate; bis(1-(2-hydroxy-2-methylpropoxy)-2,2,6,6-tetramethylpiperidin-4-yl)adipate; 2,4-bis{N-[1-(2-hydroxy-2-methylpropoxy)-2,2,6,6-tetramethylpiperidin-4- yl]-N-butylamino}-6-(2-hydroxyethylamino)-s-triazine; 4-benzoyl-2,2,6,6-tetramethylpiperidine; di-(1,2,2,6,6-pentamethylpiperidin-4-yl) p-methoxybenzylidenemalonate; 4-stearyloxy-2,2,6,6-tetramethylpiperidine; bis(1-octyloxy-2,2,6,6-tetramethylpiperidyl) succinate; 1,2,2,6,6-pentamethyl-4-aminopiperidine; 2- undecyl-7,7,9,9-tetramethyl-1-oxa-3,8-diaza-4-oxo-spiro[4,5]decane; tris(2,2,6,6-tetramethyl-4-piperidyl) nitrilotriacetate; tris(2-hydroxy-3-(amino-(2,2,6,6-tetramethylpiperidin-4-yl)propyl) nitrilotriacetate; tetrakis-(2,2,6,6-tetramethyl-4-piperidyl)-1,2,3,4-butane-tetracarboxylate; tetrakis-(1,2,2,6,6-pentamethyl-4-piperidyl)-1,2,3,4-butane-tetracarboxylate; 1, 1'-(1,2-ethanediyl)-bis-(3,3,5,5-tetramethylpiperazinone); 3- n-octyl-7,7,9,9-tetramethyl-1,3,8-triazaspiro[4.5]decan-2,4-dione; 8-acetyl-3-dodecyl-7,7,9,9-tetramethyl-1,3,8-triazaspiro[4.5]decane-2,4-dione; 3-dodecyl-1-(2,2,6,6-tetramethyl-4-piperidyl)pyrrolidin-2,5-dione; 3-dodecyl-1-(1,2,2,6,6-pentamethyl-4-piperidyl)pyrrolidine-2,5-dione; N,N'-bis-formyl-N,N'-bis(2,2,6,6-tetramethyl-4- piperidyl)hexamethylenediamine; the reaction product of 2,4-bis[(1-cyclohexyloxy-2,2,6,6-piperidin-4-yl)- butylamino]-6-chloro-s-triazine with N,N'-bis(3-aminopropyl)ethylenediamine) (CAS number 191680-81-6); the condensate of I-(2-hydroxyethyl)-2,2,6,6-tetramethyl-4-hydroxypiperidine and succinic acid (CAS number 65447-77-0); linear or cyclic condensates of N,N'-bis(2,2,6,6-tetramethyl-4-piperidyl)- hexamethylenediamine and 4-tert-octylamino-2,6-dichloro-1,3,5- triazine (CAS number 71878-19-8 and CAS number 70624-18-9); linear or cyclic condensates of N,N'-bis(2,2,6,6-tetramethyl-4-piperidyl)- hexamethylenediamine and 4-cyclohexylamino-2,6-dichloro-I,3,5- triazine;linear or cyclic condensates of N,N'-bis-(2,2,6,6-tetramethyl-4-piperidyl)- hexamethylenediamine and 4-morpholino-2,6-dichloro-I,3,5-triazine (CAS number 82451-48-7); linear or cyclic condensates of N,N'-bis-(1,2,2,6,6-pentamethyl-4-piperidyl)-hexamethylenediamine and 4-morpholino-2,6-dichloro-1,3,5-triazine (CAS number 193098-40-7); the condensate of 2-chloro-4,6-bis(4-n-butylamino-2,2,6,6- tetramethylpiperidyl)-1,3,5-triazine and 1,2-bis(3-amino- propylamino)ethane (CAS number 106990-43-6); the condensate of 2-chloro-4,6-di-(4-n-butylamino- 1,2,2,6,6- pentamethylpiperidyl)-1,3,5-triazine and I,2-bis-(3-aminopropylamino)ethane; a reaction product of 7,7,9,9-tetramethyl-2-cycloundecyl-1-oxa-3,8-diaza-4- oxospiro [4,5]decane and epichlorohydrin (CAS number 202483-55-4); poly[methyl,(3-oxy-(2,2,6,6-tetramethylpiperidin-4-yl)propyl)] siloxane (CAS number 164648-93-5); reaction product of maleic acid anhydride-C₁₈-C₂₂- *α* -olefin-copolymer with 2,2,6,6-tetramethyl-4-aminopiperidine (CAS number 152261-33-1); the oligomeric compound which is the condensation product of 4,4'-hexa- methylene-bis(amino-2,2,6,6-tetramethylpiperidine) and 2,4-dichloro- 6-[(2,2,6,6-tetramethylpiperidin-4-yl)butylamino]-s-triazine end- capped with 2-chloro-4,6-bis(dibutylamino)-s-triazine; the oligomeric compound which is the condensation product of 4,4'-hexa- methylenebis(amino-1,2,2,6,6-pentaamethylpiperidine) and 2,4- dichloro-6-[(1,2,2,6,6-pentaamethylpiperidin-4-yl)butylamino]-s-triazine end-capped with 2-chloro-4,6-bis(dibutylamino)-s-triazine (CAS number 192268-64-7); the oligomeric compound which is the condensation product of 4,4'-hexa- methylenebis(amino-1-propoxy-2,2,6,6-tetramethylpiperidine) and 2,4- dichloro-6-[(1-propoxy-2,2,6,6-tetramethylpiperidin-4-yl)butylamino]- s-triazine end-capped with 2-chloro-4,6-bis(dibutylamino)-s-triazine; the oligomeric compound which is the condensation product of 4,4'-hexa- methylenebis(amino-1-acyloxy -2,2,6, 6-tetramethylpiperi dine) and 2,4- dichloro-6-[(1-acyloxy-2,2,6,6-tetramethylpiperidin-4-yl)butylamino]-s-triazine end-capped with 2-chloro-4,6-bis(dibutylamino)-s-triazine ; product obtained by reacting a product, obtained by reacting 1,2-bis(3-amino- propylamino)ethane with cyanuric chloride, with (2,2,6,6-tetramethyl- piperidin-4-yl)butylamine (CAS number 136504-96-6); 1,6-hexanediamine,N1,N6-bis(2,2,6,6-tetramethyl-4-piperidinyl)-, polymer with 2,4,6-trichloro-1,3,5-triazine, reaction products with 3-bromo-1- propene, N-butyl-I-butanamine, and N-butyl-2,2,6,6-tetramethyl-4- piperidinamine,oxidized, hydrogenated (CAS number 247243-62-5); and a mixture of any two or more thereof.

In another preferred embodiment, the hindered amine light stabilizer (F) is present in the coating compositions provided herein in an amount from about 0.05 to about 20% by weight based on the weight of the coating resin solids, more preferably the amount of the hindered amine light stabilizer (F) present is from about 0.1 to about 10% by weight of the coating resin solids, even more preferably the amount of the hindered amine light stabilizer (F) present is from about 0.2 to about 8% by weight of the coating resin solids, and most preferably the amount of the hindered amine light stabilizer (F) present is from about 0.5 to about 3% by weight based on the weight of the coating resin solids.

In another preferred embodiment, the coating composition further comprises another ultraviolet light absorber selected from the group consisting of a hydroxyphenylbenzotriazole, a hydroxyphenyl-s-triazine, a benzophenone, an ester of a benzoic acid, an acrylate, a malonate, an oxamide, and a mixture of any two or more thereof.

In another preferred embodiment, the coating composition further comprises a hydroxyphenyl-s-triazine.

In another preferred embodiment, the coating composition further comprises at least one phenolic antioxidant selected from the group consisting of: n-octadecyl 3,5-di-tert-butyl-4-hydroxyhydrocinnamate; neopentanetetrayl tetrakis(3,5-di-tert-butyl-4-hydroxyhydrocinammate; di - n-octadecyl 3,5-di-tert-butyl-4-hydroxybenzylphosphonate; 1, 3, 5-tri s(3 , 5 -di-tert-butyl-4-hydroxybenzyl)isocyanurate; thiodiethylene bis(3,5-di-tert-butyl-4-hydroxyhydrocinnamate); 1,3,5-trimethyl-2,4,6-tris(3,5-di-tert-butyl-4-hydroxybenzyl)benzene; 3,6-dioxaoctamethylene bis(3-methyl-5-tert-butyl-4-hydroxyhydrocinnamate; 2,6-di-tert-butyl-p-cresol; 2,2'-ethylidene-bis(4,6-di-tert-butylphenol); 1, 3, 5-tris(2,6-dimethyl-4-tert-butyl-3-hydroxybenzyl)isocyanurate; 1,1,3,-tris(2-methyl-4-hydroxy-5-tert-butylphenyl)butane; 1,3,5-tris[2-(3,5-di-tert-butyl-4-hydroxyhydrocinnamoyloxy)ethyl] isocyanurate; 3,5-di-(3,5-di-tert-butyl-4-hydroxybenzyl)mesitol; hexamethylene bis(3,5-di-tert-butyl-4-hydroxyhydrocinnamate); 1-(3,5-di-tert-butyl-4-hydroxyanilino)-3,5-di(octylthio)-s-triazine; N,N'-hexamethylene-bis(3,5-di-tert-butyl-4-hydroxyhydrocinnamamide); calcium bis(ethyl 3,5-di-tert-butyl-4-hydroxybenzylphosphonate); ethylene bis[3,3-di(3-tert-butyl-4-hydroxyphenyl)butyrate]; octyl 3,5-di-tert-butyl-4-hydroxybenzylmercaptoacetate; bis(3,5-di-tert-outyl-4-hydroxyhydrocinnamoyl)hydrazide; N,N-di-(C₁₂-C₂₄alkyl)-N-methyl-amine oxide; and N,N-dialkylhydroxylamine prepared from di(hydrogenated tallow)amine by direct oxidation.

In another preferred embodiment, the additional ultraviolet light absorber and the phenolic antioxidants are present in the coating compositions in amount from 0.01% to about 5% by weight based on the weight of the coating resin solids, more preferably the amount of additional ultraviolet light absorber and phenolic antioxidant present are from about 0.025% to about 2% by weight based on the weight of the coating resin solids, and most preferably the amount of additional ultraviolet light absorber and phenolic antioxidant present are from about 0.1% to about 1% by weight based on the weight of the coating resin solids.

In another preferred embodiment, the additional ultraviolet light absorber is present at very low levels. Preferably the amount of additional ultraviolet light absorber present is from about 0.05% to about 3% by weight based on the weight of the coating resin solids, more preferably the amount of the additional ultraviolet light absorber present is from about 0.05% to about 0.5% by weight based on the weight of the coating resin solids, and most preferably the amount of the additional ultraviolet light absorber present is from about 0.05% to about 0.3% by weight based on the weight of the coating resin solids.

In another preferred embodiment, presently claimed invention is directed to a method of stabilizing a coating composition on a substrate toward ultraviolet radiation. The method includes applying the coating composition provided herein to the substrate.

In another preferred embodiment, the presently claimed invention is directed to a multicoat paint system. The multicoat paint system includes one or more primer layers, one or more pigmented coating layers disposed thereon, one or more transparent coating layers disposed atop the pigmented coating layer. The transparent coating layer includes a transparent coating resin, a triazine ultraviolet light absorber of Formula (I), and, optionally, a hindered amine light stabilizer (F), wherein the triazine ultralight absorber is covalently linked to the coating resin through R¹. More preferably, the covalent link between R¹ of the triazine ultralight absorber and the transparent coating resin is -OR⁵, - R⁵R⁵, - C(O)N(R⁵)₂, -C(O), -C(0)0, -C(O)R⁵, -C(O)OR⁵, -OC(O), or -OC(O)R⁵.

In another preferred embodiment, the transparent coating resin includes commonly employed transparent coating resins. Illustrative examples include but are not limited to commonly employed aqueous or solvent borne transparent coating resins, which may be formulated either as one-component materials, as two-component, or as multicomponent coating materials. Other non-limiting examples include powder slurry clearcoat materials.

In another preferred embodiment, the transparent coating resins may be curable thermally and/or by means of radiation, in particular by means of UV radiation.

In another preferred embodiment, the transparent coating resin includes at least one binder containing functional groups and also at least one crosslinker having a functionality which is complementary to the functional groups of the binder. Examples of complementary functionalities include but are not limited to carboxyl/epoxy, amine, or thiol; hydroxyl/blocked or free isocyanate, alkoxylated amino groups, or transesterifiable groups; (meth)acryloyl/CH-acidicamine, hydroxyl, or thiol; carbamate/alkoxylated amino groups, and (meth)acryloyl/(meth)acryloyl.

In another preferred embodiment, the transparent coating resin is based on polyurethane resins and/or polyacrylate resins and/or polyester resins in combination with corresponding crosslinkers, more preferably the polyurethane resin, polyacrylate resin, and/or polyester resin contain hydroxyl, amino, carbamate, carboxyl, (meth)acryloyl and/or thiol groups and the cross-linkers include but are not limited to isocyanates, amino resins, anhydrides, and the like

In another preferred embodiment, the transparent coating resins also include customary auxiliaries and additives. Non-limiting examples include crosslinking catalysts, defoamers, adhesion promoters, additives for improving substrate wetting, additives for improving surface smoothness, matting agents, light stabilizers and/or HALS, corrosion inhibitors, biocides, flame retardants or polymerization inhibitors.

In another preferred embodiment, the multicoat paint systems provided herein are employed in particular in the sector of automotive OEM finishing, but also in the sectors of commercial vehicle finishing and automotive refinishing and are used for coating motor vehicle bodies or interior body components or exterior body components. The multicoat paint systems are also suitable, for other sectors, such as for the coating of components for marine and aircraft construction or of components for household and electrical appliances or parts thereof.

In another preferred embodiment, the clear coating composition includes oligomers and polymers containing a reactive functionality capable of undergoing a crosslinking reaction and a cross-linking agent.

In another preferred embodiment, the reactive functionality includes but is not limited to primary carbamate groups and functional groups convertible to primary carbamate groups, preferably hydroxyl, amine, acid, epoxy functionalities, and mixtures thereof.

In another preferred embodiment, the coating composition comprises a durability enhancing agent.

In another preferred embodiment, the durability enhancing agent is provided. The durability enhancing agent includes a reaction product between a) ultraviolet light absorbers (UVA) and mixtures thereof having a reactive functionality thereon; and b) a non-acrylic monomeric, oligomeric or polymeric component, having a reactive functionality thereon to react with the reactive functionality of a), wherein either a) or b) includes more than one carbamate functional group, a group convertible to a carbamate group, or a group that crosslinks with a carbamate functional group, and the reaction product is a polymer-covalently bound UVA that includes more than one carbamate functional group, group convertible to a carbamate group, or a group that crosslinks with a carbamate functional group. The UVA may be the ultraviolet radiation absorbing polymer (E) or a salt thereof as defined above.

The presently claimed invention is associated with at least one of the following advantages:
- The hydroxy groups of the ultraviolet radiation absorbing polymer (E) covalently bond with the other component in the coating composition and eliminate the migration of the UV absorber.
- The ultraviolet radiation absorbing polymer (E) of the presently claimed invention evenly disperse the coating composition as it covalently bond with other components.
- The ultraviolet radiation absorbing polymer (E) of the presently claimed invention does not impact negatively on the secondary film properties such as the gloss and the color.

### Embodiments:

In the following, there is provided a list of embodiments to further illustrate the present disclosure without intending to limit the disclosure to the specific embodiments listed below.
1. An ultraviolet radiation absorbing polymer (E) or a salt thereof obtained by:
   i.reacting at least one compound of formula (A) 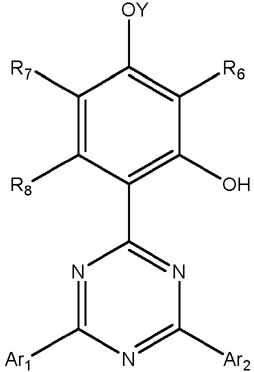 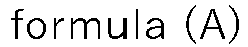
      wherein Ar₁ and Ar₂ are independently of each other a moiety of the formula (B), 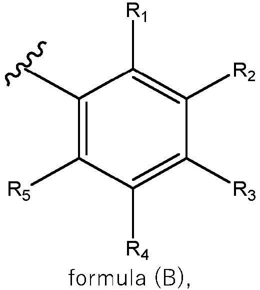
      wherein R₁, R₂, R₃, R₄ and R₅ are independently of each other selected from the group consisting of hydrogen, halogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl, substituted or unsubstituted C₁-C₂₄ heteroaryl, substituted or unsubstituted C₇-C₂₄ arylalkyl, C(=O)-R, substituted or unsubstituted, linear or branched C₁-C₂₄ heteroalkyl, substituted or unsubstituted, linear or branched C₂-C₂₄ heteroalkenyl, substituted or unsubstituted C₅-C₂₄ heterocycloalkyl, substituted or unsubstituted C₅-C₂₄ heterocycloalkenyl, OR, NRR' and C(=O)-NRR';
         or
      R₁ and R₂ together with the carbon atoms to which they are bonded or
      R₂ and R₃ together with the carbon atoms to which they are bonded or
      R₃ and R₄ together with the carbon atoms to which they are bonded or
      R₄ and R₅ together with the carbon atoms to which they are bonded form an unsaturated or aromatic 5- to 20-membered carbocyclic ring that optionally contains 1, 2 or 3 heteroatom(s) selected from O, N or S as ring member(s);
      R₆, R₇ and R₈ are independently of each other selected from the group consisting of hydrogen, halogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, C(=O)-R, substituted or unsubstituted, linear or branched C₁-C₂₄ heteroalkyl, substituted or unsubstituted, linear or branched C₂-C₂₄ heteroalkenyl, substituted or unsubstituted C₅-C₂₄ hetrocycloalkyl, substituted or unsubstituted C₅-C₂₄ heterocycloalkenyl and OR,
         or
      R₇ and R₈ together with the carbon atoms to which they are bonded form an unsaturated or aromatic 5- to 20-membered carbocyclic ring that optionally contains 1, 2 or 3 heteroatom(s) selected from O, N or S as ring member(s);
      R and R' are independently of each other selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄aryl and substituted or unsubstituted C₇-C₂₄ arylalkyl;
      Y is a formula -CR₁₁R₁₂R₁₃; with a proviso wherein at least one of the R₁₁, R₁₂ and R₁₃ contains at least one functional group selected from the group consisting of -C(=O)OR", -C(=O)Cl, -C(=O)NH₂ and - C(=O)NHR";
      wherein R₁₁ and R₁₂ are independently of each other selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl, substituted or unsubstituted C₇-C₂₄ arylalkyl, C₁-C₂₄ alkyloxy, substituted or unsubstituted, linear or branched C₂-C₂₄ alkenyloxy, substituted or unsubstituted C₅-C₂₄ cycloalkyloxy, substituted or unsubstituted C₅-C₂₄ cycloalkenyloxy, substituted or unsubstituted C₆-C₂₄ aryloxy and substituted or unsubstituted C₇-C₂₄ arylalkyloxy;
      R₁₃ is selected from the group consisting of substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl, substituted or unsubstituted C₇-C₂₄ arylalkyl, C₁-C₂₄ alkyloxy, substituted or unsubstituted, linear or branched C₂-C₂₄ alkenyloxy, substituted or unsubstituted C₅-C₂₄ cycloalkyloxy, substituted or unsubstituted C₅-C₂₄ cycloalkenyloxy, substituted or unsubstituted C₆-C₂₄ aryloxy and substituted or unsubstituted C₇-C₂₄ arylalkyloxy;
      wherein R" is selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl and substituted or unsubstituted C₇-C₂₄ arylalkyl; and
   ii.at least one compound of formula (C), 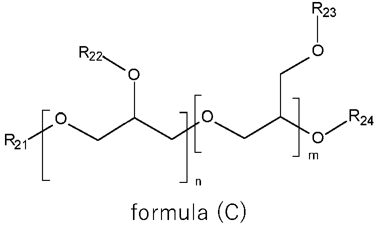
      wherein m and n are independently from each other an integer from 0 to 20;
      wherein m + n ≥ 2;
      wherein R₂₁, R₂₂, R₂₃ and R₂₄ are independently of each other selected from the group consisting of hydrogen, substituted or unsubstituted, linear or branched C₁-C₂₄ alkyl, substituted or unsubstituted, linear or branched C₂-C₂₄alkenyl, substituted or unsubstituted C₅-C₂₄ cycloalkyl, substituted or unsubstituted C₅-C₂₄ cycloalkenyl, substituted or unsubstituted C₆-C₂₄aryl, substituted or unsubstituted C₇-C₂₄ arylalkyl, -[(C=O)-(CH₂)ₜ-NH]ⱼ-R₂₃, -[(C=O)-(CH₂)ₜ-O]ⱼ-R₂₅ and -(C=O)R₂₆;
      wherein R₂₅ is selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl and substituted or unsubstituted C₇-C₂₄ arylalkyl, "t" is an integer in the range of 4 to 11 and "j" is an integer in the range of 1 to 100;
      R₂₆ is selected from the group consisting of substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl and substituted or unsubstituted C₇-C₂₄ arylalkyl;with the proviso that at least one of R₂₁, R₂₂, R₂₃ or R₂₄ is hydrogen,
      or in case that none of R₂₁, R₂₂, R₂₃ and R₂₄ is hydrogen at least one of R₂₁, R₂₂, R₂₃ or R₂₃ is selected from the group consisting of substituted, linear or branched C₁-C₂₄ alkyl wherein at least one substituent is -OH or -NH₂, substituted C₂-C₂₄ alkenyl wherein at least one substituent is -OH or -NH₂, substituted C₅-C₂₄ cycloalkyl wherein at least one substituent is -OH or -NH₂, substituted C₅-C₂₄ cycloalkenyl wherein at least one substituent is -OH or -NH₂, substituted C₆-C₂₄ aryl wherein at least one substituent is -OH or -NH₂, and substituted C₇-C₂₄ arylalkyl wherein at least one substituent is - OH or -NH₂, -[(C=O)-(CH₂)ₜ-NH]ⱼ-R₂₇, -O[(C=O)-(CH₂)ₜ-O]ⱼ-R₂₇ or -(C=O)R₂₈, wherein R₂₇ is selected from the group consisting of hydrogen, substituted linear or branched C₁-C₂₄ alkyl, substituted linear or branched C₂-C₂₄ alkenyl, substituted C₅-C₂₄ cycloalkyl, substituted C₅-C₂₄ cycloalkenyl, substituted C₆-C₂₄ aryl substituted C₇-C₂₄ arylalkyl while at least one substituent in these moieties is -OH or -NH₂, "t" is an integer in the range of 4 to 11 and "j" is an integer in the range of 1 to 100;
      R₂₈ is selected from the group consisting of substituted linear or branched C₁-C₂₄ alkyl, substituted linear or branched C₂-C₂₄ alkenyl, substituted C₅-C₂₄cycloalkyl; and/or
   iii) at least one modified compound of formula (C) obtained by reacting at least one compound of formula (C) with at least one alkyl polyester,
   wherein the ultraviolet radiation absorbing polymer (E) having hydroxy number in the range of ≥ 10 to ≤ 1000 mg KOH/g.
2. The polymer according to embodiment 1, wherein R₁, R₂, R₃, R₄ and R₅ are independently of each other selected from the group consisting of hydrogen, substituted or unsubstituted, linear or branched C₁-C₂₄ alkyl, substituted or unsubstituted C₅-C₂₄ cycloalkyl, substituted or unsubstituted C₆-C₂₄ aryl, substituted or unsubstituted C₁-C₂₄ heteroaryl, substituted or unsubstituted C₇-C₂₄ arylalkyl, C(=O)-R, substituted or unsubstituted, linear or branched C₁-C₂₄ heteroalkyl and OR;
   wherein R is as defined as in embodiment 1.
3. The product according to embodiment 1 or 2, wherein R₆, R₇ and R₈ are independently of each other selected from the group consisting of hydrogen, substituted or unsubstituted, linear or branched C₁-C₂₄ alkyl and substituted or unsubstituted C₅-C₂₄ cycloalkyl.
4. The product according to embodiment 1, wherein R₁₁ and R₁₂ are independently of each other selected from the group consisting of hydrogen, substituted or unsubstituted, linear or branched C₁-C₂₄ alkyl, substituted or unsubstituted, linear or branched C₂-C₂₄alkenyl, substituted or unsubstituted C₅-C₂₄ cycloalkyl, C₁-C₂₄ alkyloxy and substituted or unsubstituted, linear or branched C₂-C₂₄alkenyloxy; R₁₃ is selected from the group consisting of substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, C₁-C₂₄ alkyloxy and substituted or unsubstituted, linear or branched C₂-C₂₄ alkenyloxy;
5. The product according to embodiment 1, wherein R₂₁, R₂₂, R₂₃ and R₂₄ are independently of each other selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, , -[(C=O)-(CH₂)ₜ-NH]ⱼ-R₂₃, -[(C=O)-(CH₂)ₜ-O]-R₂₅ and -(C=O)R₂₆; and R₂₅ is selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl and substituted or unsubstituted C₆-C₂₄ aryl; "t" is an integer in the range of 4 to 11 and "j" is an integer in the range of 1 to 20;
   R₂₆ is selected from the group consisting of substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl and substituted or unsubstituted C₆-C₂₄ aryl.
6. The product according to embodiments 1 to 5, wherein the compound of formula (A) selected the group consisting of 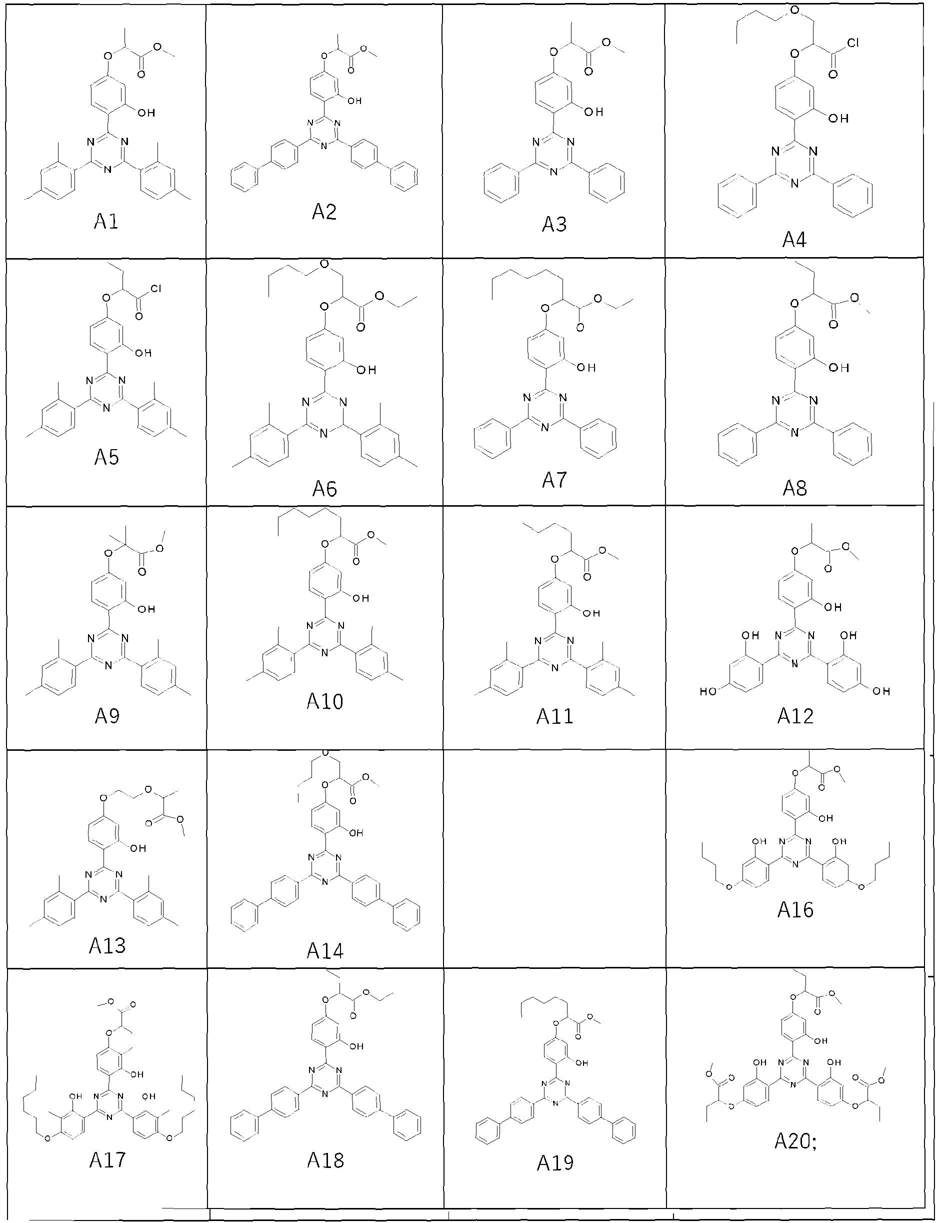 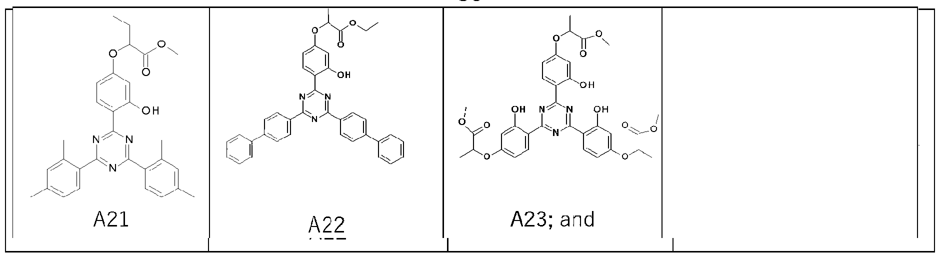
7. The product according to embodiment 1. wherein the compound of formula (C) selected the group consisting of polyglycerol-3, polyglycerol-4, polyglycerol-6, polyglycerol-10, polyglyceryl-10 stearate, polyglyceryl-10 oleate, polyglyceryl-10 laurate, polyglyceryl-10 dioleate, polyglyceryl-10 distearate, polyglyceryl-10 diisostearate, polyglyceryl-10 dipalmitate, polyglyceryl-2 caprate, polyglyceryl-2 caprylate, polyglyceryl-2 laurate, polyglyceryl-2 myristate, polyglyceryl-2 isopalmitate, polyglyceryl-2 palmitate, polyglyceryl-2 isostearate, polyglyceryl-2 stearate, polyglyceryl-2 oleate, polyglyceryl-2 isopalmitate/sebacate, polyglyceryl-3 caprate, polyglyceryl-3 laurate, polyglyceryl-3 myristate, polyglyceryl-3 palmitate, polyglyceryl-3 isostearate, polyglyceryl-3 oleate, polyglyceryl-3 stearate, polyglyceryl-3 ricinoleate, polyglyceryl-3 behenate, palm oil polyglyceryl-3 esters, polyglyceryl-3 beeswax, polyglyceryl-3 soyate/shea butterate, sunflower seed oil polyglyceryl-3 esters, polyglyceryl-3 diisostearate, polyglyceryl-3 triisostearate, polyglyceryl-4 caprate, polyglyceryl-4 laurate, polyglyceryl-4 myristate, polyglyceryl-4 palmitate, polyglyceryl-4 isostearate, polyglyceryl-4 oleate, polyglyceryl-4 stearate, polyglyceryl-4 ricinoleate, polyglyceryl-4 behenate, palm oil polyglyceryl-4 esters, polyglyceryl-4 beeswax, polyglyceryl-4 soyate/shea butterate, sunflower seed oil polyglyceryl-4 esters, polyglyceryl-4 dilaurate, polyglyceryl-4 distearate, polyglyceryl-4 tristearate, polyglyceryl-6 caprate, polyglyceryl-6 laurate, polyglyceryl-6 myristate, polyglyceryl-6 palmitate, polyglyceryl-6 isostearate, polyglyceryl-6 oleate, polyglyceryl-6 stearate, polyglyceryl-6 ricinoleate, polyglyceryl-6 behenate, palm oil polyglyceryl-6 esters, polyglyceryl-6 beeswax, polyglyceryl-6 soyate/shea butterate, sunflower seed oil polyglyceryl-6 esters, polyglyceryl-6 dilaurate, polyglyceryl-6 distearate, polyglyceryl-6 tristearate, polyglyceryl-6 dioleate, polyglyceryl-6 tetraoleate, polyglyceryl-6 triisostearate, polyglyceryl-6 pentastearate, polyglyceryl-6 trioleate, polyglyceryl-6 dicaprylate, polyglyceryl-6 dicaprate, polyglyceryl-6 tricaprylate, polyglyceryl-10 caprate, polyglyceryl-10 laurate, polyglyceryl-10 myristate, polyglyceryl-10 palmitate, polyglyceryl-10 isostearate, polyglyceryl-10 oleate, polyglyceryl-10 stearate, polyglyceryl-10 ricinoleate, polyglyceryl-10 behenate, palm oil polyglyceryl-10 esters, polyglyceryl-10 beeswax, polyglyceryl-10 soyate/shea butterate, sunflower seed oil polyglyceryl-10 esters, polyglyceryl-10 dilaurate, polyglyceryl-10 distearate, polyglyceryl-10 tristearate, polyglyceryl-10 dioleate, polyglyceryl-10 tetraoleate, polyglyceryl-10 triisostearate, polyglyceryl-10 pentastearate, polyglyceryl-10 trioleate, polyglyceryl-10 dicaprylate, polyglyceryl-10 dicaprate, polyglyceryl-10 tricaprylate, polyglyceryl-10 trilaurate, polyglyceryl-10 tetralaurate, polyglyceryl-10 pentahydroxystearate, polyglyceryl-20 hexacaprylate, polyglyceryl-20 heptacaprylate, polyglyceryl-20 octaisononanoate, polyglyceryl-20 docosabehenate/isostearate, polyglyceryl-20 docosabehenate/laurate, polyglyceryl-20 docosabehenate/oleate and polyglyceryl-20 heptadecabehenate/laurate.
8. The product according to any of the preceding embodiments, wherein the mol ratio of the compound of formula (A) to the compound of formula (C) is in the range of ≥ 1.0:10 to ≤ 10:1.0.
9. The product according to embodiment 8, wherein the mol ratio of the compound of formula (A) to the compound of formula (C) is in the range of ≥ 1.0:6.0 to ≤ 6:1.0.
10. The product according to embodiment 1, wherein the ultraviolet radiation absorbing polymer has a weight average molecular weight in the range of ≥ 500 to 25000 g/mol, as determined according to GPC.
11. The product according to embodiment 10, wherein the ultraviolet radiation absorbing polymer has a weight average molecular weight in the range of ≥ 500 to 10000 g/mol, as determined according to GPC.
12. The product according to embodiment 11, wherein the ultraviolet radiation absorbing polymer has a weight average molecular weight in the range of ≥ 500 to 5000 g/mol, as determined according to GPC.
13. The product according to embodiments 1 to 12, wherein the ultraviolet radiation absorbing polymer has UV absorbance in dichloromethane at 20 mg/L at 320 nm ≥ 0.05.
14. The product according to embodiment 13, wherein the ultraviolet radiation absorbing polymer has UV absorbance in dichloromethane at 20 mg/L at 320 nm ≥ 0.1.
15. The product according to embodiment 14, wherein the ultraviolet radiation absorbing polymer has UV absorbance in dichloromethane at 20 mg/L at 320 nm ≥ 0.2.
16. The product according to embodiment 15, wherein the ultraviolet radiation absorbing polymer has UV absorbance in dichloromethane at 20 mg/L at 320 nm ≥ 0.3.
17. A method for preparing an ultraviolet radiation absorbing polymer (E) according to any one of the preceding embodiments, wherein the process comprises the steps of:
   i)mixing at least one compound of formula (A) and at least compound of formula (C) and/or at least one modified compound of formula (C) to obtain a mixture;
   ii) heating the mixture obtained in step i. to a desired temperature to obtain ultraviolet radiation absorbing polymer (E); and
   ii)isolating the ultraviolet radiation absorbing polymer (E) obtained in step ii).
18. The method according to embodiment 17, wherein the reaction is carried out with the help of a catalyst.
19. The method according to embodiments 18, wherein the at least one catalyst is selected from the group consisting of acid and base.
20. The method according to embodiment 17, wherein the step ii) is conducted at a temperature in the range of ≥ 100 to ≤ 300 °C.
21. The method according to embodiment 20, wherein the step ii) is conducted at a temperature in the range of ≥ 120 to ≤ 270 °C.
22. The method according to embodiment 21, wherein the step ii) is conducted at a temperature in the range of ≥ 160 to ≤ 250 °C.
23. The method according to embodiment 22, wherein the step ii) is conducted at a temperature in the range of ≥ 180 to ≤ 230 °C.
24. The method according to embodiments 17 to 23, wherein the steps i) to ii) are conducted in the presence or in the absence of at least one solvent.
25. The method according to embodiment 24, wherein the at least one solvent is selected from the group consisting of aromatic solvents, aliphatic solvents and ethers.
26. Use of the polymer according to one or more of embodiments 1 to 16 or the polymer obtained according to method of embodiments 17 to 25 and the salt thereof as a UV absording polymer in a coating composition.
27. A coating composition comprising at least one ultraviolet radiation absorbing polymer according to embodiments 1 to 16 or the polymer obtained according to method of embodiments 17 to 25 or the salt thereof.
28. A coating composition comprising:
   c. at least one coating resin; and
   d. at least one ultraviolet radiation absorbing polymer according to embodiments 1 to 16 or the polymer obtained according to method of embodiments 17 to 25 or and the salt thereof.
29. The composition according to embodiments 27 to 28 comprises at least one hindered amine light stabilizer (F).
30. The coating composition of embodiment 29, wherein the at least one hindered amine light stabilizer (F) is selected from the group consisting of:
   1-cyclohexyloxy-2,2,6,6-tetramethyl-4-octadecylaminopiperidine;
   bis(2,2,6,6-tetramethylpiperidin-4-yl) sebacate;
   bis(1-acetoxy-2,2,6,6-tetramethylpiperidin-4-yl) sebacate;
   bis(1,2,2,6,6-pentamethyl-4-yl) sebacate;
   bis(1-cyclohexyloxy-2,2,6,6-tetramethylpiperidin-4-yl) sebacate;
   bis(1-octyloxy-2,2,6,6-tetramethylpiperidin-4-yl) sebacate;
   bis(1-acyl-2,2,6,6-tetramethylpiperidin-4-yl) sebacate;
   bis(1,2,2,6,6-pentamethyl-4-piperidyl) n-butyl-3,5-di-tert-butyl-4- hydroxybenzylmalonate;
   2,4- bis[(1-cyclohexyloxy-2,2,6,6-tetramethylpiperidin-4-yl)butylamino]-6-(2-hydroxyethylamino-s-triazine;
   bis(1-cyclohexyloxy-2,2,6,6-tetramethylpiperidin-4-yl) adipate;
   2,4- bis[(1-cyclohexyloxy-2,2,6,6-piperidin-4-yl)butylamino]-6-chloro-striazine;
   1-(2-hydroxy-2-methylpropoxy)-4-hydroxy-2,2,6,6-tetramethylpiperidine;
   1-(2-hydroxy-2-methylpropoxy)-4-oxo-2,2,6,6-tetramethylpiperidine;
   1- (2-hydroxy-2-methylpropoxy)-4-octadecanoyloxy-2,2,6,6-tetramethylpiperidine;
   bis(1-(2-hydroxy-2-methylpropoxy)-2,2,6,6-tetramethylpiperidin-4-yl) sebacate;
   bis(I-(2-hydroxy-2-methylpropoxy)-2,2,6,6-tetramethylpiperidin-4-yl) adipate;
   2,4- bis{N-[I-(2-hydroxy-2-methylpropoxy)-2,2,6,6-tetramethylpiperidin-4-yl]-N-butylamino}-6-(2-hydroxyethylamino)-s-triazine;
   4-benzoyl-2,2,6,6-tetramethylpiperidine;
   di-(1,2,2,6,6-pentamethylpiperidin-4-yl) p-methoxybenzylidenemalonate;
   4-stearyloxy-2,2,6,6-tetramethylpiperidine;
   bis(1-octyloxy-2,2,6,6-tetramethylpiperidyl) succinate;
   1,2,2,6,6-pentamethyl-4-aminopiperidine;
   2- undecyl-7,7,9,9-tetramethyl-1-oxa-3,8-diaza-4-oxo-spiro[4,5]decane;
   tris(2,2,6,6-tetramethyl-4-piperidyl) nitrilotriacetate;
   tris(2-hydroxy-3-(amino-(2,2,6,6-tetramethylpiperidin-4-yl)propyl)nitrilotriacetate;
   tetrakis-(2,2,6,6-tetramethyl-4-piperidyl)-1,2,3,4-butane-tetracarboxylate;
   tetrakis-(1,2,2,6,6-pentamethyl-4-piperidyl)-1,2,3,4-butane-tetracarboxylate;
   1,1'-(1,2-ethanediyl)-bis-(3,3,5,5-tetramethylpiperazinone);
   3- n-octyl-7,7,9,9-tetramethyl-1,3,8-triazaspiro[4.5]decan-2,4-dione;
   8-acetyl-3-dodecyl-7,7,9,9-tetramethyl-1,3,8-triazaspiro[4.5]decane-2,4-dione;
   3-dodecyl-1-(2,2,6,6-tetramethyl-4-piperidyl)pyrrolidin-2,5-dione;
   3-dodecyl-1-(1,2,2,6,6-pentamethyl-4-piperidyl)pyrrolidine-2,5-dione;
   N,N'-bis-formyl-N,N'-bis(2,2,6,6-tetramethyl-4-piperidyl)hexamethylenediamine;
   the reaction product of 2,4-bis[(1-cyclohexyloxy-2,2,6,6-piperidin-4-yl)-butylamino]-6-chloro-s-triazine with N,N'-bis(3-aminopropyl)ethylenediamine);
   the condensate of 1-(2-hydroxyethyl)-2,2,6,6-tetramethyl-4-hydroxypiperidine and succinic acid;
   linear or cyclic condensates of N,N'-bis(2,2,6,6-tetramethyl-4-piperidyl)- hexamethylenediamine and 4-tert-octylamino-2,6-dichloro-1,3,5- triazine;
   linear or cyclic condensates of N,N'-bis(2,2,6,6-tetramethyl-4-piperidyl)-hexamethylenediamine and 4-cyclohexylamino-2,6-dichloro-1,3,5-triazine;
   linear or cyclic condensates of N,N'-bis-(2,2,6,6-tetramethyl-4-piperidyl)- hexamethylenediamine and 4-morpholino-2,6-dichloro-1,3,5-triazine;
   linear or cyclic condensates of N,N'-bis-(1,2,2,6,6-pentamethyl-4-piperidyl)-hexamethylenediamine and 4-morpholino-2,6-dichloro-1,3,5-triazine;
   the condensate of 2-chloro-4,6-bis(4-n-butylamino-2,2,6,6-tetramethylpiperidyl)-1,3,5-triazine and 1,2-bis(3-aminopropylamino)ethane;
   the condensate of 2-chloro-4,6-di-(4-n-butylamino-1,2,2,6,6-pentamethylpiperidyl)-I,3,5-triazine and 1,2-bis-(3-aminopropylamino)ethane;
   a reaction product of 7,7,9,9-tetramethyl-2-cycloundecyl-I-oxa-3,8-diaza-4-oxospiro [4,5]decane and epichlorohydrin;
   poly[methyl,(3-oxy-(2,2,6,6-tetramethylpiperidin-4-yl)propyl)] siloxane;
   reaction product of maleic acid anhydride-Ci8-C22-a-olefin-copolymer with 2,2,6,6-tetramethyl-4-aminopiperidine;
   the oligomeric compound which is the condensation product of 4,4'-hexamethylene-bis(amino-2,2,6,6-tetramethylpiperidine) and 2,4-dichloro-6-[(2,2,6,6-tetramethylpiperidin-4-yl)butylamino]-s-triazine end capped with 2-chloro-4,6-bis(dibutylamino)-s-triazine;
   the oligomeric compound which is the condensation product of 4,4'-hexamethylenebis( amino-1,2,2,6,6-pentaamethylpiperidine) and 2,4- dichloro-6-[(1,2,2,6,6-pentaamethylpiperidin-4-yl)butylamino]-striazine end-capped with 2-chloro-4,6-bis(dibutylamino)-s-triazine;
   the oligomeric compound which is the condensation product of 4,4'-hexamethylenebis(amino-1-propoxy-2,2,6,6-tetramethylpiperidine) and 2,4-dichloro-6-[(1-propoxy-2,2,6,6-tetramethylpiperidin-4-yl)butylamino]-s-triazine end capped with 2-chloro-4,6-bis(dibutylamino)-s-triazine;
   the oligomeric compound which is the condensation product of 4,4'-hexamethylenebis(amino-1-acyloxy-2,2,6,6-tetramethylpiperidine) and 2,4-dichloro-6-[(1-acyloxy-2,2,6,6-tetramethylpiperidin-4-yl)butylamino]-s-triazine end capped with 2-chloro-4,6-bis(dibutylamino)-s-triazine ;
   product obtained by reacting 1,2-bis(3-aminopropylamino)ethane with cyanuric chloride, with (2,2,6,6-tetramethylpiperidin-4-yl)butylamine; and
   1,6-hexanediamine,NI,N6-bis(2,2,6,6-tetramethyl-4-piperidinyl)-, polymer with 2,4,6-trichloro-1,3,5-triazine, reaction products with 3-bromo-1-propene, N-butyl-1-butanamine, and N-butyl-2,2,6,6-tetramethyl-4- piperidinamine, oxidized, hydrogenated.
31. The coating composition of embodiments 27 to 30 further comprising another ultraviolet light absorber selected from the group consisting of a hydroxyphenylbenzotriazole, a hydroxyphenyl-s-triazine, a benzophenone, an ester of a benzoic acid, an acrylate, a malonate and an oxamide.
32. The composition according to embodiment 28, wherein the at least one coating resin is selected from the group consisting of a thermoset acrylic melamine resin, an acrylic urethane resin, an epoxy carboxy resin, a silane modified acrylic melamine, an acrylic resin with carbamate pendant groups crosslinked with melamine, and an acrylic polyol resin crosslinked with melamine containing carbamate groups.
33. The coating composition of embodiments 27 to 32 further comprising a phenolic antioxidant selected from the group consisting of:
   i.n-octadecyl 3,5-di-tert-butyl-4-hydroxyhydrocinnamate;
   ii.neopentanetetrayl tetrakis(3,5-di-tert-butyl-4-hydroxyhydrocinammate);
   iii.di-n-octadecyl 3,5-di-tert-butyl-4-hydroxybenzylphosphonate;
   iv.1,3,5 -tris(3,5 -di-tert-butyl-4-hydroxybenzyl)isocyanurate;
   v.thiodiethylene bis(3,5-di-tert-butyl-4-hydroxyhydrocinnamate);
   vi.1,3,5- trimethyl-2,4,6-tris(3,5-di-tert-butyl-4-hydroxybenzyl)benzene;
   vii.3,6- dioxaoctamethylene bis(3-methyl-5-tert-butyl-4-hydroxyhydrocinnamate;
   viii.2,6- di-tert-butyl-p-cresol;
   ix.2,2'-ethylidene-bis(4,6-di-tert-butylphenol);
   x.1,3,5- tris(2,6-dimethyl-4-tert-butyl-3-hydroxybenzyl)isocyanurate;
   xi.1,1,3,-tris(2-methyl-4-hydroxy-5-tert-butylphenyl)butane;
   xii.1,3,5- tris[2-(3,5-di-tert-butyl-4-hydroxyhydrocinnamoyloxy)ethyl] isocyanurate;
   xiii.3,5- di-(3,5-di-tert-butyl-4-hydroxybenzyl)mesitol;
   xiv.hexamethylene bis(3,5-di-tert-butyl-4-hydroxyhydrocinnamate);
   xv.1-(3,5-di-tert-butyl-4-hydroxyanilino)-3,5-di(octylthio)-s-triazine;
   xvi.N,N'-hexamethylene-bis(3,5-di-tert-butyl-4-hydroxyhydrocinnamamide);
   xvii.calcium bis(ethyl 3,5-di-tert-butyl-4-hydroxybenzylphosphonate);
   xviii.ethylene bis[3,3-di(3-tert-butyl-4-hydroxyphenyl)butyrate;
   xix.octyl 3,5-di-tert-butyl-4-hydroxybenzylmercaptoacetate;
   xx.bis(3,5-di-tert-butyl-4-hydroxyhydrocinnamoyl)hydrazide;
   xxi.N,N-di-(Ci2-C24alkyl)-N-methyl-amine oxide; and
   xxii. N,N-dialkylhydroxylamine prepared from di(hydrogenated tallow)amine by direct oxidation.
34. The coating composition of embodiment 27 to 33, wherein the ultraviolet radiation absorbing polymer (E) is present from about 0.1 wt.% to about 25 wt.% on a total solid basis.
35. The coating composition of embodiment 34, wherein the ultraviolet radiation absorbing polymer (E) is present from about 0.1 wt.% to about 15 wt.% on a total solid basis.
36. The coating composition of embodiment 35, wherein the ultraviolet radiation absorbing polymer (E) is present from about 0.25 wt.% to about 10 wt.% on a total solid basis.
37. The coating composition of embodiment 36, wherein the ultraviolet radiation absorbing polymer (E) is present from about 0.5 wt.% to about 5.0 wt.% on a total solid basis.
38. A method of stabilizing a coating composition on a substrate toward ultraviolet radiation, wherein the method comprises applying the coating composition of embodiment 27 to 37 to a substrate.

### Examples

The presently claimed invention is illustrated in detail by non-restrictive working examples which follow. More particularly, the test methods specified hereinafter are part of the general disclosure of the application and are not restricted to the specific working examples.

### Materials

4-[4,6-bis(2,4-dimethylphenyl)-1,3,5-triazin-2-yl]benzene-1,3-diol is prepared in accordance to WO 2000/014077.
4-[4,6-bis(4-phenylphenyl)-1,3,5-triazin-2-yl]benzene-1,3-diol is prepared in accordance to J.Heterocyclic Chem. 52, 201-204 (2015).
Methyl 2-bromopropionate is available from Merck KGaA, Germany.
Polyglycerol-10 is available from Spiga Nord S.p.A. Italy.
tin-(II)-2-ethylhexanoate is available from Merck KGaA, Germany.
triglycerol is available from Merck KGaA, Germany.
polyglyceryl-10 stearate is available from Lonza under the trade name Polyaldo 10-1 S.
polyglyceryl-10 dipalmitate is available from Lonza under the trade name Polyaldo 10-2 P.
polyglyceryl-10 oleate is available from Lonza under the trade name Polyaldo 10-1 O.
dimethyl sebacate is available from Fluka, Switzerland.
Viacryl^{®} SC (303/65XB1) is available from Allnex.
Viacryl^{®} SC (370/75SNA2) is available from Allnex.
Maprenal^{®} (MF 6503) is available from Ineos melamines.
Solvesso^{®} (1504) is available from Exxon mobil.
Baysilone^{®} (MA5) is available from OMG Borchers.

### Example 1: Synthesis of an UV-absorbing triazine ester mixture

DMF (45.00 g), xylene (91.00 g), 4-[4,6-bis(2,4-dimethylphenyl)-1,3,5-triazin-2-yl]benzene-1,3-diol (21.00 g, 0.053 mol) and 4-[4,6-bis(4-phenylphenyl)-1,3,5-triazin-2-yl]benzene-1,3-diol (13.00 g, 0.026 mol) were added to a reaction flask. The reactor contents were mixed by a stirrer resulting in a beige suspension. Potassium carbonate (11.10 g, 0.080 mol) was added the above mixture and the mixture was heated to 96 °C resulting in a red suspension. Methyl 2-bromopropionate (15.00 g, 0.088 mol) was added over a period of 0.5 hours and the reaction mixture was stirred at 96° C for 3 hours. After cooling to 80° C the reaction mixture was filtered off. The filtrate was washed with water (100 g). The organic phase was concentrated in vacuum. The residue was dissolved in toluene (105 g) at 80° C, cooled to 20° C and filtered off. The filter residue was washed with toluene (10 g) and dried at 70° C and 120 mbar for 16 hours yielding a mixed triazine ester mixture as a beige solid (23.4 g, melting point 180° C). HPLC: 43.0 a-% methyl 2-[4-[4,6-bis(2,4-dimethylphenyl)-1,3,5-triazin-2-yl]-3-hydroxy-phenoxy]propanoate (formula A1), 55.0 a-% methyl 2-[4-[4,6-bis(4-phenylphenyl)-1,3,5-triazin-2-yl]-3-hydroxy-phenoxy]propanoate (formula A2).

### Example 2: Synthesis of an UV-absorbing triazine ester mixture

DMF (136.00 g), xylene (274.00 g), 4-[4,6-bis(2,4-dimethylphenyl)-1,3,5-triazin-2-yl]benzene-1,3-diol (63.00 g, 0.159 mol) and 4-[4,6-bis(4-phenylphenyl)-1,3,5-triazin-2-yl]benzene-1,3-diol (39.00 g, 0.080 mol) were added to a reaction flask. The reactor contents were mixed by a stirrer resulting in a beige suspension. Potassium carbonate (33.30 g, 0.241 mol) was added the above mixture and the mixture was heated to 96° C resulting in a red suspension. Methyl 2-bromopropionate (45.00 g, 0.265 mol) was added over a period of 1 hour and the reaction mixture was stirred at 96° C for 2 hours. After cooling to 80° C the reaction mixture was filtered off. The filtrate was washed with water (300 g). The organic phase was concentrated in vacuum at 20 mbar and 80° C. The residue was stirred in isopropanol (550 g) at 80° C for 1 hour, cooled to room temperature, diluted with isopropanol (250 g) and filtered off. The filter residue was washed with isopropanol (100 g) and dried at 50° C and 120 mbar for 16 hours yielding a mixed triazine ester mixture as a beige solid (99.8 g). HPLC: 43.0 a-% methyl 2-[4-[4,6-bis(2,4-dimethylphenyl)-1,3,5-triazin-2-yl]-3-hydroxy-phenoxy]propanoate (formula A1), 55.0 a-% methyl 2-[4-[4,6-bis(4-phenylphenyl)-1,3,5-triazin-2-yl]-3-hydroxy-phenoxy]propanoate (formula A2).

### Example 3:

A 100 mL glass flask containing a magnetic stir bar was placed in an agitating heating block and compound of formula A2 (7.00 g, 0.012 mol) was transferred into the flask. Under an argon flow, the flask content was heated to 160 °C. Polyglycerol-10 (1.40 g, 0.002 mol), which had been molten before use at 100 °C, and tin-(II)-2-ethylhexanoate (0.02 g) were added. The flask contents were heated up to 205 °C yielding an orange melt. The reaction mixture was stirred under vacuum (15 mbar) at 205° C for 5 hours and at 230° C for 4 hours. The reaction was monitored using HPLC. After completion of the reaction, the hot reaction melt was poured on a steel plate, solidified and grounded to yield a UV-absorbing polymer composition (E) as a beige powder (6.4 g, melting point 154° C).

### Example 4:

A 100 mL glass flask containing a magnetic stir bar was placed in an agitating heating block and compound of formula A2 (7.00 g, 0.012 mol) was transferred into the flask. Under an argon flow, the flask content was heated to 160° C. Polyglycerol-10 (2.80 g, 0.004 mol), which had been molten before use at 100° C, and tin-(II)-2-ethylhexanoate (0.02 g) were added. The flask contents were heated up to 205° C yielding an orange melt. The reaction mixture was stirred under vacuum (15 mbar) at 205° C for 5 hours and at 230° C for 4 hours. The reaction was monitored using HPLC. After completion of the reaction, the hot reaction melt was poured on a steel plate, solidified and grounded to yield a UV-absorbing polymer composition (E) as a beige powder (8.2 g, melting point 125° C).

### Example 5:

A 100 mL glass flask containing a magnetic stir bar was placed in an agitating heating block and compound of formula A2 (7.00 g, 0.012 mol) was transferred into the flask. Under an argon flow, the flask content was heated to 160° C. Polyglycerol-10 (5.60 g, 0.007 mol), which had been molten before use at 100° C, and tin-(II)-2-ethylhexanoate (0.02 g) were added. The flask contents were heated up to 205° C yielding an orange melt. The reaction mixture was stirred under vacuum (15 mbar) at 205° C for 4 hours and at 230° C for 5 hours. The reaction was monitored using HPLC. After completion of the reaction, the hot reaction melt was poured on a steel plate, solidified and grounded to yield a UV-absorbing polymer composition (E) as a light-yellow powder (9.9 g, melting point 100° C).

### Example 6:

A 100 mL glass flask containing a magnetic stir bar was placed in an agitating heating block and compound of formula A22 (7.10 g, 0.012 mol) was transferred into the flask. Under an argon flow, the flask content was heated to 160° C. Hot molten Polyglycerol-10 (1.40 g, 0.002 mol), which had been molten before use at 100° C, and tin-(II)-2-ethylhexanoate (0.02 g) were added. The flask contents were heated up to 205° C yielding a brown melt. The reaction mixture was stirred under vacuum (15 mbar) at 205° C for 5 hours and at 230° C for 4 hours. The reaction was monitored using HPLC. After completion of the reaction, the hot, brown, high viscous reaction melt was poured on a steel plate, solidified and grounded to yield a UV-absorbing polymer composition (E) as a beige powder (6.1 g, melting point 160° C).

### Example 7:

A 100 mL glass flask containing a magnetic stir bar was placed in an agitating heating block and compound of formula A1 (5.80 g, 0.012 mol) was transferred into the flask. Under an argon flow, hot molten Polyglycerol-10 (1.40 g, 0.002 mol), which had been molten before use at 100° C, and tin-(II)-2-ethylhexanoate (0.02 g) were added. The flask contents were heated up to 205° C yielding an orange melt. The reaction mixture was stirred under vacuum (15 mbar) at 205° C for 4 hours. The reaction was monitored using HPLC. After completion of the reaction, the hot, orange reaction melt was poured on a steel plate, solidified and grounded to yield a UV-absorbing polymer composition (E) as a beige powder (4.0 g, melting point 108° C).

### Example 8:

A 100 mL glass flask containing a magnetic stir bar was placed in an agitating heating block and compound of formula A1 (5.80 g, 0.012 mol) was transferred into the flask. Under an argon flow, hot molten Polyglycerol-10 (2.80 g, 0.004 mol), which had been molten before use at 100° C, and tin-(II)-2-ethylhexanoate (0.02 g) were added. The flask contents were heated up to 205° C yielding an orange melt. The reaction mixture was stirred under vacuum (15 mbar) at 205° C for 4 hours. The reaction was monitored using HPLC. After completion of the reaction, the hot, orange reaction melt was poured on a steel plate, solidified and grounded to yield a UV-absorbing polymer composition (E) as a beige powder (6.4 g, melting point 86° C).

### Example 9:

A 100 mL glass flask containing a magnetic stir bar was placed in an agitating heating block and compound of formula A1 (5.80 g, 0.012 mol) was transferred into the flask. Under an argon flow, hot molten Polyglycerol-10 (5.60 g, 0.007 mol), which had been molten before use at 100° C, and tin-(II)-2-ethylhexanoate (0.02 g) were added. The flask contents were heated up to 205° C yielding an orange melt. The reaction mixture was stirred under vacuum (15 mbar) at 205° C for 4 hours. The reaction was monitored using HPLC. After completion of the reaction, the hot, orange reaction melt was poured on a steel plate, solidified and grounded to yield a UV-absorbing polymer composition (E) as a yellow powder (9.5 g, melting point 70° C).

### Example 10:

A 100 mL glass flask containing a magnetic stir bar was placed in an agitating heating block and the product obtained according example 1 (6.40 g) was transferred into the flask. Under an argon flow, the flask contents were heated up to 100° C. Hot molten Polyglycerol-10 (1.40 g, 0.002 mol), which had been molten before use at 100° C, and tin-(II)-2-ethylhexanoate (0.02 g) were added. The flask contents were heated up to 205° C yielding a brownish melt. The reaction mixture was stirred under vacuum (15 mbar) at 205° C for 4 hours and at 230° C for 8 hours. The reaction was monitored using HPLC. After completion of the reaction, the hot, brownish reaction melt was poured on a steel plate, solidified and grounded to yield a UV-absorbing polymer composition (E) a beige powder (4.8 g, melting point 145° C).

### Example 11:

A 100 mL glass flask containing a magnetic stir bar was placed in an agitating heating block and the product obtained according to example 1 (6.40 g) was transferred into the flask. Under an argon flow, the flask contents were heated up to 100° C. Hot molten Polyglycerol-10 (2.80 g, 0.004 mol), which had been molten before use at 100° C, and tin-(II)-2-ethylhexanoate (0.02 g) were added. The flask contents were heated up to 205° C yielding a brownish melt. The reaction mixture was stirred under vacuum (15 mbar) at 205° C for 4 hours and at 230° C for 12 hours. The reaction was monitored using HPLC. After completion of the reaction, the hot, brownish reaction melt was poured on a steel plate, solidified and grounded to yield a UV-absorbing polymer composition (E) as a beige powder (6.3 g, melting point 115° C).

### Example 12:

A 100 mL glass flask containing a magnetic stir bar was placed in an agitating heating block and the product obtained according to example 1 (6.40 g) was transferred into the flask. Under an argon flow, the flask contents were heated up to 100° C. Hot molten Polyglycerol-10 (5.60 g, 0.007 mol), which had been molten before use at 100° C, and tin-(II)-2-ethylhexanoate (0.02 g) were added. The flask contents were heated up to 205° C yielding a brownish melt. The reaction mixture was stirred under vacuum (15 mbar) at 205° C for 4 hours and at 230° C for 12 hours. The reaction was monitored using HPLC. After completion of the reaction, the hot, brownish reaction melt was poured on a steel plate, solidified and grounded to yield a UV-absorbing polymer composition (E) as a beige powder (9.1 g, melting point 86° C).

### Example 13:

A 100 mL glass flask containing a magnetic stir bar was placed in an agitating heating block and the product obtained according example 2 (6.40 g) was transferred into the flask. Under an argon flow, triglycerol (3.00 g, 0.012 mol) and tin-(II)-2-ethylhexanoate (0.02 g) were added. The flask contents were heated up to 205 °C yielding an orange melt. The reaction mixture was stirred under vacuum (15 mbar) at 205 °C for 4 hours and at 230 °C for 4 hours. The reaction was monitored using HPLC. After completion of the reaction, the hot, brownish reaction melt was poured on a steel plate, solidified and grounded to yield a UV-absorbing polymer composition (E) as a beige powder (5.8 g, melting point 124° C).

### Example 14:

A 100 mL glass flask containing a magnetic stir bar was placed in an agitating heating block and the obtained according example 2 (6.40 g) was transferred into the flask. Under an argon flow, triglycerol (4.60 g, 0.019 mol) and tin-(II)-2-ethylhexanoate (0.02 g) were added. The flask contents were heated up to 205° C yielding an orange melt. The reaction mixture was stirred under vacuum (15 mbar) at 205° C for 4 hours and at 230° C for 4 hours. The reaction was monitored using HPLC. After completion of the reaction, the hot, brownish reaction melt was poured on a steel plate, solidified and grounded to yield a UV-absorbing polymer composition (E) as a beige powder (6.4 g, melting point 93° C).

### Example 15:

A 100 mL glass flask containing a magnetic stir bar was placed in an agitating heating block and the product according example 2 (6.40 g) was transferred into the flask. Under an argon flow, triglycerol (9.10 g, 0.038 mol) and tin-(II)-2-ethylhexanoate (0.02 g) were added. The flask contents were heated up to 205° C yielding an orange melt. The reaction mixture was stirred under vacuum (15 mbar) at 205° C for 4 hours and at 230° C for 4 hours. The reaction was monitored using HPLC. After completion of the reaction, the hot, brownish reaction melt was poured on a steel plate, solidified and grounded to yield a UV-absorbing polymer composition (E) as a beige powder (9.6 g, melting point 69° C).

### Example 16:

A 100 mL glass flask containing a magnetic stir bar was placed in an agitating heating block and the product obtained according example 2 (6.40 g) was transferred into the flask. Under an argon flow, polyglyceryl-10 stearate (1.90 g, 0.002 mol) supplied by the company Lonza under the trade name Polyaldo 10-1 S) and tin-(II)-2-ethylhexanoate (0.02 g) were added. The flask contents were heated up to 205° C yielding an orange melt. The reaction mixture was stirred under vacuum (15 mbar) at 205° C for 4 hours and at 225° C for 12 hours. The reaction was monitored using HPLC. After completion of the reaction, the hot, brown reaction melt was poured on a steel plate, solidified and grounded to yield a UV-absorbing polymer composition (E) as a beige powder (3.9 g, melting point 107° C).

### Example 17:

A 100 mL glass flask containing a magnetic stir bar was placed in an agitating heating block and the product obtained according example 2 (6.40 g) was transferred into the flask. Under an argon flow, polyglyceryl-10 stearate (3.80 g, 0.004 mol) and tin-(II)-2-ethylhexanoate (0.02 g) were added. The flask contents were heated up to 205° C yielding an orange melt. The reaction mixture was stirred under vacuum (15 mbar) at 205° C for 4 hours. The reaction was monitored using HPLC. After completion of the reaction, the hot reaction melt was poured on a steel plate, solidified and grounded to yield a UV-absorbing polymer composition (E) as a beige powder (7.4 g, melting point 70° C).

### Example 18:

A 100 mL glass flask containing a magnetic stir bar was placed in an agitating heating block and the product obtained according example 2 (6.40 g) was transferred into the flask. Under an argon flow, polyglyceryl-10 stearate (7.60 g, 0.007 mol) and tin-(II)-2-ethylhexanoate (0.02 g) were added. The flask contents were heated up to 205° C yielding an orange melt. The reaction mixture was stirred under vacuum (15 mbar) at 205° C for 4 hours and at 225° C for 4 hours. The reaction was monitored using HPLC. After completion of the reaction, the hot reaction melt was poured on a steel plate, solidified and grounded to yield a UV-absorbing polymer composition (E) as a beige powder (10.9 g, melting point 43° C).

### Example 19:

A 100 mL glass flask containing a magnetic stir bar was placed in an agitating heating block and the product obtained according example 2 (6.40 g) was transferred into the flask. Under an argon flow, triglycerol (1.40 g, 0.006 mol) and tin-(II)-2-ethylhexanoate (0.02 g) were added. The flask contents were heated up to 225° C yielding an orange, clear melt. The reaction mixture was stirred under vacuum (15 mbar) at 225° C for 6 hours. The reaction was monitored using HPLC. After completion of the reaction, the hot reaction melt was poured on a steel plate, solidified and grounded to yield a UV-absorbing polymer composition (E) as a beige powder (5.9 g, melting point 125° C).

### Example 20:

A 100 mL glass flask containing a magnetic stir bar was placed in an agitating heating block and the product obtained according example 2 (6.40 g) was transferred into the flask. Under an argon flow, triglycerol (1.00 g, 0.004 mol) and tin-(II)-2-ethylhexanoate (0.02 g) were added. The flask contents were heated up to 225° C yielding an orange, clear melt. The reaction mixture was stirred under vacuum (15 mbar) at 225° C for 6 hours. The reaction was monitored using HPLC. After completion of the reaction, the hot reaction melt was poured on a steel plate, solidified and grounded to yield a UV-absorbing polymer composition (E) as a beige powder (5.8 g, melting point 130° C).

### Example 21:

A 100 mL glass flask containing a magnetic stir bar was placed in an agitating heating block and the product obtained according example 2 (6.40 g) was transferred into the flask. Under an argon flow, molten polyglyceryl-10 dipalmitate (1.30 g, 0.001 mol) sample was molten at 100° C before use) and tin-(II)-2-ethylhexanoate (0.02 g) were added. The flask contents were heated up to 205° C yielding an orange, clear melt. The reaction mixture was stirred under vacuum (15 mbar) at 205° C for 4 hours and at 225° C for 8 hours. The reaction was monitored using HPLC. After completion of the reaction, the hot reaction melt was poured on a steel plate, solidified and grounded to yield a UV-absorbing polymer composition (E) as a beige powder (3.9 g, melting point 106° C).

### Example 22:

A 100 mL glass flask containing a magnetic stir bar was placed in an agitating heating block and obtained according to example 2 (6.40 g) was transferred into the flask. Under an argon flow, molten polyglyceryl-10 dipalmitate (2.60 g, 0.002 mol, supplied by Lonza under the trade name Polyaldo 10-2 P, sample was molten at 100° C before use) and tin-(II)-2-ethylhexanoate (0.02 g) were added. The flask contents were heated up to 205° C yielding an orange, clear melt. The reaction mixture was stirred under vacuum (15 mbar) at 205° C for 4 hours and at 225° C for 4 hours. The reaction was monitored using HPLC. After completion of the reaction, the hot reaction melt was poured on a steel plate, solidified and grounded to yield a UV-absorbing polymer composition (E) as a beige powder (6.1 g, melting point 83° C).

### Example 23:

A 100 mL glass flask containing a magnetic stir bar was placed in an agitating heating block and the product obtained according example 2 (6.40 g) was transferred into the flask. Under an argon flow, molten polyglyceryl-10 dipalmitate (5.20 g, 0.004 mol, supplied by Lonza under the trade name Polyaldo 10-2 P, sample was molten at 100° C before use) and tin-(II)-2-ethylhexanoate (0.02 g) were added. The flask contents were heated up to 205° C yielding an orange, clear melt. The reaction mixture was stirred under vacuum (15 mbar) at 205° C for 4 hours and at 225° C for 4 hours. The reaction was monitored using HPLC. After completion of the reaction, the hot reaction melt was poured on a steel plate, solidified and grounded to yield a UV-absorbing polymer composition (E) as a beige powder (8.6 g, melting point 53° C).

### Example 24:

A 100 mL glass flask containing a magnetic stir bar was placed in an agitating heating block and the product obtained according example 2 (6.40 g) was transferred into the flask. Under an argon flow, molten polyglyceryl-10 oleate (1.90 g, 0.002 mol) and tin-(II)-2-ethylhexanoate (0.02 g) were added. The flask contents were heated up to 205° C yielding an orange, clear melt. The reaction mixture was stirred under vacuum (15 mbar) at 205° C for 4 hours and at 225° C for 4 hours. The reaction was monitored using HPLC. After completion of the reaction, the hot reaction melt was poured on a steel plate, solidified and grounded to yield a UV-absorbing polymer composition (E) a beige powder (4.7 g, melting point 112° C).

### Example 25:

A 100 mL glass flask containing a magnetic stir bar was placed in an agitating heating block and the product obtained according example 2 (6.40 g) was transferred into the flask. Under an argon flow, molten polyglyceryl-10 oleate (3.80 g, 0.004 mol) and tin-(II)-2-ethylhexanoate (0.02 g) were added. The flask contents were heated up to 205° C yielding an orange, clear melt. The reaction mixture was stirred under vacuum (15 mbar) at 205° C for 4 hours and at 225° C for 4 hours. The reaction was monitored using HPLC. After completion of the reaction, the hot reaction melt was poured on a steel plate, solidified and ground yielding a UV-absorbing polymer composition as a beige powder (7.9 g, melting point 71° C).

### Example 26:

A 100 mL glass flask containing a magnetic stir bar was placed in an agitating heating block and the product obtained according example 2 (6.40 g) was transferred into the flask. Under an argon flow, molten polyglyceryl-10 oleate (7.60 g, 0.007 mol, sample was molten at 80° C before use) and tin-(II)-2-ethylhexanoate (0.02 g) were added. The flask contents were heated up to 205° C yielding an orange, clear melt. The reaction mixture was stirred under vacuum (15 mbar) at 205° C for 4 hours and at 225° C for 4 hours. The reaction was monitored using HPLC. After completion of the reaction, the hot reaction melt was poured on a steel plate yielding the UV-absorbing polymer composition as highly viscous melt (6.2 g).

### Example 27:

A 100 mL glass flask containing a magnetic stir bar was placed in an agitating heating block and polyglycerol-10 (2.80 g, 0.004 mol) was transferred into the flask. Under an argon flow, dimethyl sebacate (0.40 g, 0.002 mol) and tin-(II)-2-ethylhexanoate (0.02 g) were added. The flask contents were heated up to 150° C under vacuum for 4 hours yielding a colorless, unclear melt. Then compound of formula A2 (7.00 g, 0.012 mol) was added into the flask. The reaction mixture was stirred under vacuum (20 mbar) at 205° C for 4 hours and at 225° C for 4 hours. The reaction was monitored using HPLC. After completion of the reaction, the hot reaction melt was poured on a steel plate and grounded to yield a UV-absorbing polymer composition (E) as a beige powder (7.3 g, melting point 128° C).

### Example 28:

A 100 mL glass flask containing a magnetic stir bar was placed in an agitating heating block and polyglycerol-10 (2.80 g, 0.004 mol) was transferred into the flask. Under an argon flow, dimethyl sebacate (0.40 g, 0.002 mol) and tin-(II)-2-ethylhexanoate (0.02 g) were added. The flask contents were heated up to 150° C under vacuum (20 mbar) for 4 hours yielding a colorless, unclear melt. Then compound of formula A1 (5.80 g, 0.012 mol) was added into the flask. The reaction mixture was stirred under vacuum (20 mbar) at 205° C for 6 hours and at 225° C for 4 hours. The reaction was monitored using HPLC. After completion of the reaction, the hot reaction melt was poured on a steel plate and grounded to yield a UV-absorbing polymer composition (E) as a light beige powder (6.6 g, melting point 88° C).

### Example 29:

A 100 mL glass flask containing a magnetic stir bar was placed in an agitating heating block and polyglycerol-10 (2.80 g, 0.004 mol) was transferred into the flask. Under an argon flow, dimethyl sebacate (0.40 g, 0.002 mol) and tin-(II)-2-ethylhexanoate (0.02 g) were added. The flask contents were heated up to 150° C under vacuum (20 mbar) for 4 hours yielding a colorless, unclear melt. Then the product obtained according example 2 (6.40 g) was added into the flask. The reaction mixture was stirred under vacuum (20 mbar) at 205° C for 6 hours and at 225° C for 4 hours yielding an orange, clear melt. The reaction was monitored using HPLC. After completion of the reaction, the hot reaction melt was poured on a steel plate and grounded to yield a UV-absorbing polymer composition (E) as a beige powder (6.7 g, melting point 93° C).

### Example 30:

A 100 mL glass flask containing a magnetic stir bar was placed in an agitating heating block and triglycerol (2.80 g, 0.012 mol) was transferred into the flask. Under an argon flow, dimethyl sebacate (1.40 g, 0.006 mol) and tin-(II)-2-ethylhexanoate (0.02 g) were added. The flask contents were heated up to 150° C under vacuum (20 mbar) for 4 hours yielding a colorless, clear melt. Then product obtained according example 2 (12.80 g) was added into the flask. The reaction mixture was stirred under vacuum (20 mbar) at 205° C for 4 hours and at 225° C for 4 hours yielding an orange, clear melt. The reaction was monitored using HPLC. After completion of the reaction, the hot reaction melt was poured on a steel plate and grounded to yield a UV-absorbing polymer composition (E) as a beige powder (12.6 g, melting point 110° C).

### Example 31:

A 100 mL glass flask containing a magnetic stir bar was placed in an agitating heating block and e-caprolactone (1.70 g, 0.015 mol) was transferred into the flask. Under an argon flow, triglycerol (1.80 g, 0.008 mol) and tin-(II)-2-ethylhexanoate (0.02 g) were added. The flask contents were heated up to 170° C under vacuum (20 mbar) for 2 hours yielding a colorless, clear melt. Then compound of formula A1 (10.90 g, 0.023 mol) was added into the flask. The reaction mixture was stirred under vacuum (20 mbar) at 205° C for 6 hours yielding a yellow, clear melt. The reaction was monitored using HPLC. After completion of the reaction, the hot reaction melt was poured on a steel plate and grounded to yield a UV-absorbing polymer composition (E) as a beige powder (10.4 g, melting point 92° C).

### Example 32:

A 100 mL glass flask containing a magnetic stir bar was placed in an agitating heating block and e-caprolactone (1.70 g, 0.015 mol) was transferred into the flask. Under an argon flow, polyglycerol-10 (5.70 g, 0.008 mol) and tin-(II)-2-ethylhexanoate (0.02 g) were added. The flask contents were heated up to 170° C under vacuum (20 mbar) for 2 hours yielding a colorless, clear melt. Then compound of formula A1 (10.90 g, 0.023 mol) was added into the flask. The reaction mixture was stirred under vacuum (20 mbar) at 205° C for 6 hours yielding a yellow, clear melt. The reaction was monitored using HPLC. After completion of the reaction, the hot reaction melt was poured on a steel plate and grounded to yield a UV-absorbing polymer composition (E) as a beige powder (14.1 g, melting point 69° C).

### Example 33:

A 100 mL glass flask containing a magnetic stir bar was placed in an agitating heating block and e-caprolactone (1.70 g, 0.015 mol) was transferred into the flask. Under an argon flow, triglycerol (1.80 g, 0.008 mol) and tin-(II)-2-ethylhexanoate (0.02 g) were added. The flask contents were heated up to 170° C under vacuum (20 mbar) for 2 hours yielding a colorless, clear melt. Then compound of formula A2 (13.00 g, 0.023 mol) was added into the flask. The reaction mixture was stirred under vacuum (20 mbar) at 205° C for 8 hours yielding a red, clear melt. The reaction was monitored using HPLC. After completion of the reaction, the hot reaction melt was poured on a steel plate and grounded to yield a UV-absorbing polymer composition (E) as a yellow powder (11.5 g, melting point 139° C).

### Example 34:

A 100 mL glass flask containing a magnetic stir bar was placed in an agitating heating block and e-caprolactone (1.70 g, 0.015 mol) was transferred into the flask. Under an argon flow, polyglycerol-10 (5.70 g, 0.008 mol) and tin-(II)-2-ethylhexanoate (0.02 g) were added. The flask contents were heated up to 170° C under vacuum (20 mbar) for 2 hours yielding a colorless, clear melt. Then compound of formula A2 (13.00 g, 0.023 mol) was added into the flask. The reaction mixture was stirred under vacuum (20 mbar) at 205° C for 8 hours yielding a red, clear melt. The reaction was monitored using HPLC. After completion of the reaction, the hot reaction melt was poured on a steel plate and grounded to yield a UV-absorbing polymer composition (E) as a yellow powder (15.3 g, melting point 94° C).

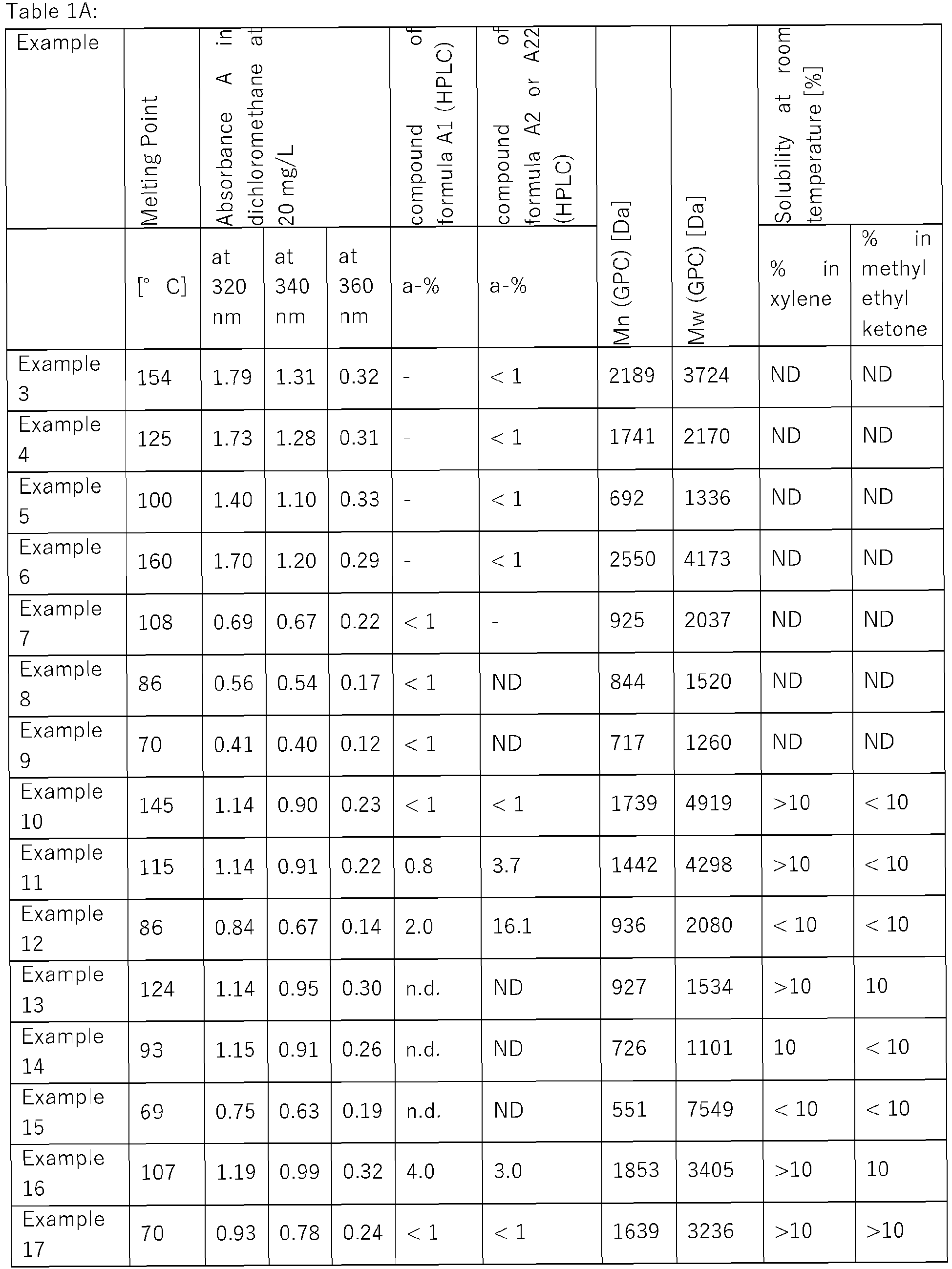

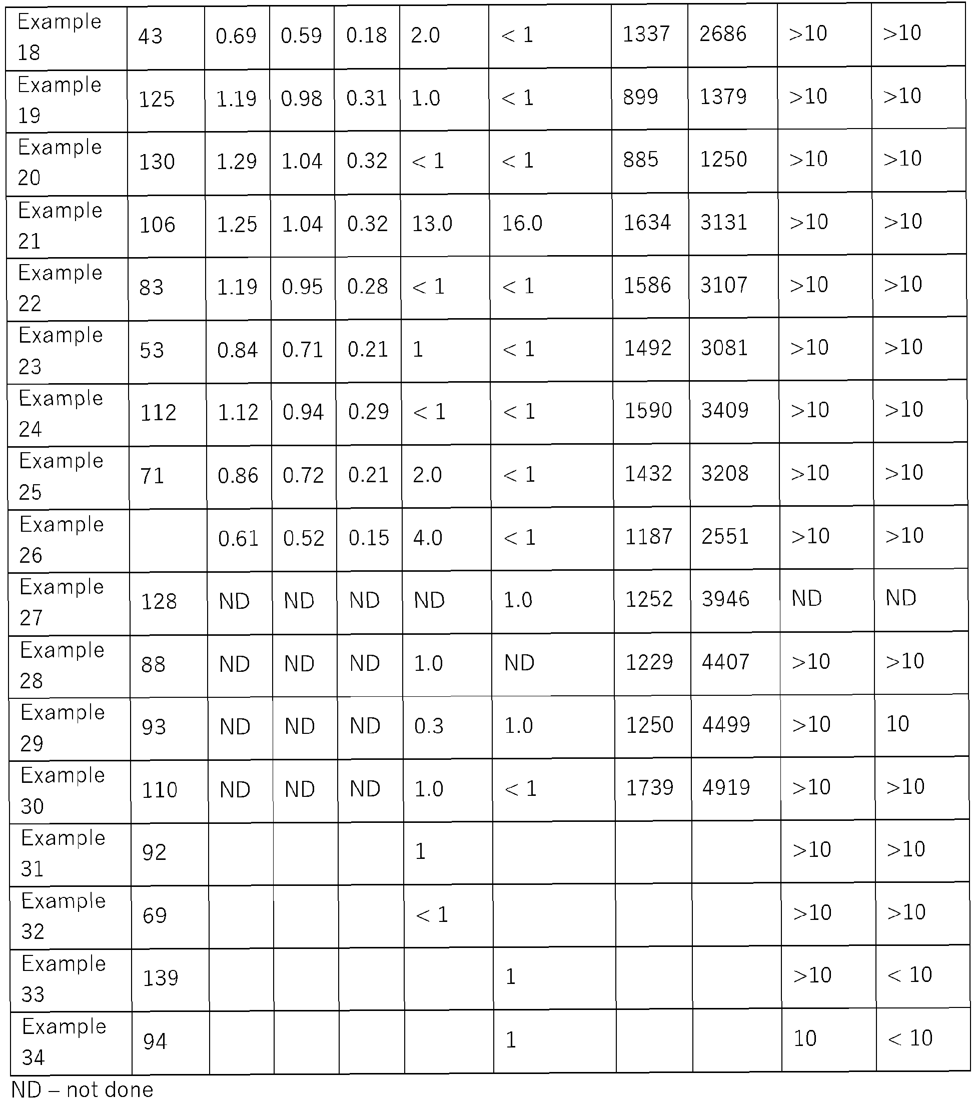

**Table 1B: Hydroxy number in accordance to DIN EN ISO 4629-2**

| Example | hydroxyl number [mg KOH/g] |
|---|---|
| Example 8 | 212 |
| Example 21 | 89 |
| Example 30 | 148 |
| Example 31 | 136 |

The UV-absorbing polymer composition (E) obtained according to the presently claimed invention was tested for stabilizing an acrylic/melamine clear coating (thermoset acrylic system). The thermoset acrylic systems are widely used in automotive and high-grade industrial coatings. Therefore, the selected coating is representative for automotive and industrial applications.

**Table 2:**

| | |
|---|---|
| Viacryl^{®} SC 303/65XB¹⁾ | 30.14 |
| Viacryl^{®} SC 370/75SNA²⁾ | 25.58 |
| Maprenal^{®} MF 650³⁾ | 29.90 |
| Butyl acetate/butanol (37/8) | 4.74 |
| Isobutanol | 5.34 |
| Solvesso^{®} 150⁴⁾ | 2.98 |
| Baysilone^{®} MA⁵⁾ | 1.31 |
| Sum | 100.00 |

| | |
|---|---|
| 1) Acrylic resin (65% solution in xylene/butanol); Allnex 2) Acrylic resin (75% solution in Solventnaphtha 150/180); Allnex 3) Melamine resin (55% solution in isobutanol); Ineos melamines 4) Aromatic hydrocarbon mixture, boiling range 180-210° C; 5) 1% polysiloxane in Solvesso 150; OMG Borchers | |

1 % of the ultraviolet radiation absorbing polymer (E) to be tested was added to the acrylic/melamine clear coating based on the solid content of the coating (solid content is 53 %). The coating is mixed with a high-speed shaker for 2 minutes in the presence of glass beads. The clear coating was applied onto a white coil coated panel and cured at 130° C for 30 minutes (dry film thickness: 40 µm). The gloss at 20° (DIN EN ISO 2813) were determined (see table 3).

**Table 3:**

| UV radiation absorbing polymer (E) | Gloss unit / 20° |
|---|---|
| Example 3 | 87.8 |
| Example 4 | 86.9 |
| Example 5 | 87.4 |
| Example 7 | 87.3 |
| Example 8 | 86.8 |
| Example 9 | 87.0 |
| Comparative 1 (Example 18 in WO2014/004176) | 77.8 |
| Comparative 2 (Example 21 in WO2014/004176) | 65.2 |

The coating compositions comprising the ultraviolet radiation absorbing polymer (E) according to presently claimed invention display similar gloss values compared to the reference standard. They also showed good stability and did not migrate or agglomerate in the coating composition. The ultraviolet radiation absorbing polymer (E) of the presently claimed invention did not impact negatively the secondary film properties such as the gloss and the color. The conventional polyester has a negative impact on gloss of the coating formulation. The 2 comparative polymers do not have hydroxy groups available for undergoing covalent bonds with other constituents in the coating composition. The free phenyl-OH-groups ortho to triazine ring are not available for undergoing covalent bonds, because they are involved in a hydrogen bond with triazine-N-atoms. Thus, it is necessary to have free aliphatic OH-groups which can undergo covalent bonds with other reactive groups in the coating composition.

## Claims

1. An ultraviolet radiation absorbing polymer (E) or a salt thereof obtained by:
i. reacting at least one compound of formula (A) 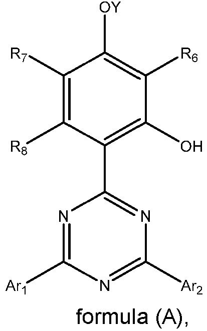
wherein Ar₁ and Ar₂ are independently of each other a moiety of the formula (B), 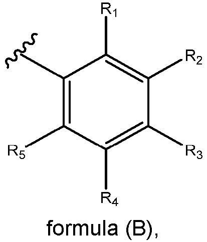
wherein R₁, R₂, R₃, R₄ and R₅ are independently of each other selected from the group consisting of hydrogen, halogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl, substituted or unsubstituted C₁-C₂₄ heteroaryl, substituted or unsubstituted C₇-C₂₄ arylalkyl, C(=O)-R, substituted or unsubstituted, linear or branched C₁-C₂₄ heteroalkyl, substituted or unsubstituted, linear or branched C₂-C₂₄ heteroalkenyl, substituted or unsubstituted C₅-C₂₄ heterocycloalkyl, substituted or unsubstituted C₅-C₂₄ heterocycloalkenyl, OR, NRR' and C(=O)-NRR'; or
R₁ and R₂ together with the carbon atoms to which they are bonded or
R₂ and R₃ together with the carbon atoms to which they are bonded or
R₃ and R₄ together with the carbon atoms to which they are bonded or
R₄ and R₅ together with the carbon atoms to which they are bonded form an unsaturated or aromatic 5- to 20-membered carbocyclic ring that optionally contains 1, 2 or 3 heteroatom(s) selected from O, N or S as ring member(s);
R₆, R₇ and R₈ are independently of each other selected from the group consisting of hydrogen, halogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, C(=O)-R, substituted or unsubstituted, linear or branched C₁-C₂₄ heteroalkyl, substituted or unsubstituted, linear or branched C₂-C₂₄ heteroalkenyl, substituted or unsubstituted C₅-C₂₄ hetrocycloalkyl, substituted or unsubstituted C₅-C₂₄ heterocycloalkenyl and OR, or
R₇ and R₈ together with the carbon atoms to which they are bonded form an unsaturated or aromatic 5- to 20-membered carbocyclic ring that optionally contains 1, 2 or 3 heteroatom(s) selected from O, N or S as ring member(s);
R and R' are independently of each other selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl and substituted or unsubstituted C₇-C₂₄ arylalkyl;
Y is a formula -CR₁₁R₁₂R₁₃; with a proviso wherein at least one of the R₁₁, R₁₂ and R₁₃ contains at least one functional group selected from the group consisting of -C(=O)OR", -C(=O)CI, - C(=O)NH₂ and -C(=O)NHR";
wherein R₁₁ and R₁₂ are independently of each other selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl, substituted or unsubstituted C₇-C₂₄ arylalkyl, C₁-C₂₄ alkyloxy, substituted or unsubstituted, linear or branched C₂-C₂₄ alkenyloxy, substituted or unsubstituted C₅-C₂₄ cycloalkyloxy, substituted or unsubstituted C₅-C₂₄ cycloalkenyloxy, substituted or unsubstituted C₆-C₂₄ aryloxy and substituted or unsubstituted C₇-C₂₄ arylalkyloxy;
R₁₃ is selected from the group consisting of substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl, substituted or unsubstituted C₇-C₂₄ arylalkyl, C₁-C₂₄ alkyloxy, substituted or unsubstituted, linear or branched C₂-C₂₄ alkenyloxy, substituted or unsubstituted C₅-C₂₄ cycloalkyloxy, substituted or unsubstituted C₅-C₂₄ cycloalkenyloxy, substituted or unsubstituted C₆-C₂₄ aryloxy and substituted or unsubstituted C₇-C₂₄ arylalkyloxy;
wherein R" is selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl and substituted or unsubstituted C₇-C₂₄ arylalkyl; and
ii.at least one compound of formula (C), 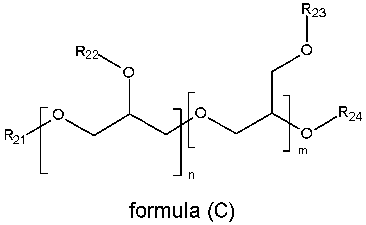
wherein m and n are independently from each other an integer from 0 to 20;
wherein m + n ≥ 2;
wherein R₂₁, R₂₂, R₂₃ and R₂₄ are independently of each other selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl, substituted or unsubstituted C₇-C₂₄ arylalkyl, -[(C=O)-(CH₂)ₜ-NH]ⱼ-R₂₅, -[(C=O)-(CH-₂)ₜ-O]ⱼ-R₂₅ and -(C=O)R₂₆;
wherein R₂₅ is selected from the group consisting of hydrogen, substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl and substituted or unsubstituted C₇-C₂₄ arylalkyl; "t" is an integer in the range of 4 to 11 and "j" is an integer in the range of 1 to 100;
R₂₆ is selected from the group consisting of substituted or unsubstituted, linear or branched C₁-C₂₄ alkyl, substituted or unsubstituted, linear or branched C₂-C₂₄ alkenyl, substituted or unsubstituted C₅-C₂₄ cycloalkyl, substituted or unsubstituted C₅-C₂₄ cycloalkenyl, substituted or unsubstituted C₆-C₂₄ aryl and substituted or unsubstituted C₇-C₂₄ arylalkyl;
with the proviso that at least one of R₂₁, R₂₂, R₂₃ or R₂₄ is hydrogen,
or in case that none of R₂₁, R₂₂, R₂₃ and R₂₄ is hydrogen at least one of R₂₁, R₂₂, R₂₃ or R₂₄ is selected from the group consisting of substituted, linear or branched C₁-C₂₄ alkyl wherein at least one substituent is -OH or -NH₂, substituted C₂-C₂₄ alkenyl wherein at least one substituent is -OH or -NH₂, substituted C₅-C₂₄ cycloalkyl wherein at least one substituent is - OH or -NH₂, substituted C₅-C₂₄ cycloalkenyl wherein at least one substituent is -OH or -NH₂, substituted C₆-C₂₄ aryl wherein at least one substituent is -OH or -NH₂, substituted C₇-C₂₄ arylalkyl wherein at least one substituent is -OH or -NH₂, -[(C=O)-(CH₂)ₜ-NH]ⱼ-R₂₇, -[(C=O)-(CH₂)ₜ-O]ⱼ-R₂₇ and -(C=O)R₂₈, wherein R₂₇ is selected from the group consisting of hydrogen, substituted linear or branched C₁-C₂₄ alkyl, substituted linear or branched C₂-C₂₄ alkenyl, substituted C₅-C₂₄ cycloalkyl, substituted C₅-C₂₄ cycloalkenyl, substituted C₆-C₂₄ aryl substituted C₇-C₂₄ arylalkyl while at least one substituent in these moieties is -OH or -NH₂ , "t" is an integer in the range of 4 to 11 and "j" is an integer in the range of 1 to 100;
R₂₈ is selected from the group consisting of substituted linear or branched C₁-C₂₄ alkyl, substituted linear or branched C₂-C₂₄ alkenyl, substituted C₅-C₂₄ cycloalkyl, substituted C₅-C₂₄ cycloalkenyl, substituted C₆-C₂₄ aryl substituted C₇-C₂₄ arylalkyl while at least one substituent in these moieties is -OH or -NH₂; and/or
iii) at least one modified compound of formula (C) obtained by reacting at least one compound of formula (C) with at least one alkyl polyester,
wherein the ultraviolet radiation absorbing polymer (E) having hydroxy number in the range of ≥ 10 to ≤ 1000 mg KOH/g.

2. The ultraviolet radiation absorbing polymer (E) or a salt thereof according to claim 1, wherein R₁, R₂, R₃, R₄ and R₅ are independently of each other selected from the group consisting of hydrogen, substituted or unsubstituted, linear or branched C₁-C₂₄ alkyl, substituted or unsubstituted C₅-C₂₄ cycloalkyl, substituted or unsubstituted C₆-C₂₄ aryl, substituted or unsubstituted C₁-C₂₄ heteroaryl, substituted or unsubstituted C₇-C₂₄ arylalkyl, C(=O)-R, substituted or unsubstituted, linear or branched C₁-C₂₄ heteroalkyl and OR;
wherein R is as defined as in claim 1.

3. The ultraviolet radiation absorbing polymer (E) or a salt thereof according to claims 1 to 2, wherein the compound of formula (A) is selected from the group consisting of

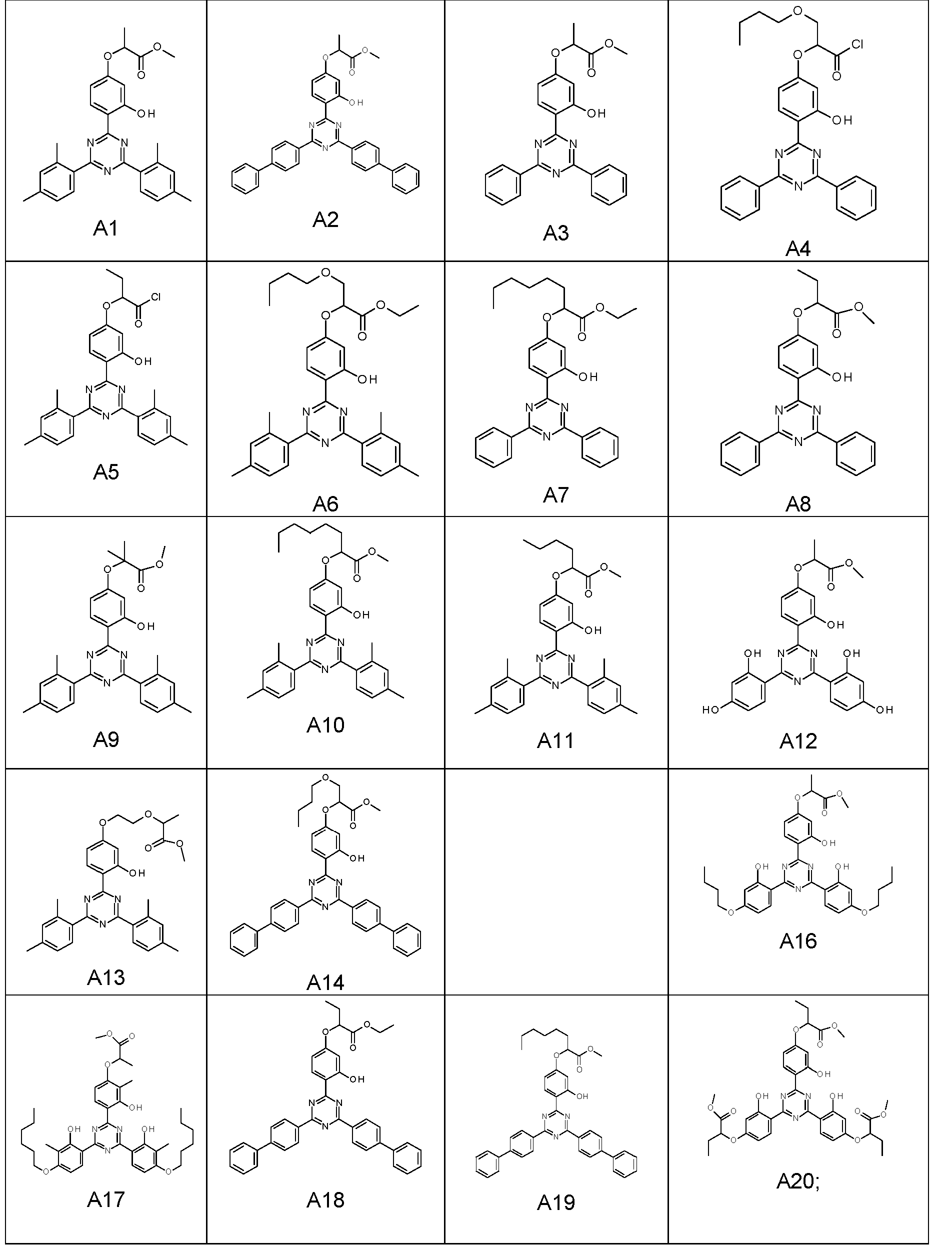

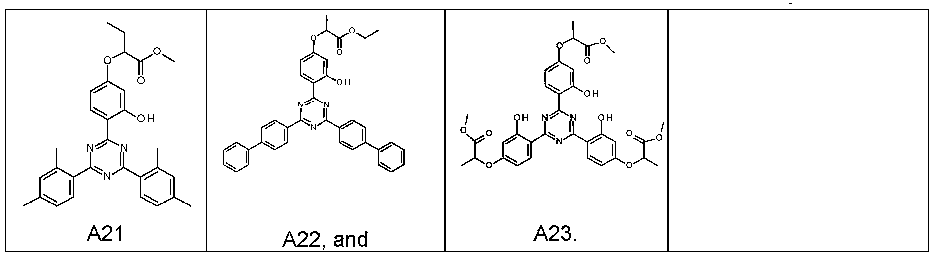

4. The ultraviolet radiation absorbing polymer (E) or a salt thereof according to claim 1, wherein the compound of formula (C) is selected from the group consisting of polyglycerol-3, polyglycerol-4, polyglycerol-6, polyglycerol-10, polyglyceryl-10 stearate, polyglyceryl-10 oleate, polyglyceryl-10 laurate, polyglyceryl-10 dioleate, polyglyceryl-10 distearate, polyglyceryl-10 diisostearate, polyglyceryl-10 dipalmitate, polyglyceryl-2 caprate, polyglyceryl-2 caprylate, polyglyceryl-2 laurate, polyglyceryl-2 myristate, polyglyceryl-2 isopalmitate, polyglyceryl-2 palmitate, polyglyceryl-2 isostearate, polyglyceryl-2 stearate, polyglyceryl-2 oleate, polyglyceryl-2 isopalmitate/sebacate, polyglyceryl-3 caprate, polyglyceryl-3 laurate, polyglyceryl-3 myristate, polyglyceryl-3 palmitate, polyglyceryl-3 isostearate, polyglyceryl-3 oleate, polyglyceryl-3 stearate, polyglyceryl-3 ricinoleate, polyglyceryl-3 behenate, palm oil polyglyceryl-3 esters, polyglyceryl-3 beeswax, polyglyceryl-3 soyate/shea butterate, sunflower seed oil polyglyceryl-3 esters, polyglyceryl-3 diisostearate, polyglyceryl-3 triisostearate, polyglyceryl-4 caprate, polyglyceryl-4 laurate, polyglyceryl-4 myristate, polyglyceryl-4 palmitate, polyglyceryl-4 isostearate, polyglyceryl-4 oleate, polyglyceryl-4 stearate, polyglyceryl-4 ricinoleate, polyglyceryl-4 behenate, palm oil polyglyceryl-4 esters, polyglyceryl-4 beeswax, polyglyceryl-4 soyate/shea butterate, sunflower seed oil polyglyceryl-4 esters, polyglyceryl-4 dilaurate, polyglyceryl-4 distearate, polyglyceryl-4 tristearate, polyglyceryl-6 caprate, polyglyceryl-6 laurate, polyglyceryl-6 myristate, polyglyceryl-6 palmitate, polyglyceryl-6 isostearate, polyglyceryl-6 oleate, polyglyceryl-6 stearate, polyglyceryl-6 ricinoleate, polyglyceryl-6 behenate, palm oil polyglyceryl-6 esters, polyglyceryl-6 beeswax, polyglyceryl-6 soyate/shea butterate, sunflower seed oil polyglyceryl-6 esters, polyglyceryl-6 dilaurate, polyglyceryl-6 distearate, polyglyceryl-6 tristearate, polyglyceryl-6 dioleate, polyglyceryl-6 tetraoleate, polyglyceryl-6 triisostearate, polyglyceryl-6 pentastearate, polyglyceryl-6 trioleate, polyglyceryl-6 dicaprylate, polyglyceryl-6 dicaprate, polyglyceryl-6 tricaprylate, polyglyceryl-10 caprate, polyglyceryl-10 laurate, polyglyceryl-10 myristate, polyglyceryl-10 palmitate, polyglyceryl-10 isostearate, polyglyceryl-10 oleate, polyglyceryl-10 stearate, polyglyceryl-10 ricinoleate, polyglyceryl-10 behenate, palm oil polyglyceryl-10 esters, polyglyceryl-10 beeswax, polyglyceryl-10 soyate/shea butterate, sunflower seed oil polyglyceryl-10 esters, polyglyceryl-10 dilaurate, polyglyceryl-10 distearate, polyglyceryl-10 tristearate, polyglyceryl-10 dioleate, polyglyceryl-10 tetraoleate, polyglyceryl-10 triisostearate, polyglyceryl-10 pentastearate, polyglyceryl-10 trioleate, polyglyceryl-10 dicaprylate, polyglyceryl-10 dicaprate, polyglyceryl-10 tricaprylate, polyglyceryl-10 trilaurate, polyglyceryl-10 tetralaurate, polyglyceryl-10 pentahydroxystearate, polyglyceryl-20 hexacaprylate, polyglyceryl-20 heptacaprylate, polyglyceryl-20 octaisononanoate, polyglyceryl-20 docosabehenate/isostearate, polyglyceryl-20 docosabehenate/laurate, polyglyceryl-20 docosabehenate/oleate and polyglyceryl-20 heptadecabehenate/laurate.

5. The ultraviolet radiation absorbing polymer (E) or a salt thereof according to any of the preceding claims, wherein the mol ratio of the compound of formula (A) to the compound of formula (C) is in the range of ≥ 1.0:10 to ≤ 20:1.0.

6. The ultraviolet radiation absorbing polymer (E) or a salt thereof according to any of the claims 1 to 5, wherein the ultraviolet radiation absorbing polymer has a weight average molecular weight in the range of ≥ 500 to 25000 g/mol, as determined according to GPC.

7. The ultraviolet radiation absorbing polymer (E) or a salt thereof according to any of the claims 1 to 5, wherein the ultraviolet radiation absorbing polymer has a number average molecular weight in the range of ≥ 500 to 10000 g/mol, as determined according to GPC.

8. The ultraviolet radiation absorbing polymer (E) or a salt thereof according to any of claims 1 to 7, wherein the ultraviolet radiation absorbing polymer has UV absorbance in dichloromethane at 20 mg/L at 320 nm ≥ 0.3.

9. A method for preparing an ultraviolet radiation absorbing polymer (E) according to any one of the preceding claims, wherein the process comprising the steps of:
i) mixing at least one compound of formula (A) and at least compound of formula (C) and/or at least one modified compound of formula (C) to obtain a mixture;
ii) heating the mixture obtained in step i. to a desired temperature to obtain ultraviolet radiation absorbing polymer (E); and
iii) isolating the ultraviolet radiation absorbing polymer (E) obtained in step ii).

10. The method according to claim 9, wherein the step ii) is conducted at a temperature in the range of ≥ 100 to ≤ 300 °C.

11. Use of the polymer according to one or more of caims 1 to 8 or the polymer obtained according to method of according to 9 or 10 and the salt thereof as a UV absording polymer in a coating composition.

12. A coating composition comprising at least one ultraviolet radiation absorbing polymer according to any of the claims 1 to 8 or the polymer obtained according to any of the claims 9 or 10 or the salt thereof.

13. A coating composition comprising:
a. at least one coating resin; and
b. at least one ultraviolet radiation absorbing polymer (E) according to claims 1 to 8 or at least one ultraviolet radiation absorbing polymer (E) obtained according to any of the claims 9 or 10 or the salt thereof

14. The composition according to any of claims 12 or 13 additionally comprising at least one hindered amine light stabilizer (F).

15. A method of stabilizing a coating composition on a substrate towards ultraviolet radiation induced degradation, wherein the method comprises applying the coating composition of any of the claims 12 to 14 to a substrate.

## Patentansprüche

1. Ein ultraviolettstrahlungsabsorbierendes Polymer (E) oder ein Salz davon, gewonnen durch:
i. wobei mindestens eine Verbindung der Formel (A) reagiert 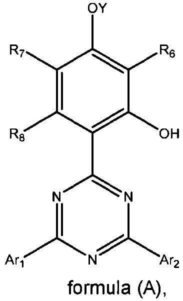
wobei Ar1 und Ar2 unabhängig voneinander eine Halbzeit der Formel (B) sind, 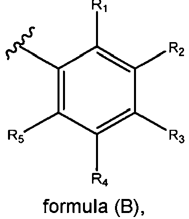
wobei R1, R2, R3, R4 und R5 unabhängig voneinander aus der Gruppe ausgewählt werden, die aus Wasserstoff, Halogen, substituierten oder unsubstituierten, linearen oder verzweigten C1-C24-Alkyl, substituierten oder unsubstituierten, linearen oder verzweigten C2C24-Alkenyl, substituiertem oder unsubstituiertem C5-C24-Cycloalkenyl, substituiertem oder unsubstituiertem C5-C24-Cycloalkenyl, substituiertem oder unsubstituiertem C6 besteht-C24 Aryl, ersetzter oder unersetzter C1-C24 Heteroaryl, substituierter oder unsubstituierter C7C24 Arylalkyl, C(=O)-R, ersetzter oder unersetzter, linearer oder verzweigter C1-C24 Heteroalkyl, ersetzter oder unersetzter, linearer oder verzweigter C2C24 Heteroalkenyl, substituierter oder unersetzter C 5-C24 Heterocycloalkyl, ersetzter oder unsubstituierter C 5-C24 Heterocycloalkenyl, OR, NRR' und C(=O)-NRR'; oder
R1 und R2 zusammen mit den Kohlenstoffatomen, an die sie gebunden sind, oder R2 und R3 zusammen mit den Kohlenstoffatomen, an die sie gebunden sind, oder R3 und R4 zusammen mit den Kohlenstoffatomen, an die sie gebunden sind, oder
R4 und R5 bilden zusammen mit den Kohlenstoffatomen, an die sie gebunden sind, einen ungesättigten oder aromatischen 5- bis 20-gliedrigen karbozyklischen Ring, der optional 1, 2 oder 3 Heteroatome enthält, die aus O, N oder S als Ringelemente ausgewählt werden;
R6, R7 und R8 werden unabhängig voneinander aus der Gruppe ausgewählt, die aus Wasserstoff, Halogen, substituiertem oder unsubstituiertem, linearem oder verzweigtem C1-C24-Alkyl, substituiertem oder unsubstituiertem, linearem oder verzweigtem C2C24-Alkenyl, substituiertem oder unsubstituiertem C5-C24-Cycloalkenyl, C(=O)-R, substituiertem oder unsubstituiertem, linearem oder verzweigtem C1-C24-Heteroalkyl besteht, ersetzte oder unerstattliche, lineare oder verzweigte C2C24
heteroalkenyl, substituierte oder unsubstituierte C 5-C24 Hetrocycloalkyl, ersetzte oder unsubstituierte C 5-C24 Heterocycloalkenyl und OR, oder
R7 und R8 bilden zusammen mit den Kohlenstoffatomen, an die sie gebunden sind, einen ungesättigten oder aromatischen 5- bis 20-leimigen Kohlenstoffring, der optional 1, 2 oder 3 Heteroatome enthält, die aus 0 Nor Sas Ringelementen ausgewählt werden;
R und R' werden unabhängig voneinander ausgewählt und aus der Gruppe ausgewählt, die aus Wasserstoff, substituiertem oder unsubstituiertem, linearem oder verzweigtem C1-C24-Alkyl, substituiertem oder unsubstituiertem, linearem oder verzweigtem C2C24-Alkenyl, substituiertem oder unersetztem C5-C24-Cycloalkenyl, substituiertem oder unersetztem C6-C24-Aryl und ersetztem oder unersetztem C7C24-Arylalkyl besteht;
Y ist eine Formel -CR11R12R13; mit der Bedingung, dass mindestens eine der R11, R12 und R13 mindestens eine Funktionalgruppe enthält, die aus der Gruppe aus -C(=O)OR", -C(=O)Cl, - C(=O)NH2 und -C(=O)NHR" besteht;
wobei R11 und R12 unabhängig voneinander aus der Gruppe ausgewählt werden, die aus Wasserstoff, substituiert oder unsubstituiert, linearem oder verzweigtem C1-C24-Alkyl, substituiertem oder unsubstituiertem, linearem oder verzweigtem C2C24-Alkenyl, substituiertem oder unsubstituiertem C5-C24-Cycloalkenyl, substituiertem oder unsubstituiertem C5-C24-Cycloalkenyl, substituiertem oder unsubstituiertem C6 besteht-C24 Aryl, ersetztes oder unersetztes C7C24 Arylalkyl, C1-C24 Alkyloxy, substituiert oder unsubstituiert, lineares oder verzweigtes C2C24 Alkenyloxy, substituierte oder unersetzte C 5-C24 Cycloalkyloxy, substituierte oder unsubstituierte C 6-C24 Cycloalkenyloxy, ersetztes oder unsubstituiert C 6-C24 Aryloxy und ersetztes oder unersetztes C7C24 Arylalkyloxy;
R13 wird aus der Gruppe ausgewählt, die aus substituiertem oder unersetztem, linearem oder verzweigtem C1-C24-Alkyl, substituiertem oder unsubstituiertem, linearem oder verzweigtem C2C24-Alkenyl, substituiertem oder unersetztem C5-C24-Cycloalkenyl, substituiertem oder unersetztem C6-C24-Aryl, substituiertem oder unersetztem C7C24-Arylalkyl, C1-C24-Alkyloxid, substituiertem oder unersetztem, linearem oder verzweigtem C2C24-Alkenyloxid, ersetztes oder unsubstituiertes C 5-C24-Cycloalkyloxy, ersetztes oder unersetztes C 5-C24-Cycloalkenyloxy, ersetztes oder unersetztes C 6-C24 Aryloxy und ersetztes oder unersetztes C7C24 Arylalkyloxy;
wobei R" aus der Gruppe ausgewählt wird, die aus Wasserstoff, substituiertem oder unsubstituiertem, linearem oder verzweigtem C1-C24-Alkyl, substituiertem oder unersetztem, linearem oder verzweigtem C2C24-Alkenyl, substituiertem oder unersetztem C5-C24-Cycloalkyl, substituiertem oder unsubstituiertem C5-C24-Cycloalkenyl, substituiertem oder unersetztem C6-C24-Aryl und ersetztem oder unersetztem C5C24-Arylalkyl besteht; und
ii.mindestens eine Verbindung der Formel (C), 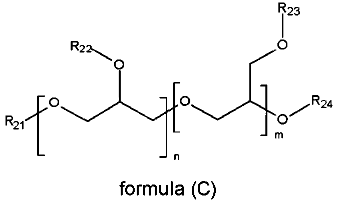
wobei m und n unabhängig voneinander eine ganze Zahl von 0 bis 20 sind; wobei m + n ≥ 2;
wobei R21, R22, R23 und R24 unabhängig voneinander ausgewählt werden, aus der Gruppe aus Wasserstoff, substituiert oder unsubstituiert, linearem oder verzweigtem C1-C24-Alkyl,
ersetztes oder unersetztes, lineares oder verzweigtes C2C24-Alkenyl, ersetztes oder unersetztes C5-C24-Cycloalkyl , ersetztes oder unersetztes C5-C24-Cycloalkenyl, ersetztes oder unersetztes C6-C24-Aryl, ersetztes oder unersetztes C7C24 Arylalkyl, -[(C=O)-(CH2)t-NH]j-R25, -[(C=O)-(CH-2)t-O]j-R25 und -(C=O)R26;
wobei R25 aus der Gruppe ausgewählt wird, die aus Wasserstoff, substituiertem oder unsubstituiertem, linearem oder verzweigtem C1-C24-Alkyl, substituiertem oder unsubstituiertem, linearem oder verzweigtem C2C24-Alkenyl, substituiertem oder unsubstituiertem C5-C24-Cycloalkenyl, substituiertem oder unsubstituiertem C6-C24-Aryl und substituiertem oder unsubstituiertem C2C24-Arylalkyl besteht; "t" ist eine ganze Zahl im Bereich von 4 bis 11 und "j" eine ganze Zahl im Bereich von 1 bis 100;
R26 wird aus der Gruppe ausgewählt, die aus substituiertem oder unersetztem, linearem oder verzweigtem C1-C24-Alkyl, substituiertem oder unersetztem, linearem oder verzweigtem C2C24-Alkenyl, substituiertem oder unersetztem C5-C24-Cycloalkyl, substituiertem oder unersetztem C5-C24-Cycloalkenyl, substituiertem oder unersetztem C6-C24-Aryl sowie ersetztem oder unersetztem C2C24-Arylalkyl besteht;
mit der Bedingung, dass mindestens eines von R21, R22, R23 oder R24 Wasserstoff ist,
oder, falls keines von R21, R22, R23 und R24 Wasserstoff ist, wird mindestens einer von R21, R22, R23 oder R24 aus der Gruppe ausgewählt, die aus substituierten, linearen oder verzweigten C1-C24-Alkylen besteht, wobei mindestens ein Substituent -OH oder -NH2 ist, ersetzt C2C24-Alkenyl, wobei mindestens ein Substituent -OH oder -NH2 ist, ersetzte C5-C24 Cycloalkyl, wobei mindestens ein Substituent ist - OH oder -NH2, ersetzte C5-C24 Cycloalkenyl, wobei mindestens ein Substituent -OH oder -NH2 ist, ersetzte C6-C24 Aryl, wobei mindestens ein Substituent -OH oder -NH2 ist, ersetzte C2C24 arylalkyl, wobei mindestens ein Substituent -OH oder -NH2 ist, -[(C=O)-(CH2)t-NH]j-R27, -[(C=O)-(CH2)j-O]j-R27 und -(C=O)R28, wobei R27 aus der Gruppe aus Wasserstoff ausgewählt wird, der linearen oder verzweigten C1-C24-Alkyl, der eingesetzte lineare oder verzweigte C2C24-Alkenyl, ersetzte C5-C24-Cycloalkyl, ersetzte C5-C24-Cycloalkenyl, ersetzte C6-C24-Aryl ersetzte C2C24-Arylalkyl, wobei mindestens ein Substituent in diesen Gruppen -OH oder - NH2 ist, "t" eine ganze Zahl im Bereich von 4 bis 11 und "j" eine ganze Zahl im Bereich von 1 bis 100 ist;
R28 wird aus der Gruppe ausgewählt, die aus substituiertem linearem oder verzweigtem C1-C24-Alkyl, substituiertem linearem oder verzweigtem C2C24-Alkenyl, substituiertem C5-C24-Cycloalkyl, ersetztem C5-C24-Cycloalkenyl, ersetztem C6-C24-Aryl ersetztem C2C24-Arylalkyl umfasst, während mindestens ein Substituent in diesen Einheiten -OH oder -NH2 ist; und/oder
iii) mindestens eine modifizierte Verbindung der Formel (C), die durch die Reaktion von mindestens einer Verbindung der Formel (C) mit mindestens einem Alkylpolyester gewonnen wurde,
wobei das ultraviolett-strahlungsabsorbierende Polymer (E) eine Hydroxyzahl im Bereich von ≥ 10 bis ≤ 1000 mg KOH/g hat.

2. Das ultraviolette strahlungsabsorbierende Polymer (E) oder ein Salz davon gemäß Anspruch 1, wobei R1, R2, R3, R4 und R5 unabhängig voneinander ausgewählt werden, ausgewählt aus der Gruppe aus Wasserstoff, substituiertem oder unsubstituiertem, linearem oder verzweigtem C1-C24-Alkyl, substituiertem oder unsubstituiertem C5-C24-Cycloalkyl, substituiertem oder unsubstituiertem C6-C24-Aryl, substituiertem oder unsubstituiertem C1-C24-Heteroaryl, ersetztes oder unersetztes C7C24 Arylalkyl, C(=O)-R, ersetztes oder unersetztes, lineares oder verzweigtes C1-C24 Heteroalkyl und OR;
wobei R wie in Anspruch 1 definiert ist.

3. Das ultraviolettstrahlungsabsorbierende Polymer (E) oder ein Salz davon gemäß den Ansprüchen 1 bis 2, wobei die Verbindung der Formel (A) aus der Gruppe ausgewählt wird, die aus

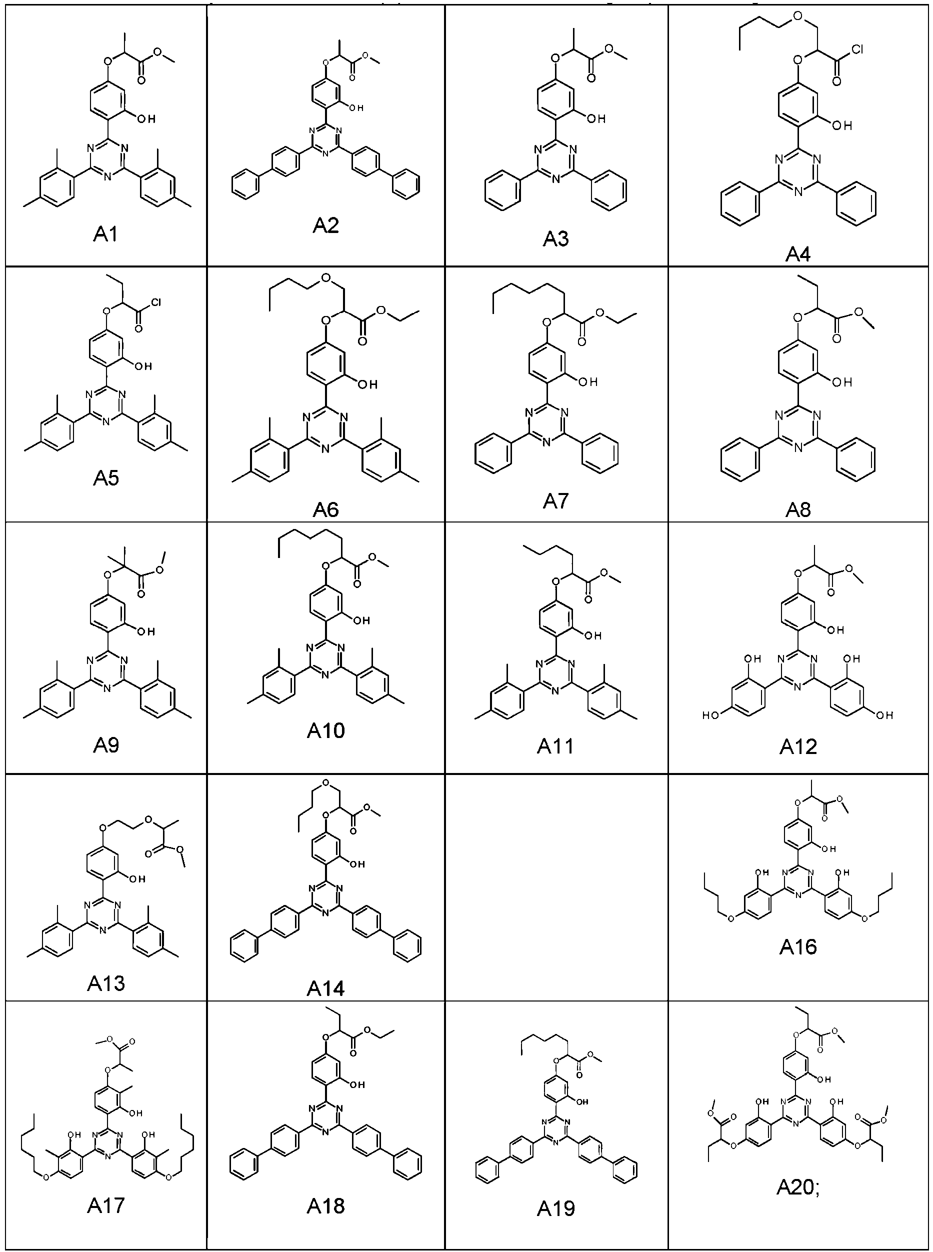

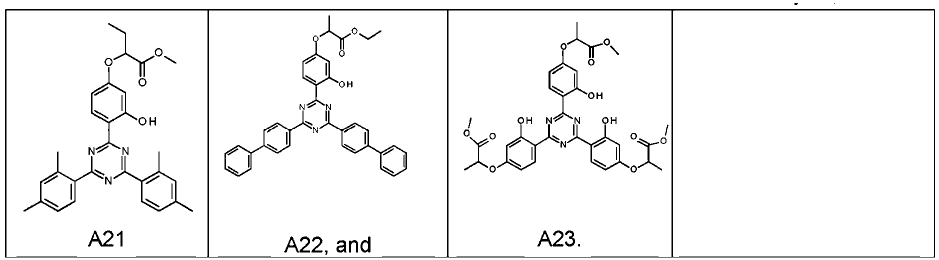

4. Das ultraviolette Strahlungsabsorbierende Polymer (E) oder ein Salz davon gemäß Anspruch 1, wobei
Die Verbindung der Formel (C) wird aus der Gruppe ausgewählt, die aus Polyglycerol-3, Polyglycerol-4, Polyglycerol-6, Polyglycerol-10, Polyglyceryl-10 Stearat, Polyglyceryl-10 Olat, Polyglyceryl-10 Laurat, Polyglyceryl-10 Dioleat, Polyglyceryl-10 Distearat besteht, Polyglyceryl-10 Diisostearat, Polyglyceryl-10 Dipalmitat, Polyglyceryl-2 Kaprat, Polyglyceryl-2 Caprylate,
Polyglyceryl-2-Laurat, Polyglyceryl-2-Myristat, Polyglyceryl-2-Isopalmitat, Polyglyceryl-2 Palmitat, Polyglyceryl-2 Isostearat, Polyglyceryl-2 Stearat, Polyglyceryl-2 Olat, Polyglyceryl-2 Isopalmitat/Sebacat, Polyglyceryl-3 Kaprat, Polyglyceryl-3 Laurat, Polyglyceryl-3 Myristat, Polyglyceryl-3 Palmitat, Polyglyceryl-3 Isostearat, Polyglyceryl-3 Olat, Polyglyceryl-3 Stearat, Polyglyceryl-3 Ricinolat, Polyglyceryl-3 Behenat, Palmöl Polyglyceryl-3 Ester, Polyglyceryl-3 Bienenwachs, Polyglyceryl-3 Soja/Sheabutterat, Sonnenblumenkernöl Polyglyceryl-3-Ester, Polyglyceryl-3-Diisostearat, Polyglyceryl-3-Triisostearat, Polyglyceryl-4-Kaprat, Polyglyceryl-4-Laurat, Polyglyceryl-4-Myristat, Polyglyceryl-4-Palmitat, Polyglyceryl-4 Isostearat, Polyglyceryl-4 Olat, Polyglyceryl-4 Stearat, Polyglyceryl-4 Ricinoleat, Polyglyceryl-4 Behenat, Palmöl Polyglyceryl-4 Ester, Polyglyceryl-4 Bienenwachs, Polyglyceryl-4 Soja/Sheabutterat, Sonnenblumenkernöl Polyglyceryl-4 Ester, Polyglyceryl-4 Dilaurat, Polyglyceryl-4 Distearat, Polyglyceryl-4 Tristearat, Polyglyceryl-6 Kaprat, Polyglyceryl-6 Laurat, Polyglyceryl-6 Myristat, Polyglyceryl-6 Palmitat, Polyglyceryl-6 Isostearat, Polyglyceryl-6-Olat, Polyglyceryl-6-Stearat, Polyglyceryl-6-Ricinoleat, Polyglyceryl-6-Behenat, Palmöl-Polyglyceryl-6-Ester, Polyglyceryl-6-Bienenwachs, Polyglyceryl-6-Soja/Sheabutterat, Sonnenblumenkernöl Polyglyceryl-6-Ester, Polyglyceryl-6-Dilaurat, Polyglyceryl-6-Distearat, Polyglyceryl-6-Tristearat, Polyglyceryl-6-Dioleat, Polyglyceryl-6-Tetraoleat, Polyglyceryl-6-Triisostearat, Polyglyceryl-6-Penstastearat, Polyglyceryl-6-Trioleat, Polyglyceryl-6 Dicaprylat,
Polyglyceryl-6-Dikaprat, Polyglyceryl-6-Tricaprylat, Polyglyceryl-10 Kapat, Polyglyceryl-10 Laurat, Polyglyceryl-10 Myristat, Polyglyceryl-10 Palmitat, Polyglyceryl-10 Isostearat, Polyglyceryl-10 Olat, Polyglyceryl-10 Stearat, Polyglyceryl-10 Ricinoleat, Polyglyceryl-10 Behenat, Palmöl Polyglyceryl-10 Ester, Polyglyceryl-10 Bienenwachs, Polyglyceryl-10 Soja/Sheabutterat, Sonnenblumenkernöl Polyglyceryl-10 Ester, Polyglyceryl-10 Dilaurat, Polyglyceryl-10 Distearat, Polyglyceryl-10 Tristearat, Polyglyceryl-10 Dioleat, Polyglyceryl-10 Tetraoleat, Polyglyceryl-10-Triisostearat, Polyglyceryl-10-Pentastearat, Polyglyceryl-10-Trioleat, Polyglyceryl-10-Dicaprylat,
Polyglyceryl-10-Dikaprat, Polyglyceryl-10 Tricaprylat, Polyglyceryl-10 Trilaurat, Polyglyceryl-10 Tetralaurat, Polyglyceryl-10 Pentahydroxystearat, Polyglyceryl-20 Hexacaprylat, Polyglyceryl-20 Heptacaprylat, Polyglycervl-20 Octaisononanoat, Polyglycervl-20 Dokosabehenat/Isostearat, Polyglyceryl-20 Dokosabehenate/Laurate, Polyglyceryl-20 Dokosabehenat/Olat und Polyglyceryl-20 Heptadecabehenat/Laurat.

5. Das ultraviolett-strahlungsabsorbierende Polymer (E) oder ein Salz davon entsprechend einem der
vorangegangenen Ansprüchen, bei denen das Mol-Verhältnis der Verbindung der Formel (A) zur Verbindung der Formel (C) im Bereich von ≥ 1,0: 10 bis ≤ 20:1,0 liegt.

6. Das ultraviolett-strahlungsabsorbierende Polymer (E) oder ein Salz davon gemäß einer der Behauptungen
1 bis 5, wobei das ultraviolett-strahlungsabsorbierende Polymer ein durchschnittliches Molekulargewicht im Bereich von ≥ 500 bis 25.000 g/mol hat, wie gemäß GPC bestimmt.

7. Das ultraviolett-strahlungsabsorbierende Polymer (E) oder ein Salz davon gemäß einer der Behauptungen
1 bis 5, wobei das ultraviolett-strahlungsabsorbierende Polymer ein durchschnittliches Molekulargewicht im Bereich von ≥ 500 bis 10.000 g/mol besitzt, wie laut GPC bestimmt.

8. Das ultraviolettstrahlungsabsorbierende Polymer (E) oder ein Salz davon gemäß einem der Ansprüche 1 bis
7, wobei das ultraviolett-strahlungsabsorbierende Polymer eine UV-Absorption in Dichloromethan von 20 mg/L bei 320 nm ≥ 0,3 aufweist.

9. Eine Methode zur Herstellung eines ultraviolett-strahlungsabsorbierenden Polymers (E) gemäß einer beliebigen von
die vorangegangenen Ansprüche, wobei der Prozess aus den folgenden Schritten besteht:
i) indem mindestens eine Verbindung der Formel (A) und mindestens eine Verbindung von Formel (C) und/oder mindestens eine modifizierte Verbindung von Formel (C) gemischt wird, um eine Mischung zu erhalten;
ii) das im Schritt I gewonnene Gemisch auf eine gewünschte Temperatur erhitzt, um ultraviolette strahlungsabsorbierende Polymere (E) zu erhalten;und
iii) wobei das ultraviolett-strahlungsabsorbierende Polymer (E), das im Schritt ii gewonnen wurde, isoliert wird).

10. Die Methode gemäß Anspruch 9, bei der Schritt ii) wird bei einer Temperatur im Bereich von ≥ 100 bis ≤ 300 °C durchgeführt.

11. Verwendung des Polymers gemäß einem oder mehreren Steinmännchen 1 bis 8 oder dem erhaltenen Polymer entsprechend zur Methode von gemäß 9 oder 10 und das Salz davon als UV-absorgendes Polymer in einer Beschichtungszusammensetzung.

12. Eine Beschichtungszusammensetzung, die mindestens ein ultraviolettstrahlungsabsorbierendes Polymer enthält gemäß einem der Ansprüche 1 bis 8 oder dem gemäß einem der Ansprüche 9 oder 10 gewonnenen Polymer oder deren Salz

13. Eine Beschichtungszusammensetzung umfasst:
a. mindestens eine Beschichtung von Harz; und
b. mindestens ein ultraviolett-strahlungsabsorbierendes Polymer (E) gemäß den Ansprüchen 1 bis 8 oder mindestens ein ultraviolett-strahlungsabsorbierendes Polymer (E), das gemäß einem der Ansprüche 9 oder 10 oder deren Salz gewonnen wurde.

14. Die Zusammensetzung gemäß einer der Behauptungen 12 oder 13 enthält außerdem mindestens einen gehinderten Amin-Lichtstabilisator (F).

15. Eine Methode zur Stabilisierung einer Beschichtungszusammensetzung auf einem Substrat hin zur durch ultraviolette Strahlung induzierten Abbau, bei der das Verfahren das Auftragen der Beschichtungszusammensetzung eines der Ansprüche 12 bis 14 auf ein Substrat umfasst.

## Revendications

1. Un polymère absorbant les rayonnements ultraviolets (E) ou un sel de celui-ci obtenu par :
i. réaction d'au moins un composé de formule (A) 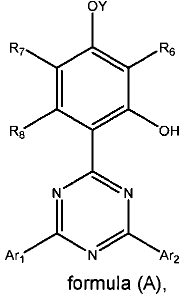
où Ar1 et Ar2 forment, indépendamment l'un de l'autre, une moitié de la formule (B), 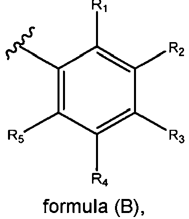
où R1, R2, R3, R4 et R5 sont indépendamment sélectionnés les uns des autres parmi le groupe composé d'hydrogène, d'halogène, d'alkyle C1-C24 substitué ou non substitué, linéaire ou ramifié de C1-C24, de C2C24 alkényl substitué ou non substitué, de cycloalkyle C5-C24 substitué ou non substitué, de C5-C24 cycloalkényl substitué ou non substitué, de C6 substitué ou non substitué-C24 aryle, substitué ou non substitué C1-C24 hétéroaryle, substitué ou non substitué C7C24 arylalkyle, C(=O)-R, substitué ou non substitué, linéaire ou ramifié C1-C24 hétéroalkyle, substitué ou non substitué, linéaire ou ramifié C2C24 hétéroalkénile, substitué ou non substitué C5-C24 hétérocycloalkyle, substitué ou non substitué C5-C24 hétérocycloalkényl, OR, NRR' et C(=O)-NRR' ; ou
R1 et R2 avec les atomes de carbone auxquels ils sont liés, ou R2 et
R3 avec les atomes de carbone auxquels ils sont liés, ou R3 et R4 avec les atomes de carbone auxquels ils sont liés, ou
R4 et R5, avec les atomes de carbone auxquels ils sont liés, forment un cycle carbocyclique insaturé ou aromatique de 5 à 20 membres qui contient éventuellement 1, 2 ou 3 hétéroatomes sélectionnés parmi O, N ou S comme membre(s) de l'anneau ;
R6, R7 et R8 sont sélectionnés indépendamment l'un de l'autre parmi le groupe composé d'hydrogène, d'halogène, d'alkyle C1-C24 linéaire ou ramifié, de C2C24 substitué ou non substitué, linéaire ou ramifié d'alkényle C2C24, de cycloalkyle C5-C24 substitué ou non substitué, de cycloalkyle C5-C24 substitué ou non substitué, de C(=O)-R, substitué ou non substitué, linéaire ou ramifié de C 1-C24 hétéroalkyle, substitué ou non substitué, linéaire ou ramifié C2C24
hétéroalkenyl, substitué ou non substitué par l'hétrocycloalkyle de C 5-C24, substitué ou non substitué par l'hétérocycloalkyl et OR de C 5-C24, ou
R7 et R8, avec les atomes de carbone auxquels ils sont liés, forment un cycle carbocyclique insaturé ou aromatique de 5 à 20 membres qui contient éventuellement 1, 2 ou 3 hétéroatomes sélectionnés parmi 0, membres de l'anneau Nor Sas ;
R et R' sont indépendamment sélectionnés l'un de l'autre parmi le groupe composé d'hydrogène, d'alkyle C1-C24 substitué ou non substitué, linéaire ou ramifié de C1-C24 alkyl, linéaire ou ramifié de C2C24 alkényl, de cycloalkyle C5-C24 substitué ou non substitué, de cycloalkényle C5-C24 substitué ou non substitué, de C 6-C24 aryl substitué ou non substitué et de C7C24 d'arylalkyle substitué ou non substitué ;
Y est une formule -CR11R12R13 ; avec une condition selon laquelle au moins un des R11, R12 et R13 contient au moins un groupe fonctionnel sélectionné parmi le groupe composé de -C(=O)OR », -C(=O)CI, - C(=O)NH2 et -C(=O)NHR » ;
où R11 et R12 sont indépendamment sélectionnés l'un de l'autre parmi le groupe constitué d'hydrogène, substitué ou non substitué, linéaire ou ramifié C1-C24 alkyl, C2C24 alkényl linéaire ou ramifié, C5-C24 cycloalkyl substitué ou non substitué, C5-C24 cycloalkyl substitué ou non substitué, C6 substitué ou non substitué-C24 aryloxy, C7C24 arylalkyle substitué ou non substitué, C1-C24 alkyloxy, C2C24 alkyloxy substitué ou non substitué, C2C24 alkényloxy linéaire ou ramifié, C 5-C24 cycloalkyloxy substitué ou non substitué, C 6-C24 cycloalkyloxy substitué ou non remplacé, C 6-C24 arylalkyloxy substitué ou non substitué ;
R13 est sélectionné parmi le groupe composé d'alkyle C1-C24 substitué ou non substitué, linéaire ou ramifié, alkyl C2C24 substitué ou non remplacé, alkyl C2C24 linéaire ou ramifié, cycloalkyle C5-C24 substitué ou non substitué, C5-C24 cycloalkényl substitué ou non substitué, arylalkyle C7C24 substitué ou non substitué, alkyloxy C1-C24 substitué, alkyloxy C2C24 substitué ou non substitué, linéaire ou ramifié, substitué ou non substitué à la cycloalkyloxye de C 5-C24, substitué ou non substitué à la cycloalkyloxye de C 5-C24, à substitution ou non substituée à l'aryloxie de C 6-C24 et à substitution ou non substituée à l'arylalkyloxy de C7C24 ;
dans lequel « R » est sélectionné parmi le groupe constitué d'hydrogène, d'alkyle C1-C24 substitué ou non substitué, linéaire ou ramifié, d'alkényle C2C24 substitué ou non remplacé, de cycloalkyle C5-C24 substitué ou non substitué, de cycloalkényl C5-C24 substitué ou non substitué, de l'aryl C 6-C24 substitué ou non substitué et de l'arylalkyle C5C24 substitué ou non substitué ; et
ii.au moins un composé de formule (C), 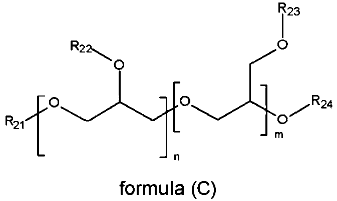
où m et n forment indépendamment un entier de 0 à 20 ; où m + n ≥ 2 ;
où R21, R22, R23 et R24 sont indépendamment sélectionnés l'un de l'autre parmi le groupe constitué d'hydrogène, substitué ou non substitué, linéaire ou ramifié d'alkyle C1-C24,
C2C24 alkényl substitué ou non substitué, linéaire ou ramifié, cycloalkyle C5-C24 substitué ou non substitué, cycloalkényl C5-C24 substitué ou non substitué, aryl C6-C24 substitué ou non substitué, arylalkyle C7C24 substitué ou non substitué, -[(C=O)-(CH2)t-NH]j-R25, -[(C=O)-(CH-2)t-O]j-R25 et -(C=O)R26 ;
où R25 est sélectionné parmi le groupe constitué d'hydrogène, d'alkyle C1-C24 substitué ou non remplacé, linéaire ou ramifié, alkénile C2C24 substitué ou non remplacé, cycloalkyle C5-C24 substitué ou non substitué, cycloalkyle C5-C24 substitué ou non substitué, aryle C6-C24 substitué ou non substitué et arylalkyle C2C24 substitué ou non substitué ; « t » est un entier allant de 4 à 11 et « j » est un entier allant de 1 à 100 ;
R26 est sélectionné parmi le groupe composé d'alkyle C1-C24 substitué ou non substitué, linéaire ou ramifié, alkyle C2C24 substitué ou non remplacé, linéaire ou ramifié de C2C24 cycloalkyl, C5-C24 cycloalkyl substitué ou non substitué, C5-C24 aryl substitué ou non substitué, C6-C24 arylkyle substitué ou non substitué ;
à condition qu'au moins un des R21, R22, R23 ou R24 soit de l'hydrogène,
ou si aucun des R21,R 22, R23 et R24 n'est de l'hydrogène, au moins un des R21, R22, R23 ou R24 est sélectionné parmi le groupe constitué d'alkyle C1-C24 substitué, linéaire ou ramifié où au moins un substituant est -OH ou -NH2, substitué par alkényle C2C24 où au moins un substituant est -OH ou -NH2, substitué par C5-C24 cycloalkyle où au moins un substituant est - OH ou -NH2, substitué par C5-C24 cycloalkényl où au moins un substituant est -OH ou -NH2, substitué par C6-C24 aryle où au moins un substituant est -OH ou -NH2, substitué par C2C24 par arylalkyle où au moins un substitut est -OH ou -NH2, -[(C=O)-(CH2)t-NH]j-R27, -[(C=O)-(CH2)j-O]j-R27 et -(C=O)R28, où R27 est sélectionné dans le groupe constitué d'hydrogène, substitué par alkyle linéaire ou ramifié C1-C24, substitué par alkénile linéaire ou ramifié C2C24, substitué par C5-C24 cycloalkyle, substitué par C5-C24 par cycloalkényl, substitué par C6-C24 par arylalkyle tandis qu'au moins un substituant dans ces moitiés est -OH ou -NH2, « t » est un entier dans l'intervalle de 4 à 11 et « j » est un entier dans l'intervalle de 1 à 100 ;
R28 est sélectionné parmi le groupe composé d'alkyle linéaire ou ramifié de C1-C24 substitué, d'alkényle linéaire ou ramifié de C2C24 substitut, de cycloalkyle substitué C5-C24, de cycloalkényle substitué C5-C24, de substitué par C6-C24 aryl remplacé par C2C24 tandis qu'au moins un substituant dans ces moitiés est -OH ou -NH2 ; et/ou iii) au moins un composé modifié de formule (C) obtenu en réagissant au moins un composé de formule (C) avec au moins un polyester alkyl,
où le polymère absorbant les rayons ultraviolets (E) ayant un nombre hydroxylé dans la plage de ≥ 10 à ≤ 1000 mg KOH/g.

2. Le polymère absorbant les rayonnements ultraviolets (E) ou un sel de celui-ci selon la revendication 1, où R1, R2, R3, R4 et R5 sont sélectionnés indépendamment les uns des autres parmi le groupe composé d'hydrogène, substitué ou non substitué, linéaire ou ramifié C1-C24 alkyl, C5-C24 cycloalkyle substitué ou non substitué, C6-C24 aryle substitué ou non substitué, C1-C24 hétéroaryle substitué ou non substitué, substitué ou non substitué par C7C24 par un arylalkyl, C(=O)-R, substitué ou non remplacé, linéaire ou ramifié par C1-C24 hétéroalkyle et OR ;
où R est défini comme dans l'affirmation 1.

3. Le polymère absorbant les rayons ultraviolets (E) ou un sel de celui-ci selon les revendications 1 à 2, où le composé de formule (A) est sélectionné parmi le groupe composé de

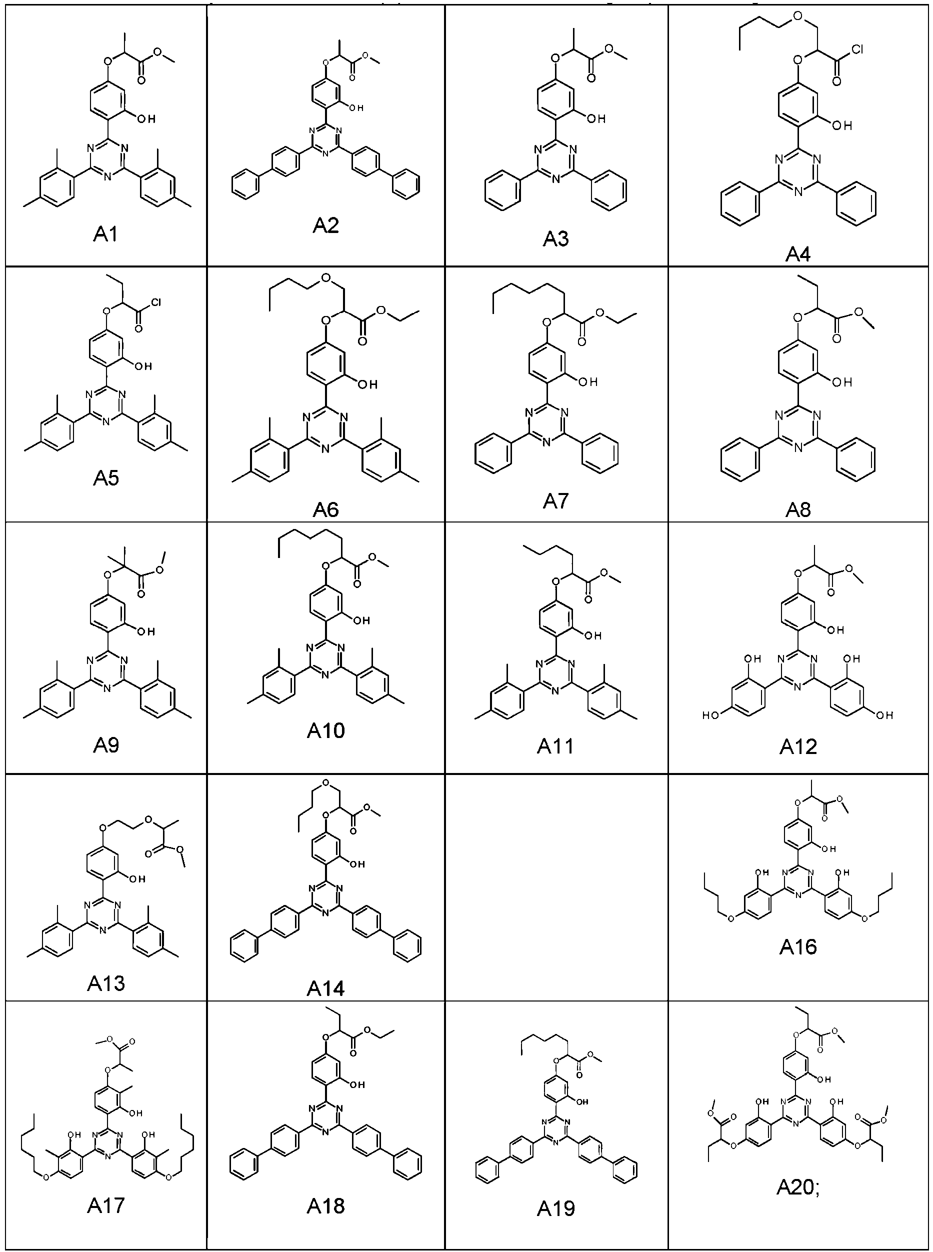

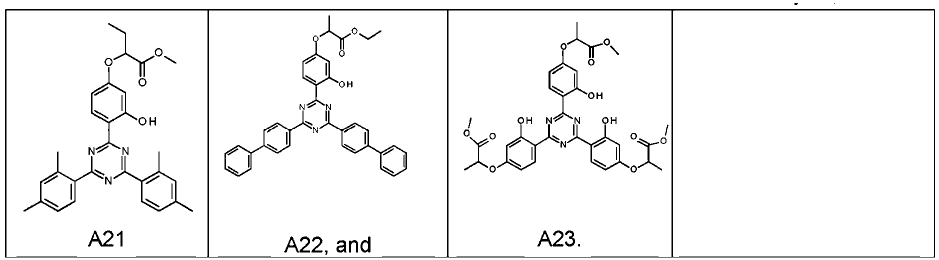

4. Le polymère absorbant les rayons ultraviolets (E) ou un sel de celui-ci selon la revendication 1, dans lequel
le composé de formule (C) est sélectionné parmi le groupe composé de polyglycérol-3, polyglycérol-4, polyglycérol-6, polyglycérol-10, polyglycéryl-10 stéarate, polyglycéryl-10 oléate, polyglycéryl-10 laurate, polyglycéryl-10 dioléate, polyglycéryl-10 distéarate, polyglycéryl-10 diisostéarate, polyglycéryl-10 dipalmité, polyglycéryl-2 caprate, polyglycéryl-2 caprylate,
polyglycéryl-2 laure, polyglycéryl-2 myristate, polyglycéryl-2 isopalmité, Palmitate de polyglycéryl-2, isostéarate de polyglycéryl-2, stéarate de polyglycéryl-2, isopalmité/sébacate de polyglycéryl-2, condensé de polyglycéryl-3, myristate de polyglycéryl-3, palmitate de polyglycéryl-3, isostéarate de polyglycéryl-3, oléate de polyglycéryl-3, stéarate de polyglycéryl-3, ricinoléate de polyglycéryl-3, behénate de polyglycéryl-3, esters polyglyceryl-3 de polyglycéryl-3, cire d'abeille polyglyceryl-3, polyglyceryl-3 soja/beurre de karité, huile de graines de tournesol Esters de polyglycéryl-3, diisostéarate de polyglycéryl-3, triostéarate de polyglycéryl-3, caprate de polyglycéryl-4, laurate de polyglycéryl-4, myristate de polyglycéryl-4, palmitate de polyglycéryl-4, polyglycéryl-4 Isostéarate, polyglycéryl-4 oléate, polyglycéryl-4 stéarate, polyglycéryl-4 ricinoléate, polyglycéryl-4 béhenate, polyglycéryl-4 esters, polyglycéryl-4 cire d'abeille, polyglycéryl-4 soja/beurre de karité, huile de tournesol-tournesol-polyglycéryl-4 dilaurate, polyglycéryl-4 distéarate, polyglycéryl-4 tristearate, polyglycéryl-6 caprate, polyglycéryl-6 laurate, polyglycéryl-6 myristate, polyglycéryl-6 palmité, polyglycéryl-6 palmité, polyglycéryl-6 isostéarate, polyglycéryl-6 oléate, polyglycéryl-6 stéarate, polyglycéryl-6 ricinoléate, polyglycéryl-6 béhenate, polyglycéryl-6 esters, polyglyceryl-6 cire d'abeille, polyglycéryl-6 soja/beurre de karité, huile de tournesol-tournesol-6 polyglycéryl-6, polyglycéryl-6 dilaurate, polyglycéryl-6 distearate, polyglyceryl-6 tristearate, polyglyceryl-6 dioleate, polyglyceryl-6 tétraoléate, polyglyceryl-6 triisostéarate, polyglyceryl-6 pentasterarate, polyglyceryl-6 trioleate, polyglyceryl-6 dicaprylate,
polyglycéryl-6 dicaprate, polyglycéryl-6 tricaprylate, polyglycéryl-10 caprate, polyglycéryl-10 laurate, polyglycéryl-10 myristate, polyglycéryl-10 palmité, polyglycéryl-10 isostéarate, polyglycéryl-10 oléate, polyglycéryl-10 stéarate, polyglycéryl-10 ricinoléate, polyglycéryl-10 behénate, polyglycéryl-10 esters, polyglycéryl-10 cire d'abeille, polyglycéryl-10 soja/beurre de karité, polyglycéryl-10 polyglycéryl-10 esters, polyglycéryl-10 dilaurate, polyglyceryl-10 distearate, polyglyceryl-10 tristearate, polyglyceryl-10 dioleate, polyglyceryl-10 dioleate, polyglyceryl-10 tétraoléate, polyglycéryl-10 triisostéarate, polyglycéryl-10 pentastarate, polyglycéryl-10 trioléate, polyglycéryl-10 dicaprylate,
polyglycéryl-10 dicaprate, polyglycéryl-10 tricaprylate, Polyglycéryl-10 À la trilure, Polyglycéryl-10 tétralaurate, polyglycéryl-10 pentahydroxystéarate, polyglycéryl-20 hexacaprylate, polyglycéryl-20 heptacaprylate, polyglycéryl-vl-20 octaisononanoate, Polyglycervl-20 Docosabahénate/isostéaraté, Polyglyceryl-20 Docosabehenate/Laurate, Polyglyceryl-20 docosabéhenate/oléate et polyglycéryl-20 heptaccabéhénate/laurate.

5. Le polymère absorbant les rayons ultraviolets (E) ou un sel de celui-ci selon l'un des revendications précédentes, dans lesquelles le rapport mol du composé de la formule (A) au composé de la formule (C) est de l'ordre de ≥ 1,0 : 10 à ≤ 20 : 1,0.

6. Le polymère absorbant les rayons ultraviolets (E) ou un sel de celui-ci selon l'une des affirmations
1 à 5, où le polymère absorbant les rayons ultraviolets a une masse moléculaire moyenne en poids comprise entre ≥ 500 et 25 000 g/mol, selon la GPC.

7. Le polymère absorbant les rayons ultraviolets (E) ou un sel de celui-ci selon l'une des affirmations
1 à 5, où le polymère absorbant les rayons ultraviolets a une masse moléculaire moyenne nombreuse de ≥ 500 à 10 000 g/mol, selon la GPC.

8. Le polymère absorbant le rayonnement ultraviolet (E) ou un sel de celui-ci selon l'une des revendications 1 à
7, où le polymère absorbant les rayons ultraviolets a une absorbance UV dans le dichlorométhane à 20 mg/L à 320 nm ≥ 0,3.

9. Une méthode pour préparer un polymère absorbant les rayons ultraviolets (E) selon l'un des suivants
les revendications précédentes, dans lesquelles le processus comprend les étapes suivantes :
i) mélanger au moins un composé de formule (A) et au moins un composé de formule (C) et/ou au moins un composé modifié de formule (C) pour obtenir un mélange ;
ii) le chauffage du mélange obtenu à l'étape i à la température désirée pour obtenir le polymère absorbant les rayons ultraviolets (E) ; et
iii) isolant le polymère absorbant les rayons ultraviolets (E) obtenu à l'étape ii).

10. La méthode, selon la revendication 9, où l'étape ii) est réalisée à une température comprise entre ≥ 100 et ≤ 300 °C.

11. Utilisation du polymère selon un ou plusieurs cairns de 1 à 8 ou le polymère obtenu selon à la méthode de selon 9 ou 10 et le sel de celui-ci sous forme de polymère absorbant les UV dans une composition de revêtement.

12. Une composition de revêtement comprenant au moins un polymère absorbant les rayons ultraviolets
selon n'importe laquelle des revendications 1 à 8 ou le polymère obtenu selon l'une des revendications 9 ou 10 ou le sel de celles-ci

13. Une composition de revêtement comprenant :
a. au moins une résine de revêtement ; et
b. au moins un polymère absorbant les rayons ultraviolets (E) selon les revendications 1 à 8 ou au moins un polymère absorbant les rayons ultraviolets (E) obtenu selon l'une des revendications 9 ou 10 ou le sel de celui-ci

14. La composition selon l'une des affirmations 12 ou 13 comprend en outre au moins un stabilisateur lumineux (F) d'amine entravée.

15. Une méthode de stabilisation d'une composition de revêtement sur un substrat face à une dégradation induite par les rayons ultraviolets, dans laquelle la méthode consiste à appliquer la composition du revêtement de l'une des revendications 12 à 14 sur un substrat.
